# EUROPEAN PATENT APPLICATION

(11) **EP 4 744 792 A1**
(43) Date of publication of application: **20.05.2026**
(21) Application number: 25835926.4
(22) Date of filing: 06.06.2025
(51) Int. Cl.: B08B 3/02, B08B 11/00, B08B 3/10, B08B 13/00, D06G 1/00, B60S 3/00, A47L 5/24, A47L 11/34

(54) **CLEANING DEVICE AND CLEANING CONTROL METHOD**

(30) Priority: 11.07.2024 CN 202410934103; 28.02.2025 CN 202520351209 U; 28.02.2025 CN 202510235989; 28.02.2025 CN 202520343366 U; 28.02.2025 CN 202520343387 U; 28.04.2025 CN 202520828317 U
(71) Applicant: Freshape SA, 1020 Renens (CH)
(72) Inventor: JIANG, Jianlong, 1020 Renens VD (CH); LI, Yang, 1020 Renens VD (CH); WANG, Lizhi, 1020 Renens VD (CH); PORTILLA, Luis, 1020 Renens VD (CH); LU, Yongfu, 1020 Renens VD (CH); ZHANG, Jianfu, 1020 Renens VD (CH); CHEN, Yinglei, 1020 Renens VD (CH)
(74) Representative: Noble, Nicholas
(86) International application number: PCT/CN2025/099523
(87) International publication number: WO 2026/012023

(57) **Abstract**

The present application relates to a cleaning device and a cleaning control method. The cleaning device includes a cleaning unit (1), a liquid spraying unit (21), a sewage collection unit (4), and a control unit (5). The cleaning unit (1) has a spray port (11) and a suction port (12). The liquid spraying unit (21) is connected to the spray port (11) and configured to spray cleaning fluid to a surface to be cleaned. The sewage collection unit (4) is connected to the suction port (12) and configured to suction dirt or sewage generated during cleaning. Both the liquid spraying unit (21) and the sewage collection unit (4) are connected to the control unit (5), and the control unit (5) is configured to control start and stop of the liquid spraying unit (21) and the sewage collection unit (4).

## Description

### CROSS-REFERENCE TO RELATED APPLICATIONS

The present application claims the benefits of priority to Chinese Patent Application No. 202410934103.9, filed on July 11, 2024, entitled "Steam Cleaner"; Chinese Patent Application No. 202520351209.6, filed on February 28, 2025, entitled "Cleaning Head and Cleaning Device"; Chinese Patent Application No. 202520343387.4, filed on February 28, 2025, entitled "Cleaning Head and Cleaning Device"; Chinese Patent Application No. 202510235989.2, filed on February 28, 2025, entitled "Cleaning Control Method, Cleaning Control Handle, Cleaning Device, and Cleaning System"; Chinese Patent Application No. 202520343366.2, filed on February 28, 2025, entitled "Cleaning Device"; and Chinese Patent Application No. 202520828317.8, filed on April 28, 2025, entitled "Cleaning Device". The entire contents of these applications are incorporated herein by reference in their entireties.

### TECHNICAL FIELD

The present application generally relates to the field of cleaning technology, and particularly, to a cleaning device and a cleaning control method.

### BACKGROUND

In related technologies, some cleaning devices may not be able to simultaneously perform the functions of spraying cleaning fluid and suctioning dirt or sewage, resulting in a low work efficiency.

### SUMMARY

According to various embodiments of the present application, a cleaning device and a cleaning control method are provided.

A cleaning device is provided, including a cleaning unit, a liquid spraying unit, a sewage collection unit, and a control unit. The cleaning unit has a spray port and a suction port. The liquid spraying unit is connected to the spray port and configured to spray cleaning fluid to a surface to be cleaned. The sewage collection unit is connected to the suction port and configured to suction dirt or sewage generated during cleaning. Both the liquid spraying unit and the sewage collection unit are connected to the control unit, and the control unit is configured to control start and stop of the liquid spraying unit and the sewage collection unit.

In an embodiment, the cleaning device is a steam cleaner. The cleaning unit includes a cleaning head provided with the spray port and the suction port. The steam cleaner includes a steam generation unit connected to the control unit. The steam generation unit includes an electric heater and the liquid spraying unit connected to each other. The electric heater is configured to heat the cleaning fluid to provide steam for the liquid spraying unit. The control unit is configured to control start and stop of the steam generation unit.

In an embodiment, the cleaning device further includes an auxiliary heating unit connected to the control unit, and the control unit can control start and stop of the auxiliary heating unit.

In an embodiment, the auxiliary heating unit is configured to provide steam, hot water, or hot air for at least one of the liquid spraying unit or the spray port, or the auxiliary heating unit is configured to heat the cleaning fluid.

In an embodiment, the auxiliary heating unit includes an auxiliary heater, and the auxiliary heater is connected in parallel or in series with the electric heater.

Or, the auxiliary heating unit includes a heat exchanger, and a water storage tank, a first water pump, and an auxiliary heater connected in sequence, a liquid outlet of the auxiliary heater is connected to a heat medium inlet of the heat exchanger, a heat medium outlet of the heat exchanger is connected to a liquid inlet of the water storage tank, and the heat exchanger is connected in parallel or in series with the electric heater.

In an embodiment, a heat source of the auxiliary heating unit is a clean heat source, and the clean heat source includes solar energy or waste heat source.

In an embodiment, the cleaning device further includes a handle and a steam generation unit. The cleaning head is connected to the steam generation unit and the sewage collection unit through the handle.

In an embodiment, the handle has a first set of sensing contacts, the cleaning head has a second set of sensing contacts, and the first set of sensing contacts are connected to the control unit. When the cleaning head is connected to the handle, the second set of sensing contacts can be connected to the first set of sensing contacts, so that the first set of sensing contacts sends an electrical signal to the control unit. The control unit is configured to identify type information of the cleaning head according to the electrical signal, and adjust a working mode of the cleaning device according to the type information, so that the steam generation unit and the sewage collection unit are in a working state corresponding to the working mode.

In an embodiment, the cleaning device further includes a self-cleaning unit, and the cleaning unit includes a cleaning head. The self-cleaning unit is connected to the control unit, the self-cleaning unit is configured to clean the cleaning head, and the control unit is configured to control start and stop of the self-cleaning unit. The cleaning device includes a steam cleaner.

In an embodiment, the self-cleaning unit includes a self-cleaning box and a sensing switch. The sensing switch is provided on the self-cleaning box, and the sensing switch is connected to the control unit. The cleaning head can be inserted into the self-cleaning box to trigger the sensing switch. The control unit is configured to control start and stop of the liquid spraying unit according to the state of the sensing switch.

In an embodiment, the control unit includes a controller and a control component connected to each other. The control component is configured to adjust the working mode of the cleaning device, and the working mode of the cleaning device includes a cleaning mode and a drying mode. In the cleaning mode, the liquid spraying unit and the sewage collection unit work, and in the drying mode, the liquid spraying unit does not work.

In an embodiment, the control component includes a first control member and a second control member. The first control member is configured to control the cleaning device to enter or exit the cleaning mode, and the second control member is configured to control the cleaning device to enter or exit the drying mode.

In an embodiment, the cleaning device includes a main unit, and the liquid spraying unit (also referred to as a cleaning fluid supply unit) and the sewage collection unit are provided in the main unit. The main unit is provided with a self-cleaning unit.

The cleaning unit is provided therein with a first cleaning channel and a first dirt channel spaced apart. The first cleaning channel is connected to the liquid spraying unit to spray cleaning fluid through a spray port of the first cleaning channel. The first dirt channel is connected to the sewage collection unit to suck dirt or sewage through a suction port of the first dirt channel.

In a first state, the cleaning unit is detachably connected to the self-cleaning unit, and both the spray port of the first cleaning channel and the suction port of the first dirt channel are located in the self-cleaning unit, so that the cleaning device can enter a self-cleaning mode.

In an embodiment, the cleaning device further includes a storage tube configured to accommodate at least one of the first cleaning channel, the first dirt channel, or a control wiring harness of the cleaning device.

In an embodiment, the cleaning unit includes a handle and at least one cleaning head detachably connected to the handle. The cleaning head is provided with the spray port and the suction port spaced apart.

In an embodiment, one of the handle and the self-cleaning unit is provided with a first collection portion, and the other is provided with a first marking portion. In response to the connection between the handle and the self-cleaning unit, the first collection portion can identify the first marking portion, and the cleaning device enters a self-cleaning mode or a standby self-cleaning mode.

In an embodiment, the handle is provided with a first collection portion, and the cleaning head is provided with a second marking portion. In response to the connection between the handle and the cleaning head, the first collection portion can identify the second marking portion, and the cleaning device enters a cleaning mode matching the cleaning head.

In an embodiment, the cleaning head is provided with a plurality of suction ports, and the plurality of suction ports are circumferentially arranged around an outer side of the spray port.

Or, the cleaning head is provided with a plurality of spray ports, and the plurality of spray ports are circumferentially arranged around an outer side of the suction port.

In an embodiment, the cleaning unit includes a cleaning head, and the cleaning head includes a housing and a cleaning assembly. The cleaning assembly is configured to clean an object to be cleaned. The spray port and the suction port are provided in the housing, and at least part of the cleaning assembly is accommodated in the suction port.

In an embodiment, the cleaning unit includes a cleaning head, and the cleaning head includes a housing and a cleaning assembly. The spray port and the suction port are provided in the housing, and at least part of the cleaning assembly is covered by the cleaning fluid sprayed from the spray port.

In an embodiment, the cleaning assembly includes a positioning portion and a cleaning portion.

At least part of the positioning portion and the cleaning portion is accommodated in the suction port. Or, at least part of the positioning portion forms the suction port, and at least part of the cleaning portion is accommodated in the suction port.

In an embodiment, one of the positioning portion and the cleaning portion is provided with a fixing groove, the other is provided with a mounting rib, and the fixing groove is clamped with the mounting rib.

In an embodiment, the cleaning unit includes a cleaning head. The cleaning head includes a spray head body provided with a first matching portion and a first toggle portion, a dust cover provided with a second matching portion, and a handle provided with a first clamping portion. When the first toggle portion is in a locked position, the first toggle portion is connected to the second matching portion, and the first clamping portion can be sequentially connected to the first matching portion and the second matching portion to connect the spray head body and the dust cover to the handle. The first toggle portion is configured to be operably toggled to move from the locked position to a first unlocked position. The first toggle portion in the first unlocked position can press the first clamping portion to disconnect the first clamping portion from the second matching portion, while the first clamping portion remains connected to the first matching portion.

In an embodiment, the spray head body has an opening, and an edge of an outer peripheral surface of the spray head body close to the opening is configured with an air inlet.

In an embodiment, the spray head body has an opening, and brush bristles provided at the opening pass through the opening in a direction away from the handle. A protruding length of the brush bristles is 1mm-3mm.

A cleaning control method for the cleaning device as described above is provided. The cleaning unit includes a handle and one or more cleaning heads, and the control unit is detachably connected to any of the cleaning heads through the handle. The method includes:
in response to a connection with any of the cleaning heads, acquiring type information of the connected cleaning head;
in response to a cleaning mode selection instruction, determining a target mode; and
determining cleaning parameters according to the type information of the cleaning head and the target mode, and performing a cleaning operation.

In an embodiment, each of the cleaning heads has a corresponding type identifier.

Acquiring the type information of the connected cleaning head in response to the connection with any of the cleaning heads includes:
in response to the connection with any of the cleaning heads, acquiring the type identifier of the connected cleaning head; and
determining the type information corresponding to the type identifier based on pre-stored configuration information, where the configuration information includes a mapping relationship between the type identifier and the type information of the cleaning head.

In an embodiment, each of the cleaning heads has a corresponding type identifier, and the type identifier is set with type information and cleaning parameters corresponding to different modes.

The method further includes:
in response to the connection with any of the cleaning heads, establishing a communicative connection with the cleaning head, and acquiring type information in the type identifier of the connected cleaning head and cleaning parameters corresponding to different modes; and
in response to a cleaning mode selection instruction, determining a target mode and corresponding cleaning parameters, and performing a cleaning operation.

The communicative connection mode includes at least one of a radio frequency communication, an optical identification communication, or a serial communication.

A control method for the cleaning device as described above is provided. The cleaning device includes a steam generation unit connected to the control unit, and the steam generation unit includes a liquid spraying unit and a heater. The control method for the cleaning device includes:
in response to an identified cleaning scenario, acquiring a target flow rate and a target power corresponding to the cleaning scenario; and
injecting cleaning fluid into the heater of the steam generation unit according to the target flow rate, controlling the heater to heat the injected cleaning fluid with the target power, and outputting cleaning steam for the target cleaning scenario through the liquid spraying unit of the steam generation unit.

In an embodiment, the method further includes:
responding to an identification instruction for an object to be cleaned and identifying a category of the object to be cleaned, and determining a corresponding cleaning scenario according to the category of the object to be cleaned; or,
responding to an identification instruction for an object to be cleaned that carries a category of the object to be cleaned, and determining a corresponding cleaning scenario according to the category of the object to be cleaned.

In an embodiment, the cleaning unit includes at least one cleaning head, and each cleaning head has a corresponding cleaning scenario identifier or type identifier. The method further includes:
in response to the connection with any of the cleaning heads, acquiring the cleaning scenario identifier or type identifier of the connected cleaning head; and
determining a corresponding cleaning scenario according to the cleaning scenario identifier or type identifier of the connected cleaning head.

In an embodiment, the cleaning scenario identifier or type identifier is set with a corresponding flow rate and power. Acquiring the target flow rate and target power corresponding to the cleaning scenario includes:
acquiring the flow rate and power in the cleaning scenario identifier or type identifier of the connected cleaning head as the target flow rate and target power corresponding to the cleaning scenario.

In an embodiment, acquiring the target flow rate and target power corresponding to the cleaning scenario includes:
determining the target flow rate and target power corresponding to the cleaning scenario based on pre-stored configuration information, where the configuration information includes a mapping relationship between at least one cleaning scenario and the flow rate and power.

An embodiment of the present application provides a steam cleaner, including a cleaning head, a control unit, and a steam generation unit, an auxiliary heating unit, and a sewage collection unit respectively connected to the control unit.

The cleaning head has a spray port and a suction port. The steam generation unit includes a liquid spraying unit and an electric heater connected to each other. The auxiliary heating unit and the electric heater are configured to heat the cleaning fluid to provide steam for the liquid spraying unit. The heat source of the auxiliary heating unit is a clean heat source. The liquid spraying unit is connected to the spray port and configured to spray steam to a surface to be cleaned. The sewage collection unit is connected to the suction port and configured to suction dirt or sewage generated during cleaning.

The control unit is configured to control start and stop of the steam generation unit, the auxiliary heating unit, and the sewage collection unit.

In an embodiment, the steam generation unit further includes a temperature sensor.

The temperature sensor is connected to the control unit, and configured to measure temperature information of the steam sprayed by the liquid spraying unit, and transmit the measured temperature information to the control unit. The control unit is configured to control the heating power of the electric heater and/or the auxiliary heating unit according to the type information and the temperature information to control the temperature of the steam sprayed by the liquid spraying unit.

In one of the embodiments, the cleaning unit includes a handle, and the first cleaning channel and the first dirt channel are spaced apart in the handle. The first cleaning channel is connected to the cleaning fluid supply unit to spray cleaning fluid through an outlet of the first cleaning channel. The first dirt channel is connected to the sewage collection unit to suck dirt through an inlet of the first dirt channel.

The self-cleaning unit is a first slot configured in the main unit. In a first state, the handle is detachably connected to the first slot, and both the outlet of the first cleaning channel and the inlet of the first dirt channel are located in the first slot, so that the cleaning device can enter a self-cleaning mode.

In one of the embodiments, there is a first gap between an outer peripheral surface of the handle and a side wall of the first slot. The first gap is greater than or equal to 0.2 millimeters.

In one of the embodiments, one of the handle and the first slot is provided with a first marking portion, and the other is provided with a first collection portion.

In response to the connection between the handle and the first slot, the first collection portion can identify the first marking portion, and the cleaning device enters a self-cleaning mode or a standby self-cleaning mode.

In one of the embodiments, one of the first marking portion and the first collection portion is configured as a mating male connector, and the other is configured as a mating female connector for connecting with the mating male connector; or
the first marking portion includes a two-dimensional code, NFC, RFID, or Bluetooth, and the first collection portion includes a reader or a receiver.

In one of the embodiments, at least one of the main unit and the handle is provided with an operation member. In the first state, in response to a selection operation of the operation member, the cleaning device is in the self-cleaning mode.

In one of the embodiments, the main unit is provided with a fixing base, and the fixing base is configured with the first slot.

In one of the embodiments, the fixing base is configured with a stop plate extending in a gravity direction. There is a second gap between the stop plate and a side surface of the main unit in the horizontal direction, and the second gap forms a storage slot in which the storage tube can be stored.

In one of the embodiments, the cleaning device includes at least one cleaning head detachably connected to the handle. The cleaning head is provided with a spray port and a negative pressure port spaced apart. The spray port is in communication with an outlet of the first cleaning channel, and the negative pressure port is in communication with an inlet of the first dirt channel.

In an embodiment, the positioning portion includes a first positioning side plate. The first positioning side plate forms a first side surface of the negative pressure port.

In an embodiment, the positioning portion includes a second positioning side plate. The second positioning side plate forms a second side surface of the negative pressure port.

In an embodiment, the positioning portion includes a fixing member, and the cleaning portion includes a mounting end and a cleaning end. The fixing member is accommodated in the negative pressure port. The mounting end is detachably connected to the fixing member. The cleaning end is configured to clean an object to be cleaned. The positioning portion is fixedly connected to the housing or integrally formed with the housing. The positioning portion, such as a positioning side plate, a positioning clamp plate, a positioning groove, a positioning bump, a positioning hole, etc., is accommodated in the negative pressure port, and the mounting end of the cleaning portion is fixedly connected to the above positioning portion, thereby realizing that at least part of the cleaning assembly is accommodated in the negative pressure port.

In an embodiment, the cleaning head includes more than two cleaning assemblies, or the cleaning assembly includes more than two cleaning portions. The more than two cleaning assemblies are arranged side by side or at a preset angle, or the more than two cleaning portions are arranged side by side or at a preset angle. The side-by-side arrangement means that the center lines of the cleaning assemblies are respectively parallel to the center line of the negative pressure port, and the arrangement at a preset angle means that extended cross-sections where the center lines of the cleaning assemblies are located intersect each other.

In an embodiment, the cleaning assembly includes a first cleaning portion and a second cleaning portion. Part of the first cleaning portion is covered by the cleaning fluid sprayed from the spray port. The first cleaning portion and the second cleaning portion are respectively provided on both sides of the negative pressure port. The first cleaning assembly and the second cleaning assembly are oppositely provided on both sides of the negative pressure port, including: the first cleaning portion and the second cleaning portion are respectively provided on two inner side surfaces of the negative pressure port; or, the first cleaning portion and the second cleaning portion are respectively provided on two outer side surfaces of the negative pressure port; or, the first cleaning portion is provided on an inner side surface of the negative pressure port, and the second cleaning portion is provided on an outer side surface of the negative pressure port; or, the first cleaning portion is provided on an outer side surface of the negative pressure port, and the second cleaning portion is provided on an inner side surface of the negative pressure port.

In an embodiment, the positioning portion of the cleaning assembly is provided with a fixing groove and/or a fixing rib, and the mounting end of the cleaning portion of the cleaning assembly is provided with a mounting rib and/or a mounting groove. The fixing groove is clamped with the mounting rib, and the fixing rib is clamped with the mounting groove. The positioning portion can be a side plate of the negative pressure port, and the side plate is provided with a plurality of fixing grooves as fixing members. The side plate of the negative pressure port can be integrally formed with the housing.

In an embodiment, the rib height of the mounting rib is greater than the groove edge height of the fixing groove, or the rib height of the fixing rib is greater than the groove edge height of the mounting groove. When the cleaning assembly includes more than two cleaning portions, the upper surface of the above rib supports abutting against the inner surface of other cleaning portions under high negative pressure.

In an embodiment, the mounting rib is provided with a T-shaped flange, or the fixing rib is provided with a T-shaped flange. The flanges on both sides of the T-shaped flange are clamped on the upper surface of the groove edge of the groove. While being fixedly clamped, the upper surface of the T-shaped flange abuts against the inner surface of the second cleaning portion under high negative pressure.

In an embodiment, the inner surface of the first cleaning portion and/or the inner surface of the second cleaning portion is provided with supporting ribs, supporting points, or supporting bumps, etc. The above inner surfaces refer to the two surfaces of the first cleaning portion and the second cleaning portion that are close to each other under negative pressure.

In an embodiment, the cleaning end of the cleaning assembly protrudes beyond the negative pressure port by at least 0.5mm-20mm.

In an embodiment, the cleaning portion of the cleaning assembly includes at least one of a scraper, a scraping blade, a roller brush, a bristle brush, a scouring pad, and a cleaning ball.

In an embodiment, the spray port and the negative pressure port are arranged adjacent to each other, at least one cleaning fluid spray hole is provided in the spray port, and the spray direction of the cleaning fluid spray hole is inclined toward the cleaning assembly.

In an embodiment, the spray port includes at least one cleaning fluid spray tube, and the cleaning fluid spray tube is provided with a plurality of cleaning fluid spray holes.

In an embodiment, the cleaning fluid includes at least one of water vapor, water, or a solution containing a cleaning agent.

A cleaning device is provided, including the cleaning head and the main unit according to any one as described above. The cleaning head is detachably connected to the main unit, and/or at least part of the cleaning assembly is detachably connected to the cleaning head.

In an embodiment, a side wall of the second matching portion is configured with a guiding inclined surface, and the first toggle portion is configured with a matching inclined surface for sliding fit with the guiding inclined surface; and/or,
the first toggle portion is provided with a first limiting protrusion, and when the first toggle portion is in the locked position, the first limiting protrusion prevents the first toggle portion from detaching from the second matching portion.

In an embodiment, an outer surface of the dust cover is configured with a protruding removal portion. When the first toggle portion is in the first unlocked position, the removal portion is configured to be operably pushed to disconnect the dust cover from the spray head body.

In an embodiment, the removal portion protrudes beyond the first toggle portion, and/or a pushing surface of the removal portion is inclined relative to an outer surface of the dust cover.

In an embodiment, the spray head body is provided with a marking portion, and the handle is provided with an identification part for identifying the marking portion.

In an embodiment, one of the marking portion and the identification part is configured as a mating male connector, and the other is configured as a mating female connector for connecting with the mating male connector.

In an embodiment, an elastic member is connected between the handle and the first clamping portion, and the elastic member is configured to drive the first clamping portion to connect to at least one of the first matching portion and the second matching portion after an external force is removed.

In an embodiment, the first clamping portion includes a fixing section, a clamping section, and an unlocking section. The fixing section is connected to the handle, and the clamping section is configured to connect to the first matching portion and the second matching portion. One of the clamping section and the unlocking section is connected to the elastic member.

In response to an unlocking operation of the unlocking section, the clamping section can move to a second unlocked position to disconnect from the first matching portion.

In an embodiment, the clamping section is located between the fixing section and the unlocking section, and in response to a pressing operation of the unlocking section, the clamping section can be disconnected from the first matching portion.

The spray head body has an opening, and a brush holder is provided in the opening. The brush holder is provided with brush bristles, steam spray holes, and a dirt suction port. The brush bristles are located between the steam spray holes and the dirt suction port. The steam spray holes are in communication with a first steam channel of the spray head body, and the dirt suction port is in communication with a first dirt suction channel of the spray head body. When the spray head body is in a connected state with the handle, the first steam channel is in communication with a second steam channel of the handle. The first dirt suction channel is in communication with a second dirt suction channel of the handle.

In an embodiment, the control method of the cleaning device further includes receiving an update instruction for the configuration information, and updating the configuration information according to the update instruction.

In an embodiment, the method further includes prompting a user with type information and/or a target mode of the cleaning head, or issuing an abnormality prompt when an abnormality of the cleaning device is detected.

The present application further provides a cleaning control handle, and the cleaning control handle is provided with:
a type acquisition module configured to acquire type information of a connected cleaning head when connected to the cleaning head; and
a mode response module configured to, in response to a cleaning mode selection instruction, determine a target mode, determine cleaning parameters according to the type information of the cleaning head and the target mode, and perform a cleaning operation.

The present application further provides a cleaning head configured with a type identifier, and the type identifier is configured to establish a communicative connection with a cleaning device and feed back type information of the cleaning head.

The present application further provides a cleaning system, including the cleaning device according to the fourth aspect and at least one terminal device. The terminal device is connected to the cleaning device through wired or wireless communication.

The cleaning device and/or the terminal device are configured to display a human-machine interaction interface, acquire an interaction instruction for the cleaning device through the human-machine interaction interface, and control the working mode of the cleaning device based on the interaction instruction.

The human-machine interaction interface is further configured to display type information of the cleaning head of the cleaning device, or display the target mode of the cleaning device, or issue an abnormality prompt for the cleaning device.

The present application provides a steam control method applied to a steam cleaner. The method includes:
in response to an identified cleaning scenario, acquiring a target flow rate and a target power corresponding to the cleaning scenario; and
injecting cleaning fluid into a heater according to the target flow rate, where the cleaning fluid includes water, controlling the heater to heat the injected cleaning fluid with the target power, and outputting cleaning steam for the target cleaning scenario.

In an embodiment, after acquiring the target flow rate and target power corresponding to the cleaning scenario, the method further includes: in response to a cleaning instruction for an object to be cleaned, controlling the heater to operate to preheat the heater; and acquiring a preheating temperature of the heater, and when the preheating temperature reaches a set temperature threshold, injecting cleaning fluid into the heater according to the target flow rate.

In an embodiment, injecting cleaning fluid into the heater according to the target flow rate includes performing power modulation on a liquid pump according to the target flow rate, so that the liquid pump injects cleaning fluid into the heater at the target flow rate based on the power modulation.

In an embodiment, controlling the heater to heat the injected cleaning fluid with the target power and outputting cleaning steam for the target cleaning scenario includes performing power modulation on the heater based on the target power, so that the heater operates at the target power and outputs cleaning steam for the target cleaning scenario.

In an embodiment, the power modulation includes at least one of pulse width modulation or pulse frequency modulation.

The present application further provides a steam control device applied to a steam cleaner. The device includes:
a response module configured to, in response to an identified cleaning scenario, acquire a target flow rate and a target power corresponding to the cleaning scenario; and
a processing module configured to inject cleaning fluid into a heater according to the target flow rate, control the heater to heat the injected cleaning fluid with the target power, and output cleaning steam for the target cleaning scenario.

The present application further provides a steam cleaner, including a liquid pump, a heater, a cleaning head, and a control unit. The liquid pump, the heater, and the cleaning head are sequentially connected through pipelines. The control unit is communicatively connected to the liquid pump and the heater.

The liquid pump is configured to inject cleaning fluid from a water source into the heater through a pipeline.

The heater is configured to heat the injected cleaning fluid and output steam through the connected cleaning head.

The control unit includes a memory and a processor, the memory stores a computer program, and the processor implements the steps of the above method when executing the computer program.

Details of one or more embodiments of the present application are set forth in the accompanying drawings and the description below. Other features, objects, and advantages of the present application will become apparent from the description, the accompanying drawings, and the claims.

### BRIEF DESCRIPTION OF THE DRAWINGS

To more clearly illustrate the specific embodiments of the present application or the technical solutions in the conventional technology, the following will briefly introduce the drawings that need to be used in the description of the specific embodiments or the conventional technology. Obviously, the drawings in the following description are some embodiments of the present application. For those of ordinary skill in the art, other drawings can also be obtained according to these drawings without creative labor.
FIG. 1 is a schematic diagram of a perspective structure of a steam cleaner in a cleaning device provided by an embodiment of the present application.
FIG. 2 is a schematic diagram of a perspective structure of a steam cleaner in a cleaning device provided by an embodiment of the present application, with part of a housing removed.
FIG. 3 is a structural schematic diagram of a cleaning head in a steam cleaner in a cleaning device provided by an embodiment of the present application.
FIG. 4 is a structural principle diagram of a steam cleaner in a cleaning device provided by an embodiment of the present application.
FIG. 5 is a structural principle diagram of a steam cleaner in a cleaning device provided by another embodiment of the present application.
FIG. 6 is a partial structural schematic diagram of a handle of a steam cleaner in a cleaning device provided by an embodiment of the present application.
FIG. 7 is a schematic diagram of a cleaning device provided by an embodiment of the present application.
FIG. 8 is a partial cross-sectional view of the cleaning device shown in FIG. 7.
FIG. 9 is a schematic diagram of the cleaning device shown in FIG. 7 from another perspective.
FIG. 10 is a partial schematic diagram of a main unit in the cleaning device shown in FIG. 9 from another perspective.
FIG. 11 is a partial schematic diagram of a handle in the cleaning device shown in FIG. 9 from another perspective.
FIG. 12 is a schematic diagram of a cleaning head in a cleaning device provided by an embodiment of the present application.
FIG. 13 is a partial schematic diagram of a cleaning head in the cleaning device shown in FIG. 12 from another perspective.
FIG. 14 is a schematic diagram of a cleaning head in a cleaning device provided by another embodiment of the present application.
FIG. 15 is a left view of the cleaning head in the cleaning device shown in FIG. 14.
FIG. 16 is a schematic diagram of a cleaning head in the cleaning device shown in FIG. 14 from another perspective.
FIG. 17 is a perspective structural schematic diagram of a cleaning head in an embodiment of the present application from one angle.
FIG. 18 is a left view of FIG. 17.
FIG. 19 is a side view of FIG. 17.
FIG. 20 is a structural schematic diagram of a cleaning head in an embodiment of the present application from another angle.
FIG. 21 is a structural schematic diagram of a specific embodiment of a cleaning head in an embodiment of the present application.
FIG. 22A is a schematic diagram of a disassembled state of a handle and a spray head body in a cleaning head provided by an embodiment of the present application.
FIG. 22B is a cross-sectional view of a connected state of the handle and the spray head body in the cleaning head shown in FIG. 22A.
FIG. 23A is a cross-sectional view of the cleaning head shown in FIG. 22A.
FIG. 23B is a partial schematic diagram of a handle in the cleaning head shown in FIG. 23A.
FIG. 24 is a schematic diagram of a handle in the cleaning head shown in FIG. 22A.
FIG. 25 is an exploded schematic diagram of a handle in the cleaning head shown in FIG. 24.
FIG. 26 is a schematic diagram of a spray head body and a dust cover in the cleaning head shown in FIG. 22A.
FIG. 27 is an enlarged partial view of part A in the cleaning head shown in FIG. 26.
FIG. 28 is an enlarged partial view of part B in the cleaning head shown in FIG. 26.
FIG. 29 is a partial schematic diagram of a first toggle portion in the cleaning head shown in FIG. 26.
FIG. 30 is an exploded schematic diagram of the spray head body and the dust cover in the cleaning head shown in FIG. 26.
FIG. 31 is an enlarged partial view of part C in the cleaning head shown in FIG. 30.
FIG. 32 is a schematic diagram of a dust cover in the cleaning head shown in FIG. 30.
FIG. 33 is an enlarged partial view of part D in the cleaning head shown in FIG. 32.
FIG. 34A is a schematic diagram of a cleaning head provided by another embodiment of the present application.
FIG. 34B is a cross-sectional view of the cleaning head shown in FIG. 34A.
FIG. 35 is a partial schematic diagram of a spray head body in the cleaning head shown in FIG. 34A.
FIG. 36 is a schematic diagram of a brush holder in the cleaning head shown in FIG. 34A.
FIG. 37 is a schematic flowchart of a cleaning control method in an embodiment.
FIG. 38 is a schematic flowchart of a step of acquiring type information in an embodiment.
FIG. 39 is a schematic diagram of serial communication based on pins in an embodiment.
FIG. 40 is a schematic diagram of an arrangement of pins in an embodiment.
FIG. 41 is a structural block diagram of a cleaning control handle in an embodiment.
FIG. 42 is a structural block diagram of a cleaning device in an embodiment.
FIG. 43A is a schematic diagram of a first user interface in an embodiment.
FIG. 43B is a schematic diagram of a second user interface in an embodiment.
FIG. 44 is an internal structural diagram of a control device in an embodiment.
FIG. 45 is a structural schematic diagram of a conventional steam cleaner in an embodiment.
FIG. 46 is a schematic control principle diagram of a conventional steam cleaner in an embodiment.
FIG. 47 is a structural schematic diagram of a steam cleaner in a cleaning device in an embodiment.
FIG. 48 is a structural schematic diagram of a steam cleaner in a cleaning device in another embodiment.
FIG. 49 is a schematic control principle diagram of a steam cleaner in a cleaning device in an embodiment.
FIG. 50 is a temperature control comparison diagram in an embodiment.
FIG. 51 is a schematic flowchart of a cleaning control method in an embodiment.
FIG. 52 is a structural block diagram of a cleaning control device in an embodiment.

Description of Reference Signs: 1, Cleaning unit; 1a, Cleaning head; 10, Housing; 102, Cleaning fluid spray tube; 1021, Cleaning fluid spray hole; 1031, Upper shell of negative pressure port; 1032, Lower shell of negative pressure port; 1032a, Fixing groove; 104, Upper housing; 105, Lower housing; 11, Spray port; 12, Suction port; 13, Scraper portion; 100, Spray head body; 110, First toggle portion; 111, Matching inclined surface; 112, First limiting protrusion; 120, First matching portion; 130, First dirt suction channel; 140, Positioning member; 150, First steam channel; 170, Air inlet; 180, Opening; 181, Brush bristles; 182, Brush holder; 183, Steam spray hole; 184, Dirt suction port; 185, Brush mounting hole; 191, Second marking portion; 2, Steam generation unit; 20, Cleaning assembly; 201, positioning portion; 2011, First positioning side plate; 2012, Second positioning side plate; 202, cleaning portion; 203, First cleaning portion; 2031, Mounting rib; 204, Second cleaning portion; 21, Liquid spraying unit; 2101, Liquid storage tank; 2102, Second water pump; 2103, First liquid level gauge; 22, Electric heater; 23, Temperature sensor; 24, First control valve; 3, Auxiliary heating unit; 31, Auxiliary heater; 32, First water pump; 33, Water storage tank; 34, Heat exchanger; 35, Second control valve; 200, Dust cover; 210, Second matching portion; 211, Guiding inclined surface; 220, removal portion; 221, Pushing surface; 230, Negative pressure port; 240, Positioning hole; 4, Sewage collection unit; 41, Sewage tank; 42, Suction motor; 43, Second liquid level gauge; 5, Control unit; 51, Controller; 52, Control component; 521, First control member; 522, Second control member; 53, Voice alarm unit; 6, Main unit; 61, Casing; 62, First heat source interface; 63, Second heat source interface; 64, Travel wheel; 610, Fixing base; 611, First slot; 6111, First collection portion; 612, Stop plate; 613, Storage slot; 614, Heat dissipation hole; 615, First gap; 7, Handle; 71, First set of sensing contacts; 72, Negative pressure channel; 73, Steam tube channel; 74, Steam delivery pipeline; 710, First cleaning channel; 720, First dirt channel; 730, First marking portion; 8, Self-cleaning unit; 81, Self-cleaning box; 82, Inductive switch; 9, Connecting tube; 310, First clamping portion; 311, Fixing section; 3111, Connecting hole; 312, Bending section; 313, Clamping section; 314, Unlocking section; 330, Supporting structure; 331, Supporting plate; 332, Supporting column; 333, First fixing portion; 340, Second steam channel; 350, Second dirt suction channel.

### DETAILED DESCRIPTION OF EMBODIMENTS

The technical solutions of the present application will be clearly and completely described below in conjunction with the embodiments. Obviously, the described embodiments are part of the embodiments of the present application, rather than all the embodiments. Based on the embodiments in the present application, all other embodiments obtained by those of ordinary skill in the art without creative labor shall fall within the protection scope of the present application.

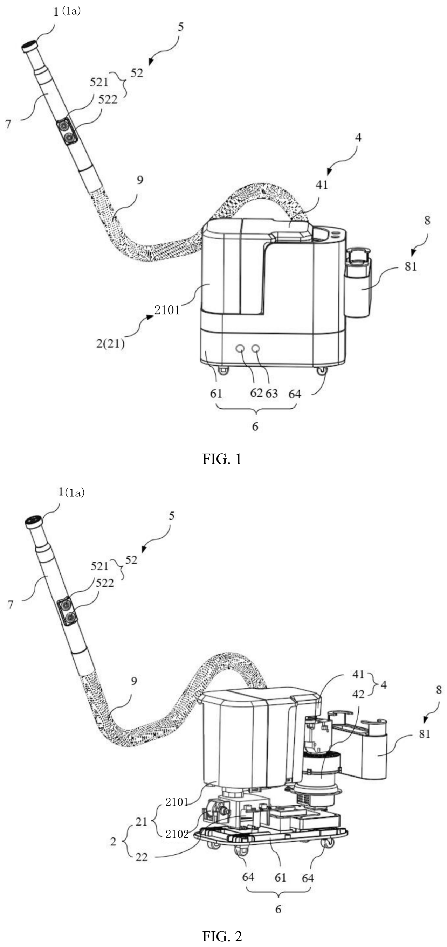

Referring to FIGS. 1 to 4, a cleaning device provided by an embodiment of the present application includes a cleaning unit 1, a liquid spraying unit 21, a sewage collection unit 4, and a control unit 5. The cleaning unit 1 includes a spray port 11 and a suction port 12. The liquid spraying unit 21 is connected to the spray port 11 and configured to spray cleaning fluid to a surface to be cleaned. The sewage collection unit 4 is connected to the suction port 12 and configured to suction dirt or sewage generated during cleaning. Both the liquid spraying unit 21 and the sewage collection unit 4 are connected to the control unit 5, and the control unit 5 is configured to control the start and stop of the liquid spraying unit 21 and the sewage collection unit 4. The above cleaning device integrates the liquid spraying unit 21 and the sewage collection unit 4, so that the process of spraying cleaning fluid and suctioning dirt or sewage can be completed by the same device, greatly improving the cleaning efficiency. The existence of the control unit 5 allows the user to manage the entire cleaning process through one operation, reducing operation steps and improving user experience. According to different cleaning needs, the control unit 5 can flexibly adjust the liquid spray volume and suction force, enabling the device to better adapt to various working environments and task requirements.

In an embodiment, the cleaning device is a steam cleaner. The cleaning unit 1 includes a cleaning head 1a provided with a spray port 11 and a suction port 12. The steam cleaner includes a steam generation unit 2 connected to the control unit 5. The steam generation unit 2 includes an electric heater 22 and a liquid spraying unit 21 connected to each other. The electric heater 22 is configured to heat the cleaning fluid to provide steam for the liquid spraying unit 21. The control unit 5 is configured to control the start and stop of the steam generation unit 2. The liquid spraying unit 21 can provide cleaning fluid (such as water). When the electric heater 22 is configured to heat the cleaning fluid, steam can be generated, thereby providing steam for the liquid spraying unit 21, so that the liquid spraying unit 21 can spray steam to the surface to be cleaned. Conventional steam cleaners have large heat loss and unstable steam pressure due to the separation of steam generation and spray control. The present application centrally manages the start and stop of steam generation, spraying, and sewage recovery through the control unit 5, and realizes rapid steam generation and precise spraying through the direct linkage between the liquid spraying unit 21 and the electric heater 22, reducing energy loss. At the same time, through the linkage between the sewage collection unit 4 and the suction port 12 of the cleaning head 1a, the recovery of dirt and sewage is realized, avoiding residues and further ensuring the cleaning efficiency.

Although the cleaning device can use a heating element to heat the cleaning fluid to provide steam, the heating method is only electric heating, that is, the heat source for generating steam is only electric energy, which consumes a large amount of electric energy. In view of this, an embodiment of the present application provides a cleaning device that can solve the above problem, and the cleaning device provided by an embodiment will be described in detail below.

The cleaning device, according to an embodiment of the present application, may be a steam cleaner. The steam cleaner further includes an auxiliary heating unit 3 connected to the control unit 5. Referring to FIGS. 1 to 4, the control unit 5 can control the start and stop of the auxiliary heating unit 3. The auxiliary heating unit 3 and the electric heater 22 may be connected in parallel. The auxiliary heating unit 3 and the electric heater 22 are configured to heat the cleaning fluid. The heat source of the auxiliary heating unit 3 is a clean heat source. The auxiliary heating unit 3 will be described in detail below.

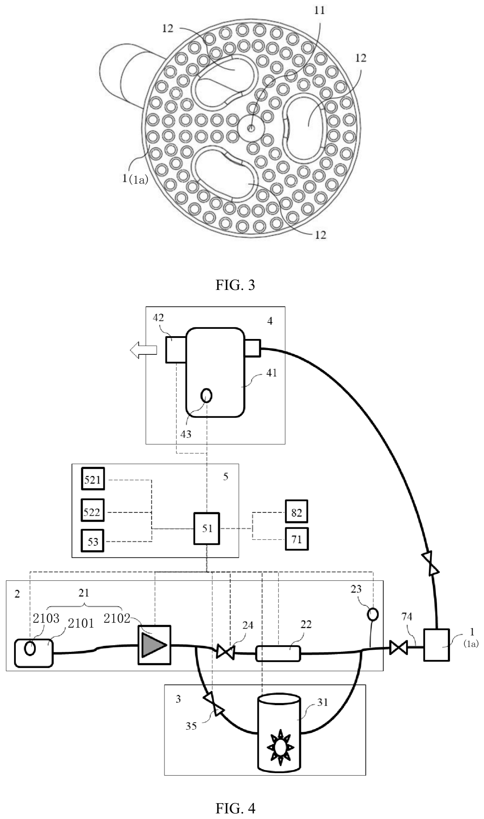

Referring to FIGS. 1 to 4, in an embodiment, the cleaning device includes a cleaning head 1a, a control unit 5, and a steam generation unit 2, an auxiliary heating unit 3, and a sewage collection unit 4 respectively connected to the control unit 5. As shown in FIG. 3, the cleaning head 1a has a spray port 11 and a suction port 12. As shown in FIGS. 2 and 4, the steam generation unit 2 includes a liquid spraying unit 21 and an electric heater 22 connected to each other. As shown in FIG. 4, the auxiliary heating unit 3 is connected in parallel with the electric heater 22, and both are configured to heat the cleaning fluid to provide steam for the liquid spraying unit 21. The heat source of the auxiliary heating unit 3 is a clean heat source. The liquid spraying unit 21 is connected to the spray port 11 and configured to spray steam to the surface to be cleaned. The sewage collection unit 4 is connected to the suction port 12 and configured to suction dirt or sewage generated during cleaning. The control unit 5 is configured to control the start and stop of the steam generation unit 2, the auxiliary heating unit 3, and the sewage collection unit 4.

It is easy to understand that the liquid spraying unit 21 can provide cleaning fluid. When the electric heater 22 and/or the auxiliary heating unit 3 is configured to heat the cleaning fluid, steam can be generated, thereby providing steam for the liquid spraying unit 21, so that the liquid spraying unit 21 can spray steam to the surface to be cleaned. During use, the start and stop of the electric heater 22 of the steam generation unit 2 and the auxiliary heating unit 3 can be controlled through the control unit 5 according to cleaning needs and energy conditions. In an embodiment, the control unit 5 can control the electric heater 22 to work and the auxiliary heating unit 3 not to work, so that only electric energy is configured to provide heat for the cleaning fluid to heat and generate steam. Alternatively, the control unit 5 can control both the electric heater 22 and the auxiliary heating unit 3 to work, so that both electric energy and clean energy are configured to provide energy for steam generation. Alternatively, the control unit 5 can control the electric heater 22 not to work and the auxiliary heating unit 3 to work, so that only clean energy is configured to provide energy for steam generation. It can be seen that the cleaning device provided by the embodiment of the present application, such as a steam cleaner, can not only use electric energy to provide energy for steam generation, but also use a clean heat source to provide energy for steam generation, thereby relatively reducing the consumption of electric energy for steam cleaning operations, which is conducive to saving electric energy and reducing electricity costs. It is worth noting that the clean heat source used by the auxiliary heating unit 3 to heat the cleaning fluid to generate steam is a type of heat source that does not emit pollutants and can be directly used for production or life, specifically a heat source other than electric energy, which can be a renewable heat source, such as solar energy, or a waste heat source, which is not limited in the present application.

In the embodiments provided by the present application, the clean heat source used by the auxiliary heating unit 3 to heat the cleaning fluid may be solar energy, which is not only easy to obtain, but also can save electric energy to a large extent. It is estimated that energy consumption can be reduced by more than 70%. In addition, the heating device using solar energy has a relatively simple structure, low cost, and convenient use, which is conducive to improving steam generation efficiency, thereby improving cleaning efficiency and cleaning effect.

In some embodiments, the auxiliary heating unit 3 is configured to provide steam, hot water, or hot air for the liquid spraying unit 21. In actual settings, the specific structure of the auxiliary heating unit 3 is not limited. In an embodiment, the auxiliary heating unit 3 is configured to provide steam for the liquid spraying unit 21 as an example. In an embodiment, in conjunction with FIG. 4, the auxiliary heating unit 3 includes an auxiliary heater 31, and the auxiliary heater 31 is connected in parallel with the electric heater 22. That is, a liquid inlet and a liquid outlet of the auxiliary heater 31 can be respectively connected to the pipelines connected to a liquid inlet and a liquid outlet of the electric heater 22.

It is easy to understand that the auxiliary heater 31 is a heater that can use a clean heat source to heat the cleaning fluid to generate steam. In the embodiment shown in FIG. 4, the auxiliary heater 31 is directly connected in parallel with the electric heater 22. During use, the auxiliary heater 31 can use the clean heat source to directly heat the cleaning fluid split from the pipeline where the electric heater 22 is located. The structure is not only simple, but also can fully utilize the clean heat source, which is conducive to saving electric energy. It is even possible to turn off the electric heater 22 so that the cleaning fluid only passes through the auxiliary heater 31, so that only the clean heat source is configured to provide energy for steam generation, thereby greatly saving the consumption of electric energy for steam cleaning.

In an embodiment, the auxiliary heating unit 3 is configured to provide hot water for the liquid spraying unit 21.

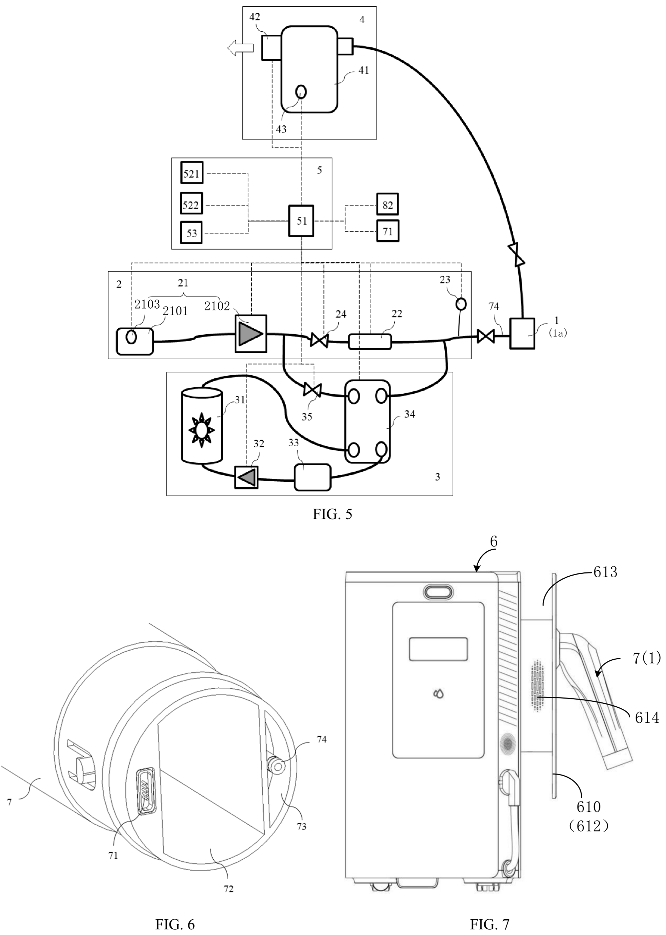

In another embodiment provided by the present application, in conjunction with FIG. 5, the auxiliary heating unit 3 includes a heat exchanger 34, and a water storage tank 33, a first water pump 32, and an auxiliary heater 31 connected in sequence. In an embodiment, a liquid outlet of the water storage tank 33 is connected to a liquid inlet of the first water pump 32 through a pipeline, a liquid outlet of the first water pump 32 is connected to a liquid inlet of the auxiliary heater 31 through a pipeline, a liquid outlet of the auxiliary heater 31 is connected to a heat medium inlet of the heat exchanger 34 through a pipeline, a heat medium outlet of the heat exchanger 34 is connected to a liquid inlet of the water storage tank 33, and the heat exchanger 34 is connected in parallel with the electric heater 22.

It is easy to understand that the heat brought by the clean heat source may be relatively large. If the auxiliary heater 31 is directly configured to heat the cleaning fluid, the temperature of the generated steam may be relatively high under high pressure, for example, it may reach above 600 degrees. The cleaning device provided by the above embodiment of the present application, such as a steam cleaner, is provided with the heat exchanger 34, the auxiliary heater 31 is connected to the heat exchanger 34, and the heat exchanger 34 is directly connected in parallel with the electric heater 22. Consequently, during use, the auxiliary heater 31 can use the clean heat source to heat the cleaning fluid, such as water, pumped by the first water pump 32, and send the heated water to the heat exchanger 34 to exchange heat with the cleaning fluid entering the heat exchanger 34 to heat the cleaning fluid, generate steam and supply the steam to the cleaning head 1a. In this way, the temperature of the generated steam can be easily controlled within a safe range to reduce safety risks, avoid damaging the objects to be cleaned, and also ensure personal safety. It can be seen that in actual use, the structure of the above auxiliary heating unit 3 can be selected according to the temperature of the above clean heat source. In an embodiment, when the temperature provided by the clean heat source is not particularly high, a simple structure in which the auxiliary heater 31 is directly connected in parallel with the electric heater 22 can be used. When the temperature provided by the clean heat source is particularly high, a safe structure in which the auxiliary heater 31 is connected in parallel with the electric heater 22 through the heat exchanger 34 can be used. Therefore, the arrangement of the structure of the auxiliary heating unit 3 provided by the embodiment of the present application is relatively flexible.

In an embodiment not shown in the present application, the auxiliary heating unit 3 and the electric heater 22 may also be connected in series. In an embodiment, when the auxiliary heating unit 3 only includes the auxiliary heater 31 as shown in FIG. 4, the auxiliary heater 31 may be connected in series with the electric heater 22, specifically in series upstream or downstream of the electric heater 22. When the auxiliary heating unit 3 includes the auxiliary heater 31, the first water pump 32, the water storage tank 33, and the heat exchanger 34, as shown in FIG. 5, the heat exchanger 34 may be connected in series with the electric heater 22, specifically in series upstream or downstream of the electric heater 22. In this way, the control unit 5 can control both the electric heater 22 and the auxiliary heating unit 3 to work, so that the cleaning fluid passes through the electric heater 22 and the auxiliary heating unit 3 in sequence, or passes through the auxiliary heating unit 3 and the electric heater 22 in sequence for double heating to generate steam. Alternatively, the control unit 5 can control one of the electric heater 22 and the auxiliary heating unit 3 to work. Obviously, the way the auxiliary heating unit 3 and the electric heater 22 are connected in parallel in the above embodiment of the present application is more conducive to the adjustment of steam temperature and the compact arrangement of parts other than the auxiliary heating unit 3 of the cleaning device.

In an embodiment, the auxiliary heating unit 3 is configured to provide hot air for the liquid spraying unit 21. In some embodiments, the auxiliary heating unit 3 may be connected in parallel or in series with the electric heater 22. The auxiliary heating unit 3 includes an auxiliary heater 31 and a fan. The auxiliary heater 31 is configured to heat air, and the fan is configured to blow out the hot air around the auxiliary heater 31 to form hot air, thereby heating the flowing cleaning fluid. Alternatively, after the cleaning device finishes cleaning, the auxiliary heating unit 3 provides hot air for the spray port to dry the cleaned surface to achieve a dry cleaning effect.

In some other embodiments, the auxiliary heating unit 3 may also be a thermal energy storage device, including a housing, a heat charging unit, a thermal storage material, and a heat releasing unit. The heat charging unit includes a heat charging module, and the heat charging module includes a heat charging tube. In some embodiments, the energy source of the thermal energy storage device may be light energy. The heat charging module may include a light-to-heat conversion mechanism (not shown in the figure), and the light-to-heat conversion mechanism may at least include a light transmission component, such as an optical fiber. The light transmission component is configured to transmit light into the heat charging tube to directly heat the heat charging tube using light energy, and then the heat charging tube transfers the thermal energy to the thermal storage material for storage. Such a setting can realize the direct conversion of light energy into thermal energy.

In some embodiments, the energy source of the thermal energy storage device may be electric energy converted from clean energy. For example, the heat charging module may be a coal-fired power generation mechanism, a photovoltaic power generation mechanism, or a wind power generation mechanism, etc. The power generation mechanism converts clean energy into electric energy, generates heat through electric energy, and thus stores the heat in the thermal storage material. It can be understood that in some embodiments, the auxiliary heating unit 3 may not be provided, and the electric heater 22 is configured to heat the cleaning fluid to generate steam, thereby providing steam for the liquid spraying unit 21. In actual settings, the structure of the cleaning head 1a is not limited. In an embodiment, as shown in FIG. 3, the cleaning head 1a may have a spray port 11 and a suction port 12 circumferentially arranged around the outer side of the spray port 11, which is conducive to improving the cleaning effect and cleaning efficiency.

In actual settings, the structural form of the liquid spraying unit 21 is not limited. In an embodiment, as shown in FIG. 4, the liquid spraying unit 21 may include a liquid storage tank 2101 and a second water pump 2102 connected to each other. In an embodiment, the liquid storage tank 2101 may be configured to store cleaning fluid, such as water. The liquid outlet of the liquid storage tank 2101 may be connected to the liquid inlet of the second water pump 2102 through a pipeline, the liquid outlet of the second water pump 2102 may be connected to the liquid inlet of the electric heater 22, and the gas outlet of the electric heater 22 may be connected to the spray port 11 of the cleaning head 1a. The second water pump 2102 may be an electromagnetic pump, which can reliably and stably supply cleaning fluid to the electric heater 22. The second water pump 2102 may be connected to the control unit 5, and the control unit 5 may control the start and stop of the steam generation unit 2 by controlling the start and stop of the second water pump 2102. In this way, the liquid spraying unit 21 has a simple structure and can efficiently provide cleaning fluid. Through the cooperation of the liquid spraying unit 21 and the electric heater 22, under the control of the control unit 5, the efficiency of generating steam by the entire steam generation unit 2 can be greatly improved, which is conducive to improving the cleaning effect and cleaning efficiency.

In actual settings, the structural form of the sewage collection unit 4 is not limited. In an embodiment, as shown in FIG. 4, the sewage collection unit 4 may include a sewage tank 41 and a suction motor 42 connected to each other. In an embodiment, the liquid inlet of the sewage tank 41 may be connected to the suction port 12 of the cleaning head 1a, and the liquid inlet of the suction motor 42 may be connected to the liquid outlet of the sewage tank 41. The suction motor 42 may be connected to the control unit 5, and the control unit 5 may control the start and stop of the sewage collection unit 4 by controlling the start and stop of the suction motor 42. In this way, the sewage collection unit 4 has a simple structure and can efficiently absorb dirt or sewage generated during cleaning, which is conducive to further improving the cleaning effect and cleaning efficiency.

In the embodiments provided by the present application, the cleaning device may further be provided with a main unit 6. As shown in FIG. 1, the main unit 6 may include a casing 61. The steam generation unit 2, the auxiliary heating unit 3, the sewage collection unit 4, and the control unit 5 may be partially arranged in the casing 61 to improve the integration of the cleaning device, make the structure more compact, and make the operation more convenient.

In specific settings, the auxiliary heating unit 3 may be fully integrated into the main unit 6, or connected to the main unit 6 as an external accessory. In the embodiments provided by the present application, in conjunction with FIG. 2, the liquid storage tank 2101, the second water pump 2102, and the electric heater 22 of the steam generation unit 2 may be integrated into the main unit 6, and the auxiliary heating unit 3 may be connected to the main unit 6 as an external accessory. In an embodiment, the casing 61 of the main unit 6 may be provided with a first heat source interface 62 and a second heat source interface 63. The pipelines connected to the cleaning fluid inlet and the steam outlet of the auxiliary heating unit 3, which are the pipelines connected to the liquid inlet and the gas outlet of the auxiliary heater 31 in the embodiment shown in FIG. 4 and are the pipelines respectively connected to the refrigerant inlet and the refrigerant outlet of the heat exchanger 34 in the embodiment shown in FIG. 5, may pass through the first heat source interface 62 and the second heat source interface 63 respectively, enter the casing 61, and then be connected to both ends of the electric heater 22 respectively, so as to realize the parallel connection between the auxiliary heating unit 3 and the electric heater 22. As shown in FIGS. 1 and 2, the bottom of the main unit 6 may further be provided with travel wheels 64, which makes the cleaning device easy to move and improves the convenience of operation.

In the embodiments provided by the present application, as shown in FIGS. 1 and 2, the cleaning unit 1 further includes a handle 7. The cleaning head 1a is connected to the steam generation unit 2 and the sewage collection unit 4 through the handle 7. In this way, the position and posture of the cleaning head 1a can be conveniently adjusted by holding the handle 7, which is conducive to improving the cleaning effect and cleaning efficiency.

In the embodiments of the present application, as shown in FIG. 6, the handle 7 may have a first set of sensing contacts 71, the cleaning head 1a may have a second set of sensing contacts, and the first set of sensing contacts 71 may be connected to the control unit 5 as shown in FIGS. 4 to 5. During use, when the cleaning head 1a is connected to the handle 7, the second set of sensing contacts can be connected to the first set of sensing contacts 71, so that the first set of sensing contacts 71 sends an electrical signal to the control unit 5. The control unit 5 can identify the type information of the cleaning head 1a according to the electrical signal, and adjust the working mode of the cleaning device according to the type information, so that the steam generation unit 2 and the sewage collection unit 4 are in a working state corresponding to the working mode.

Taking the cleaning device being a steam cleaner as an example, the steam cleaner has various working modes, such as a first type of working mode divided by different steam temperatures, a second type of working mode divided by whether cleaning and suction work simultaneously, etc., which are not specifically limited. Taking the first type of working mode divided by different steam temperatures as an example, different types of cleaning heads 1a can be used for different objects to be cleaned, and different steam temperatures can be controlled for different types of cleaning heads 1a.

In the embodiments of the present application, since the first set of sensing contacts 71 is provided on the handle 7 to cooperate with the second set of sensing contacts on the cleaning head 1a, the type of the cleaning head 1a can be automatically identified, and the control unit 5 can match different working modes for each type of cleaning head 1a, such as different cleaning temperatures, thereby being compatible with various types of cleaning heads 1a and applicable to multiple application scenarios.

In the embodiments of the present application, in conjunction with FIGS. 4 and 5, the steam generation unit 2 may further include a temperature sensor 23. The temperature sensor 23 may be connected to the control unit 5, the temperature sensor 23 may be configured to measure the temperature information of the steam sprayed by the liquid spraying unit 21, and transmit the measured temperature information to the control unit 5. The control unit 5 may control the heating power of the electric heater 22 and/or the auxiliary heating unit 3 according to the type information of the cleaning head 1a and the temperature information of the steam to control the temperature of the steam sprayed by the liquid spraying unit 21. In this way, automatic and efficient control of the steam temperature can be realized, which is conducive to improving cleaning efficiency.

In the embodiments of the present application, as shown in FIG. 6, the handle 7 may further be provided with a negative pressure channel 72 (the negative pressure channel 72 may be a first dirt channel, or a channel connected between the first dirt channel and the sewage collection unit) and a steam tube channel 73. A steam delivery pipeline 74 (also referred to as a first cleaning channel) may be provided in the steam tube channel 73. When the cleaning head 1a is connected to the handle 7, the spray port 11 of the cleaning head 1a may be in communication with the steam delivery pipeline 74, and the suction port 12 may be in communication with the negative pressure channel 72. In addition, as shown in FIGS. 1 and 2, the cleaning device, such as a steam cleaner, may further be provided with a connecting tube 9 (accommodating the steam delivery pipeline 74 and the first dirt channel). The handle 7 may be connected to the main unit 6 through the connecting tube 9. In an embodiment, the negative pressure channel 72 of the handle 7 may be in communication with the sewage tank 41 through the connecting tube 9, and the steam delivery pipeline 74 may extend into the connecting tube 9 and be connected to the liquid outlet of the electric heater 22 after extending out of the connecting tube 9. The connecting tube 9 may specifically be a flexible tube, which facilitates manipulating the handle 7 to adjust the position and posture of the cleaning head 1a. In specific settings, the type of the temperature sensor 23 is not limited. For example, it may be an NTC temperature sensor, which may be provided on the steam delivery pipeline 74, or on the surface of the electric heater 22 or the auxiliary heater 31, which is not limited in the present application.

In the embodiments provided by the present application, the cleaning device further includes a self-cleaning unit 8 as shown in FIGS. 1 and 2. As shown in FIGS. 4 and 5, the self-cleaning unit 8 may be connected to the control unit 5, the self-cleaning unit 8 may be configured to clean the cleaning head 1a, and the control unit 5 is configured to control the start and stop of the self-cleaning unit 8. It can be understood that the cleaning head 1a sprays steam to clean the surface to be cleaned, and dirt or sewage will be generated during cleaning. Although most of the dirt and sewage can be collected by the sewage collection unit 4, a small part is likely to contaminate the cleaning head 1a, which requires frequent cleaning of the cleaning head 1a. When the cleaning head is contaminated, it is necessary to manually clean the cleaning head frequently, which is time-consuming and labor-intensive, and the user experience is poor. Since the cleaning device provided by the above embodiment of the present application is provided with the self-cleaning unit 8, under the control of the control unit 5, automatic cleaning of the cleaning head 1a can be realized, the self-cleaning efficiency is improved, labor is saved, and the user experience is improved.

In specific settings, the structure of the self-cleaning unit 8 is not limited. In an embodiment, as shown in FIGS. 1, 4, and 5, the self-cleaning unit 8 may include a self-cleaning box 81 and a sensing switch 82. The sensing switch 82 may be provided on the self-cleaning box 81, and the sensing switch 82 may be connected to the control unit 5. The cleaning head 1a can be inserted into the self-cleaning box 81 to trigger the sensing switch 82. The control unit 5 can control the start and stop of the steam generation unit 2, such as the liquid spraying unit 21, according to the state of the sensing switch 82.

In this way, during use, after the cleaning head 1a is inserted into the self-cleaning box 81, the sensing switch 82 can be triggered, and the sensing switch 82 can send a self-cleaning signal to the control unit 5. The control unit 5 can then control the steam generation unit 2 to start, generate steam, and spray steam through the spray port 11 of the cleaning head 1a. Since a cleaning chamber can be formed inside the self-cleaning box 81, the steam can clean the cleaning head 1a in the cleaning chamber. During this process, it is only necessary to insert the cleaning head 1a into the self-cleaning box 81, which is convenient and fast to operate, can quickly realize self-cleaning of the cleaning device, has high cleaning efficiency, and can further improve user experience. It can be seen that since the cleaning head 1a is connected to the steam generation unit 2 through the handle 7, obviously, when the cleaning head 1a is inserted into the self-cleaning box 81 to realize self-cleaning of the cleaning head 1a, the handle 7 and the pipe wall of the dirt recovery pipeline in the main unit 6 can also be cleaned at the same time, realizing self-cleaning of the cleaning head and the dirt recovery pipeline. It is worth noting that the sensing switch 82 may be a mechanical sensing switch or an infrared sensing switch, which is not specifically limited.

In the embodiments provided by the present application, in conjunction with FIGS. 1, 2, 4, and 5, the control unit 5 may include a controller 51 and a control component 52 connected to each other. The control component 52 may be configured to adjust the working mode of the cleaning device. The working mode of the cleaning device may include a cleaning mode and a drying mode, which may be the second type of working mode divided by whether cleaning and suction work simultaneously, as described above. In the cleaning mode, the steam generation unit 2 and the sewage collection unit 4 work simultaneously. In the drying mode, the steam generation unit 2 does not work, and the sewage collection unit 4 works. In this way, automatic switching between the cleaning mode and the drying mode can be realized, the operation is convenient and fast, and the user experience is good. In actual settings, the specific structural form of the control component 52 is not limited. In an embodiment, the control component 52 may include a first control member 521 and a second control member 522 as shown in FIG. 1. The first control member 521 may be configured to control the cleaning device to enter or exit the cleaning mode, and the second control member 522 may be configured to control the cleaning device to enter or exit the drying mode. In this way, special control members can be set for the commonly used cleaning and drying function. The operation is more convenient and fast, and the user experience can be further improved.

It is worth noting that the specific forms of the first control member 521 and the second control member 522 are not limited. They may be control buttons. Pressing the corresponding control button can make the cleaning device enter the corresponding working mode, and pressing the button again can make the cleaning device exit the corresponding working mode. Naturally, the first control member 521 and the second control member 522 may also be control knobs, and rotating the corresponding knob can realize the cleaning device entering or exiting the corresponding working mode. In fact, the control component 52 may also include only one control member, which may be a knob. By rotating the knob, entering the cleaning mode, entering the drying mode, and shutting down the cleaning device can be realized.

In addition, the control component 52 may be provided on the handle 7 or on the casing 61 of the main unit 6, which is not specifically limited. In the embodiments of the present application, as shown in FIG. 1, the control component 52 is provided on the handle 7. When the user holds the handle 7 to control the cleaning head 1a to work, the user can conveniently operate the control component 52 on the handle 7 nearby to switch and start/stop the corresponding working mode.

In an embodiment, as shown in FIGS. 4 and 5, a first liquid level gauge 2103 may be provided in the liquid storage tank 2101 of the steam generation unit 2, and a second liquid level gauge 43 may be provided in the sewage tank 41 of the sewage collection unit 4. The first liquid level gauge 2103 and the second liquid level gauge 43 may be connected to the controller 51. The controller 51 may control the work of the second water pump 2102 according to the liquid level of the liquid storage tank 2101 measured by the first liquid level gauge 2103, and control the work of the suction motor 42 according to the liquid level of the sewage tank 41 measured by the second liquid level gauge 43.

In the embodiments of the present application, the control unit 5 may further include a voice alarm unit 53. The voice alarm unit 53 may be connected to the controller 51. The control unit 5 may control the voice alarm unit 53 to issue a water shortage alarm for the clean water tank when the liquid level of the liquid storage tank 2101 is lower than a first liquid level threshold, and control the voice alarm unit 53 to issue a full liquid level alarm for the sewage tank when the liquid level of the sewage tank 41 is higher than a second liquid level threshold, so as to timely remind the user to replenish water to the liquid storage tank 2101 and drain water from the sewage tank 41, ensuring the stable operation of the steam cleaning work. In the embodiments provided by the present application, the electric heater 22 of the steam generation unit 2 may also be equipped with a temperature protection switch to prevent safety accidents caused by excessive temperature.

In the embodiment shown in FIG. 4, the gas outlet of the electric heater 22 in the steam generation unit 2 may be connected to the spray port 11 of the cleaning head 1a through a steam delivery pipeline 74, and a first control valve 24 may be provided on the pipeline connecting the second water pump 2102 and the electric heater 22. In the auxiliary heating unit 3, the liquid inlet of the auxiliary heater 31 may be connected to the liquid outlet of the second water pump 2102 through a pipeline, and the gas outlet of the auxiliary heater 31 may be connected to the steam delivery pipeline 74 through a pipeline, so as to realize the parallel connection between the auxiliary heater 31 and the electric heater 22. A second control valve 35 may be provided on the pipeline connecting the auxiliary heater 31 and the second water pump 2102.

The embodiment shown in FIG. 5 differs from the embodiment shown in FIG. 4 in that: in the auxiliary heating unit 3, the refrigerant inlet of the heat exchanger 34 may be connected to the liquid outlet of the second water pump 2102 through a pipeline, and the refrigerant outlet of the heat exchanger 34 may be connected to the steam delivery pipeline 74 through a pipeline to realize the parallel connection between the heat exchanger 34 and the electric heater 22, and the second control valve 35 may be provided on the pipeline connecting the heat exchanger 34 and the second water pump 2102. Both the first control valve 24 and the second control valve 35 may be flow proportional valves. The flow rate entering the electric heater 22, such as the water flow rate, may be controlled by adjusting the flow rate of the first control valve 24, or the water flow rate entering the auxiliary heating unit 3 may be controlled by adjusting the opening degree of the second control valve 35, thereby controlling the steam flow rate in the steam delivery pipeline 74 to adjust the intensity of steam cleaning. Both the first control valve 24 and the second control valve 35 may also be solenoid valves. It is possible to control only the electric heater 22 to heat the cleaning fluid by opening the first control valve 24 and closing the second control valve 35. It is also possible to control both the electric heater 22 and the auxiliary heater 31 to heat the cleaning fluid by opening both the first control valve 24 and the second control valve 35. It is also possible to control only the auxiliary heater 31 to heat the cleaning fluid by closing the first control valve 24 and opening the second control valve 35. In this way, free switching of the energy source for providing heat to the steam generation unit 2 is realized. Since the cleaning device provided by the above embodiment of the present application can use clean energy to provide the heat required for steam generation, it can reduce the consumption of electric energy, has a low cost, and can be widely applied to the cleaning of tableware, fabrics, glass, vehicles, clothes, kitchens, floors and other objects, with a wide range of applications.

After the cleaning device finishes cleaning the surface to be cleaned, it is necessary to clean the cleaning handle and the recovery pipeline of the sewage collection unit to prevent dirt adhering to the pipe wall of the recovery pipeline from affecting the suction force of the cleaning device. In related technologies, a detachable accessory such as a cleaning cover is installed on the cleaning head of the cleaning handle, and the cleaning fluid is sprayed to the cleaning cover through the cleaning head and then recovered by the sewage collection unit to realize the self-cleaning of the recovery pipeline. However, this method may cause the overflow of cleaning fluid, resulting in increased cleaning workload, and the accessories are easy to lose.

As shown in conjunction with FIGS. 2 and 8 to 15, in an embodiment, the cleaning device includes a main unit 6. A liquid spraying unit 21 (also referred to as a cleaning fluid supply unit) and a sewage collection unit 4 are provided in the main unit 6. A self-cleaning unit 8 is provided in the main unit 6. A first cleaning channel 710 and a first dirt channel 720 are spaced apart in the cleaning unit 1. The first cleaning channel 710 is connected to the liquid spraying unit 21 to spray cleaning fluid through the spray port of the first cleaning channel 710. The first dirt channel 720 is connected to the sewage collection unit 4 to suck dirt or sewage through the suction port of the first dirt channel 720. In a first state, the cleaning unit 1 is detachably connected to the self-cleaning unit 8, and both the spray port of the first cleaning channel 710 and the suction port of the first dirt channel 720 are located in the self-cleaning unit 8, so that the cleaning device can enter a self-cleaning mode. It can be understood that the first state corresponds to the state where the cleaning device is in a non-cleaning mode, that is, the cleaning device does not need to clean the surface to be cleaned. In this way, after the user finishes cleaning the surface to be cleaned, the cleaning unit 1 can be plugged into the self-cleaning unit 8 of the main unit 6, and the cleaning device can enter the self-cleaning mode. The self-cleaning mode means that the cleaning device sprays cleaning fluid through the spray port of the first cleaning channel 710, and under the negative pressure suction force of the sewage collection unit 4, the cleaning fluid enters the first dirt channel 720 and flows in the first dirt channel 720, thereby flushing down the dirt adhering to the pipe wall of the recovery pipeline such as the first dirt channel 720, realizing the flushing and cleaning of the recovery pipe wall. Then the sewage collection unit 4 recovers the dirt, realizing the self-cleaning of the recovery pipeline of the cleaning device. In some embodiments, the self-cleaning unit 8 may be a first slot 611 provided in the main unit 6. In other embodiments, the self-cleaning unit may also be the self-cleaning box 81 of the foregoing embodiment.

The following description is made based on an example where the self-cleaning unit 8 is the first slot 611 provided in the main unit 6, and the cleaning unit 1 includes a handle 7. As shown in FIGS. 2 and 8-15, in an embodiment, the above-described first cleaning channel 710 and first dirt channel 720 are provided in the handle 7, the handle 7 is detachably connected to the first slot 611 in the first state, and both the outlet of the first cleaning channel 710 and the inlet of the first dirt channel 720 are located in the first slot 611, so that the cleaning device can enter the self-cleaning mode. In this way, after the user finishes cleaning the surface to be cleaned, the handle 7 can be plugged into the first slot 611 of the main unit 6, and the cleaning device can enter the self-cleaning mode. By providing the first slot 611 in the main unit 6, the handle 7 after use can be directly plugged into the first slot 611, and the cleaning device can enter the self-cleaning mode without the user additionally sleeving a cleaning accessory such as a cleaning cover, which reduces the user's operation steps, and realizes the self-cleaning of the recovery pipeline of the cleaning device while realizing the storage of the handle 7. Meanwhile, since no additional cleaning accessories are required, the risk of losing such accessories is reduced, and the associated usage costs are lowered. In addition, when the handle 7 is inserted into the first slot 611, a closed space is formed between the first slot 611 and the handle 7, which effectively reduces the possibility of overflow of cleaning fluid and recovered dirt, not only reducing the user's cleaning workload, but also improving the utilization rate of cleaning fluid.

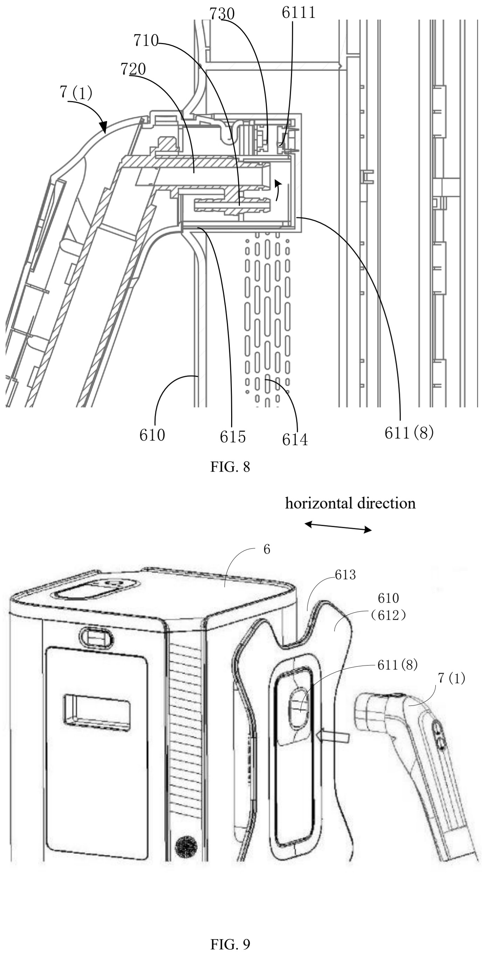

As shown in FIGS. 8 and 9, in an embodiment, along the radial direction of the handle 7, there is a first gap 615 between the outer peripheral surface of the handle 7 and the side wall of the first slot 611. In this way, when entering the self-cleaning mode, the cleaning device can introduce external air through the first gap to maintain the internal negative pressure environment, so that the cleaning fluid can enter the first dirt channel 720 under the negative pressure suction force of the sewage collection unit, thereby flushing and cleaning the pipe wall of the recovery pipeline. In an embodiment, the first gap 615 is greater than or equal to 0.2 millimeters. By reserving a certain gap, sufficient air inhalation is ensured, the suction efficiency is guaranteed, and the suction process can be continuously performed. Moreover, after the external air enters, it helps to dilute and disperse the dirt, making it easier for the dirt to be transported to the sewage collection unit.

As shown in FIGS. 8-11, in an embodiment, one of the handle 7 and the first slot 611 is provided with a first marking portion 730, and the other is provided with a first collection portion 6111. In response to the connection between the handle 7 and the first slot 611, the first collection portion 6111 can identify the first marking portion 730, and the cleaning device enters a self-cleaning mode or a standby self-cleaning mode. When the handle 7 is inserted into the first slot 611, the signal of the insertion of the handle 7 can be transmitted to the control unit of the cleaning device through the identification of the first marking portion 730 by the first collection portion 6111, so that the cleaning device can accurately determine whether the handle 7 has been correctly inserted back into the first slot 611, and then directly enter the self-cleaning mode or the standby self-cleaning mode. After entering the standby self-cleaning mode, the user can start the self-cleaning by clicking to confirm. In this way, an additional layer of safety assurance and user control mechanism is provided, and the user can start the self-cleaning after confirming that the device and the surrounding environment are ready, avoiding accidental cleaning operations caused by misoperation or not noticing the device state. When the cleaning device enters the self-cleaning mode, the cleaning fluid is sprayed through the first cleaning channel 710, and the cleaning fluid flows in the first dirt channel 720, thereby flushing down the dirt adhering to the pipe wall of the recovery pipeline such as the first dirt channel 720, realizing the flushing and cleaning of the recovery pipe wall, and then the dirt is recovered by the sewage collection unit. The entire process forms a continuous cleaning cycle until the recovery pipeline achieves the expected cleaning effect. The closed cleaning cycle system reduces the outflow of cleaning fluid, improves the utilization efficiency of the fluid, and reduces the user's cleaning workload. As shown in FIGS. 8 to 11, in an embodiment, the first marking portion 730 is provided on the handle 7, and the first collection portion 6111 is provided on the main unit 6. In addition to cooperating with the first collection portion 6111 to enable the cleaning device to enter the self-cleaning mode, in some embodiments, the first marking portion 730 stores the type information of the handle 7. When the handle 7 is plugged into the first slot 611 of the main unit 6, the first collection portion 6111 can identify the first marking portion 730 and transmit a signal to the control unit of the cleaning device. The control unit can identify the type information of the handle 7 according to the signal, and then adjust the working parameters of the cleaning device according to the type information, such as adjusting the magnitude of the suction force or the suction power. In other embodiments, the first collection portion may also be provided on the handle, and the first marking portion may be provided on the main unit.

As shown in FIG. 8, in an embodiment, one of the first marking portion 730 and the first collection portion 6111 is configured as a mating male connector, and the other is configured as a mating female connector for connecting with the mating male connector. For example, the first marking portion 730 is a mating male connector, and the first collection portion 6111 is a mating female connector. Understandably, the first marking portion 730 may also be a mating female connector, and the first collection portion 6111 may be a mating male connector. In some embodiments, the mating male connector may include pins, and the mating female connector may include pin connection holes. When the handle 7 is plugged into the first slot 611, the pins on the handle 7 are connected to the pin connection holes on the main unit 6, and the information on the first marking portion 730 is read through the physical contact between the two to realize signal transmission. In other embodiments, the first marking portion 730 may be a short-range communication module such as a two-dimensional code, NFC, RFID, or Bluetooth, and the first collection portion 6111 may be a reader or a receiver. For example, when the first marking portion 730 is a two-dimensional code, the first collection portion 6111 may use a camera or a scanner as a reader to read information and transmit signals. When the first marking portion 730 is NFC, the first collection portion 6111 may use a card reader as a reader. When the first marking portion 730 is RFID, the first collection portion 6111 may use an RFID reader as a reader. When the first marking portion 730 is Bluetooth, the first collection portion 6111 may use a Bluetooth receiver to read information and transmit signals.

In an embodiment, at least one of the main unit 6 and the handle 7 is provided with an operation member (not shown in the figure), and in a first state, in response to a selection operation of the operation member, the cleaning device is in the self-cleaning mode. In some embodiments, the operation member may be provided on the main unit 6. For example, the operation member is a self-cleaning button provided on the main unit 6. When the handle 7 is plugged into the first slot 611, the user can make the cleaning device enter the self-cleaning mode by pressing the self-cleaning button on the main unit 6. Understandably, in other embodiments, the operation member may also be a self-cleaning button integrated on the handle 7. In another embodiment, the operation member may also be a touch screen control, and the user performs interactive operations by touching the screen. For example, a touch screen interface is provided on the main unit 6 or the handle 7, and the operation member is a graphical virtual button, slider bar, or switch displayed on the touch screen interface. When the handle 7 is plugged into the first slot 611, the user can make the device enter the self-cleaning mode by clicking the operation member. It can be understood that in some embodiments, the operation member may not be provided, and the cleaning device automatically enters the self-cleaning mode when the handle 7 is plugged into the first slot 611 of the main unit 6.

As shown in FIGS. 7 to 9, in an embodiment, the main unit 6 is provided with a fixing base 610, and the fixing base 610 is configured with the first slot 611. By providing the fixing base 610 on the main unit 6 to connect the handle 7, the fixing base 610 can provide additional support without occupying the internal space of the main unit 6. In an embodiment, the fixing base 610 may be provided on the side surface of the main unit 6 in the horizontal direction. This arrangement makes the plugging position of the handle 7 more in line with ergonomic principles, so that the user's wrists and arms can maintain a natural and comfortable angle during use, reducing fatigue caused by long-term operation. Moreover, providing the fixing base 610 on the side surface can provide more space to facilitate the user's insertion and extraction operations of the handle 7. In some embodiments, the fixing base 610 and the main unit 6 may be integrally formed. Understandably, in other embodiments, the fixing base 610 may also be detachably connected to the main unit 6 as an independent module through threaded connection, snap connection, magnetic connection, or the like, so as to facilitate the maintenance and replacement of the fixing base 610. As shown in FIGS. 7 to 9, in an embodiment, the fixing base 610 is configured with a stop plate 612 extending in the gravity direction. A second gap exists between the stop plate 612 and the side surface of the main unit 6 in the horizontal direction, and the second gap forms a storage slot 613. In this way, when the handle 7 is plugged into the first slot 611, the connecting pipelines such as the pipelines connected between the main unit 6 and the handle 7 and the control wiring harness such as power lines and control lines can be neatly wound on the fixing base 610, that is, accommodated in the storage slot 613, which improves the aesthetic effect and reduces the risk of tangling and knotting. At the same time, accommodating the pipelines and control wiring harness in the storage slot 613 can also save space, and the stop plate 612 can block and limit the pipelines and control wiring harness to prevent them from falling out of the storage slot 613 in the horizontal direction. In some embodiments, the shape of the stop plate 612 may be a symmetrical figure, which facilitates the processing of the stop plate 612.

As shown in FIGS. 7 to 9, in some embodiments, heat dissipation holes 614 are provided on the fixing base 610. The heat dissipation holes 614 allow heat to dissipate through air flow, increase the air circulation around the fixing base 610, help to dissipate heat, improve the heat dissipation performance, prevent overheating, and further prevent the insulation layer of the control wiring harness or pipelines wound on the fixing base 610 from aging or melting due to high temperature, thereby extending the service life of the control wiring harness, pipelines, and the entire cleaning device. In an embodiment, the cleaning device further includes a storage tube configured to accommodate at least one of the first cleaning channel 710, the first dirt channel 720, or the control wiring harness of the cleaning device, and the storage tube can be stored in the storage slot 613. By accommodating the pipelines, control wiring harness, and the like in the storage tube, the storage tube can play a protective role, reduce the chance of the pipelines and control wiring harness coming into contact with the ground or other sharp objects, thereby reducing the risk of wear and extending the service life. In some embodiments, the storage tube may be a corrugated tube, which has good flexibility and bendability and is convenient to be coiled in the storage slot 613.

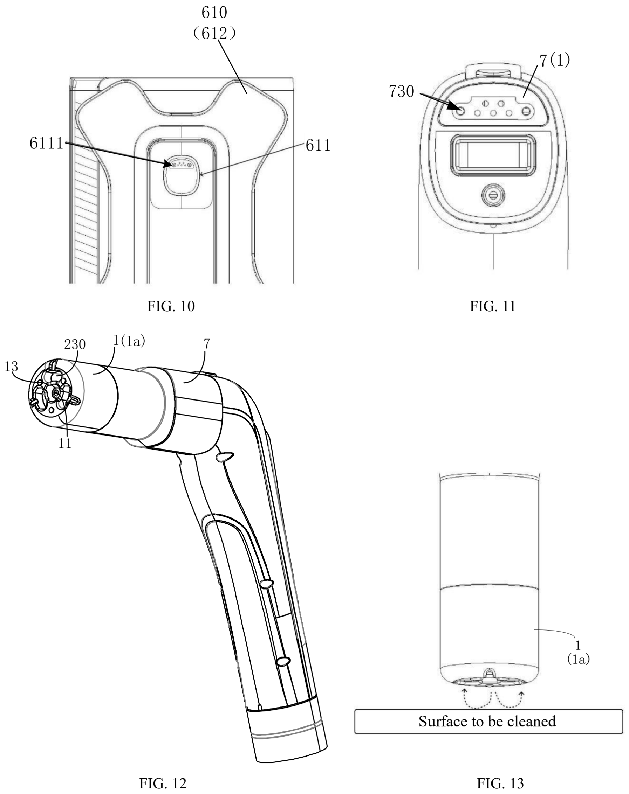

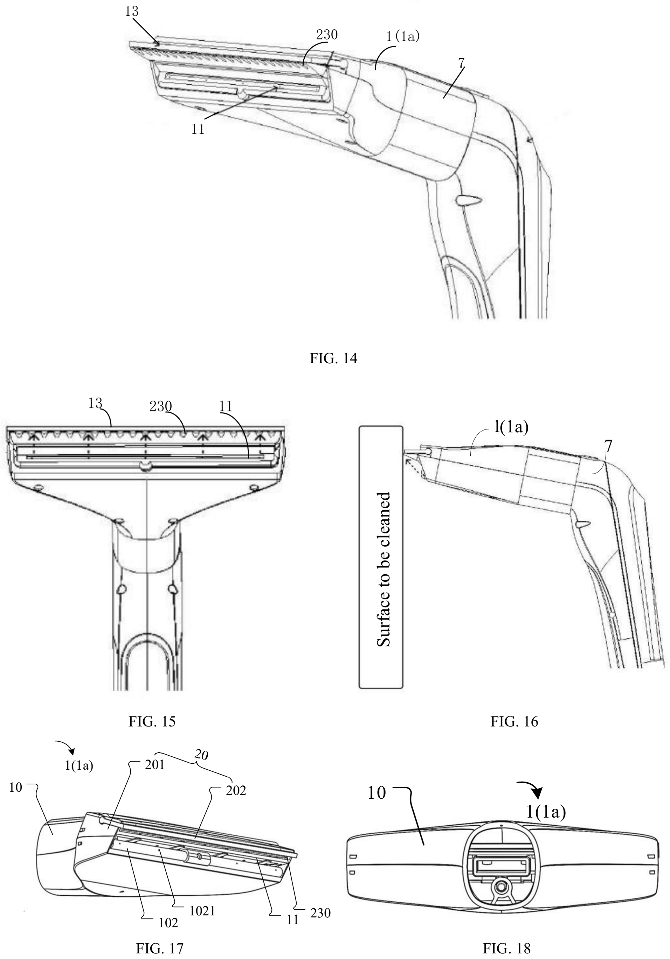

As shown in FIGS. 12 and 13, in an embodiment, the cleaning device includes at least one cleaning head 1a detachably connected to the handle 7. In other words, different types of cleaning heads 1a can be connected to the handle 7, such as the cleaning head 1a in the embodiment shown in FIG. 12, or the cleaning head 1a in the embodiment shown in FIG. 14, and understandably, other types of cleaning heads 1a, which will not be listed here. By connecting different types of cleaning heads 1a to the handle, corresponding usage scenarios can be matched. In some embodiments, the handle 7 is provided with a first collection portion 6111, and the cleaning head 1a is provided with a second marking portion (not shown in the figure). When the cleaning head 1a is connected to the handle 7, the first collection portion 6111 can identify the second marking portion, and the cleaning device enters a cleaning mode matching the cleaning head 1a. The second marking portion stores the type information of the cleaning head 1a. The first collection portion 6111 identifies the second marking portion to transmit a signal to the control unit of the cleaning device. The control unit can identify the type information of the cleaning head 1a according to the signal, and then adjust the cleaning mode of the cleaning device according to the type information, such as adjusting the magnitude of the suction force, the suction power, or the temperature of the sprayed cleaning fluid, to match the actual usage scenario.

It should be noted that when the first marking portion 730 in the above embodiment is provided on the main unit 6, and the first collection portion 6111 for identifying the first marking portion 730 is provided on the handle 7, the first collection portion 6111 for identifying the second marking portion here and the above-described first collection portion 6111 for identifying the first marking portion 730 may refer to the same component. That is, when the cleaning head 1a is connected to the handle 7, the first collection portion 6111 can identify the second marking portion, and when the handle 7 is connected to the first slot 611 of the main unit 6, the first collection portion 6111 can identify the first marking portion 730. Understandably, in other embodiments, the first collection portion for identifying the second marking portion and the above-described first collection portion 6111 for identifying the first marking portion 730 may also refer to different components. That is, at least two first collection portions 6111 are provided, at least one first collection portion 6111 is configured to identify the first marking portion 730, and at least one first collection portion is configured to identify the second marking portion.

The cleaning head 1a and the handle 7 may be connected through a threaded connection, snap connection, bolt connection, magnetic connection, or the like. For example, in the embodiment shown in FIG. 12, the cleaning head 1a and the handle 7 may be connected through a snap connection. For example, the cleaning head 1a is provided with a protruding elastic snap, and the handle 7 is provided with a clamping slot. When the cleaning head 1a is sleeved on the handle 7, the elastic snap is clamped in the clamping slot to realize the connection and fixation of the cleaning head 1a and the handle 7. The cleaning head 1a is provided with a spray port 11 and a negative pressure port 230 (also referred to as the suction port in the above embodiment) spaced apart. The spray port 11 is in communication with the outlet of the first cleaning channel 710, and the negative pressure port 230 is in communication with the inlet of the first dirt channel 720. In this way, the cleaning fluid supply unit sprays cleaning fluid to the surface to be cleaned through the spray port 11 of the cleaning head 1a to clean the stains on the surface to be cleaned. Negative pressure suction is generated on the surface to be cleaned through the negative pressure port 230, and the dirt and sewage generated during cleaning can be sucked into the sewage collection unit through the negative pressure port 230 under the negative pressure suction force, so as to absorb the dirt after cleaning.

As shown in FIGS. 12 and 13, in some embodiments, taking the cleaning head 1a as cylindrical as an example, the spray port 11 is located on the central axis of the cleaning head 1a, and a plurality of negative pressure ports 230 are provided and circumferentially arranged around the spray port 11. By circumferentially arranging the plurality of negative pressure ports 230 around the outer side of the spray port 11, the distribution of the negative pressure suction force on the surface to be cleaned can be relatively uniform, so that the cleaning fluid sprayed from the spray port 11 is subject to relatively uniform negative pressure suction force, which can improve the cleaning effect and make the cleaning process easier and more convenient. At the same time, it can also prevent the stains on the surface to be cleaned from being sprayed away by the cleaning fluid, making the cleaning more effective, and also making the structural layout of the entire cleaning head 1a more compact, adapting to various surfaces to be cleaned. In some embodiments, the negative pressure port 230 may be configured in an arc shape, such as a circle, an ellipse, or a waist shape. In other embodiments, the negative pressure port may be located on the central axis of the cleaning head, and a plurality of spray ports are provided and circumferentially arranged around the outer side of the negative pressure port, so that the distribution of the cleaning fluid on the surface to be cleaned is relatively uniform, which can improve the cleaning effect. As shown in FIGS. 14 to 16, in some embodiments, the spray port 11 may be arranged in a straight line, so that the flow rate and coverage area of the sprayed cleaning fluid are relatively large to better meet the cleaning needs. Understandably, the arrangement of the spray port 11 is not limited to this, and can be specifically set according to actual usage needs.

As shown in FIGS. 12-13, in an embodiment, the cleaning head 1a is provided with a scraper portion 13 protruding relative to the spray port 11. The scraper portion 13 is spaced apart from the spray port 11, and at least part of the scraper portion 13 is covered by the cleaning fluid sprayed from the spray port 11. By arranging the scraper portion 13 to protrude relative to the spray port 11 and the negative pressure port 230, the scraper portion 13 can be in scraping contact with the surface to be cleaned to play a physical cleaning role. By moving or rotating the scraper portion 13 back and forth, the stubborn stains on the surface to be cleaned can be more easily cleaned, so as to improve the cleaning effect on the surface to be cleaned. Meanwhile, after the cleaning fluid is sprayed to the surface to be cleaned, it bounces up, flows through the scraper portion 13, and then enters the negative pressure port 230, thereby being able to take away the stains on the scraper portion 13, so as to realize the self-cleaning of the scraper portion 13 and reduce the possibility that the stains on the scraper portion 13 affect the subsequent cleaning effect.

In an embodiment, the scraper portion 13 includes at least one of a scraper, a scraping blade, a roller brush, a bristle brush, a bump, a scouring pad, or a cleaning ball, which can adapt to various application scenarios, such as tableware cleaning, kitchen appliance cleaning, fabric cleaning, window cleaning, shoe cleaning, and floor cleaning. When the scraper portion 13 includes a scraper, a scraping blade, a bristle brush, or a roller brush, it can be moved back and forth or rolled to repeatedly make physical contact with the dirt during the cleaning process, thereby loosening the dirt. When the scraper portion 13 such as a scraper, a scraping blade, a bristle brush, or a roller brush is used for a long time, the scraper portion 13 can be detached from the cleaning head 1a, and only the consumables such as the scraper, the scraping blade, the bristle brush, or the roller brush needs to be replaced. Understandably, the cleaning head 1a connected with the scraper portion 13 such as a scraper, a scraping blade, a bristle brush, or a roller brush can also be entirely replaced from the cleaning device. When the scraper portion 13 is a scouring pad or a cleaning ball, if the scraper portion 13 is used for a long time, only the scouring pad or the cleaning ball needs to be replaced, thereby improving the convenience of replacement, improving the cleaning efficiency, and saving the replacement cost.

As shown in FIGS. 12-13, in an embodiment, the scraper portion 13 may be protruding contacts, and a plurality of protruding contacts may be provided and circumferentially arranged around the spray port 11. Providing a plurality of contacts can further improve the physical cleaning effect of the cleaning head 1a, which is more conducive to cleaning the stubborn stains on the surface to be cleaned. In some embodiments, the protruding contacts may be made of a flexible material, such as silica gel, rubber, or nylon contacts, which have a certain deformation capacity and can adapt to curved or rough surfaces, such as being applicable to clean fabric products.

As shown in FIGS. 14-16, in some embodiments, the scraper portion 13 may be a straight line-shaped scraping blade, which can be used for cleaning hard surfaces such as glass and countertops. The flow direction of the cleaning fluid sprayed from the spray port 11 forms an angle of 5 degrees to 30 degrees with the scraping blade. The cleaning fluid is sprayed to the boundary line between the surface to be cleaned and the scraping blade. The liquid scraped off by the scraping blade can be collected by the negative pressure port 230, and at the same time, the stains on the scraping blade can be taken away, thereby realizing the self-cleaning of the scraping blade. The number of scraping blades may be one or more. For example, in the embodiment shown in the figures, the number of scraping blades is two, which increases the scraping area and can provide a supporting effect for each other. In some embodiments, the negative pressure port 230 may be provided on one of the scraping blades, and the two scraping blades may be provided at a preset angle. A certain gap may be maintained between them to ensure smooth air circulation. One of the scraping blades may be a hard scraping blade, and the other may be a flexible scraping blade made of a high-temperature-resistant rubber material. Understandably, in other embodiments, only one scraping blade may be provided, which can be specifically set according to actual usage needs.

In an embodiment, the cleaning fluid includes at least one of water vapor, water, or a solution containing a cleaning agent, which can be selected by those skilled in the art according to actual needs. When water vapor is used as the cleaning fluid, the cleaning device further includes a steam generator (not shown in the figure), which converts clean water into high-temperature and high-pressure water vapor and sprays it to the surface to be cleaned through the spray port. In an embodiment, the steam generator may be a heater. By using water vapor as the cleaning fluid, while the water vapor is directly sprayed, the high temperature accompanying the water vapor can also accelerate the dissolution of stains, which can further improve the cleaning effect. When water or a solution containing a cleaning agent is used as the cleaning fluid, the spray pressure can be increased to improve the spray force, which has a better effect on cleaning large-volume dirt.

In an actual application scenario, the cleaning device may be a steam cleaner, a carpet cleaner, a floor washer, a cleaning robot, a vacuum cleaner, a high-pressure cleaner, or a medical disinfection and cleaning device. The cleaning fluid supply unit in the cleaning device provides cleaning fluid to the surface to be cleaned through the cleaning head to clean the stains on the surface to be cleaned, and the dirt after cleaning is sucked into the sewage collection unit through the negative pressure port under the negative pressure suction force generated by the sewage collection unit to realize the collection of dirt.

In related technologies, after the brush of the cleaning head of the cleaning device comes into contact with stains, it cannot be self-cleaned, and needs to be manually cleaned before the next cleaning, which greatly reduces the cleaning efficiency and leads to a poor user experience.

Referring to FIG. 17, the cleaning unit 1 in the cleaning device provided by an embodiment of the present application includes a cleaning head 1a. The cleaning head 1a includes a housing 10 and a cleaning assembly 20 (i.e., the scraper portion in the foregoing embodiment). The cleaning assembly 20 is configured to clean an object to be cleaned. A spray port 11 and a negative pressure port 230 (i.e., the suction port in the foregoing embodiment) are provided in the housing 10. In some embodiments, at least part of the cleaning assembly 20 is accommodated in the negative pressure port 230. With such an arrangement, when the cleaning head 1a is cleaning dirt, part of the dirt adhering to the cleaning head 1a can be sucked into the negative pressure port 230, so that partial self-cleaning of the cleaning assembly 20 can be realized. The cleaning fluid in this embodiment includes high-pressure water vapor.

In a first embodiment, at least part of the cleaning assembly 20 is accommodated in the negative pressure port 230. With such an arrangement, when the cleaning head 1a is cleaning dirt, part of the dirt adhering to the cleaning head 1a can be sucked into the negative pressure port 230, so that partial self-cleaning of the cleaning assembly 20 can be realized. The cleaning fluid in this embodiment includes high-pressure water vapor. Through experimental verification, it is concluded that the above design can make 60%-70% of the dirt on the cleaning assembly 20 be sucked into the negative pressure port 230, i.e., the cleaning head realizes self-cleaning to a certain extent, and also prolongs the single cleaning duration of the cleaning head to a certain extent.

In a second embodiment, the cleaning fluid sprayed from the spray port 11 is inclined to rinse a cleaning portion of the cleaning assembly, i.e., at least part of the cleaning assembly 20 is configured to be covered by the cleaning fluid sprayed from the spray port 11. With this configuration, the cleaning fluid sprayed from the spray port 11 can rinse off part of the dirt adhered to the cleaning assembly 20, i.e., partial self-cleaning of the cleaning assembly 20 can also be achieved. The cleaning fluid in this embodiment includes high-pressure steam, pressurized water, or pressurized cleaning solution. Experimental verification shows that the above design can rinse off 70%-80% of the dirt on the cleaning assembly 20, i.e., the cleaning head achieves self-cleaning to a certain extent, and also prolongs the single cleaning duration of the cleaning head to a certain extent.

As a third embodiment of the present application, in conjunction with FIG. 17, at least part of the cleaning assembly 20 is accommodated in the negative pressure port 230, and at the same time, at least part of the cleaning assembly 20 can be covered by the cleaning fluid sprayed from the spray port 11. It can be understood that the third embodiment of the present application integrates the first embodiment and the second embodiment. That is to say, when the cleaning head is cleaning dirt, part of the dirt on the cleaning assembly 20 is washed away by the cleaning fluid sprayed from the spray port 11, and part of the dirt is sucked into the negative pressure port 230. Moreover, the dirt washed off from the cleaning assembly 20 is also sucked into the negative pressure port 230. It can be seen that the self-cleaning effect of the cleaning head disclosed in this embodiment is far greater than that of the above two embodiments. Through experimental verification, the above design can make 98%-100% of the dirt on the cleaning assembly 20 be cleaned, that is, the cleaning head basically realizes complete self-cleaning, which greatly prolongs the single cleaning duration of the cleaning head, thereby improving the user's good experience. It should be noted that at least part of the cleaning assembly 20 being accommodated in the negative pressure port 230 includes at least two implementation forms. One implementation form is that the cleaning assembly 20 is a single scraping blade, and the single scraping blade is embedded in the negative pressure port 230. The other implementation form is that the cleaning assembly 20 includes double scraping blades, where one of the double scraping blades is embedded in the negative pressure port 230, or both scraping blades are embedded in the negative pressure port 230.

The specific structure of the cleaning assembly 20 is not limited in the embodiments of the present application, and any structure that meets the usage requirements of the present application is within the protection scope of the present application. As one of the embodiments, the cleaning assembly 20 disclosed in the embodiments of the present application includes a positioning portion and a cleaning portion 202. The positioning portion 201 is at least configured to fixedly connect the cleaning portion 202 to the housing 10, and the cleaning portion 202 is at least configured to clean the object to be cleaned. In the specific embodiments provided by the present application, at least part of the positioning portion 201 and the cleaning portion 202 can be accommodated in the negative pressure port 230. As an embodiment of the present application, in actual settings, the cleaning assembly 20 may be a scraper, and the positioning portion 201 and the cleaning portion 202 of the scraper may be integrally embedded in the negative pressure port 230.

As another embodiment of the present application, the positioning portions 201 may be configured to be fixed on opposite side walls of the negative pressure port 230. In actual settings, the positioning portion 201 may be provided on the upper and lower side walls of the negative pressure port 230, or on the left and right side walls of the negative pressure port 230, and at this time, the cleaning portion 202 is provided in the negative pressure port 230.

In the specific embodiments provided by the present application, at least part of the positioning portion 201 may also be designed to form the negative pressure port 230, and at least part of the cleaning portion 202 is accommodated in the negative pressure port 230. For example, in actual settings, there is no need to additionally provide a positioning portion for positioning the cleaning portion 202, and only the side plate forming the negative pressure port 230 is used as the positioning portion 201 to clamp the mounting end of the cleaning portion 202. In this case, the cleaning portion 202 can be provided in the negative pressure port 230. This design can reduce the number of parts of the entire cleaning head and effectively reduce the cost.

In the specific embodiments provided by the present application, in conjunction with FIGS. 17 and 18, the positioning portions 201 specifically include a first positioning side plate 2011, and the first positioning side plate 2011 forms a first side surface of the negative pressure port 230. In some embodiments, the positioning portions 201 include a second positioning side plate 2012, and the second positioning side plate 2012 forms a second side surface of the negative pressure port 230. In actual settings, the first positioning side plate 2011 and the second positioning side plate 2012 may be the upper and lower side plates forming the negative pressure port 230, or the left and right side plates forming the negative pressure port 230. The specific shape of the negative pressure port 230 is not limited in the embodiments of the present application. The negative pressure port 230 may be a polygon, a circle, an ellipse, or other structures, which are not specifically limited in the embodiments of the present application. It is worth noting that when the negative pressure port 230 is circular or elliptical, the first positioning side plate 2011 and the second positioning side plate 2012 can be adaptively configured as arcs. In the embodiments of the present application, the specific arrangement of the cleaning portion 202 in the negative pressure port 230 is not limited, and any structure that meets the usage requirements of the present application is within the protection scope of the present application, which can be selected by those skilled in the art according to actual needs.

As one of the embodiments, the cleaning portion 202 can be clamped in the negative pressure port 230. For example, a bump can be provided on the cleaning portion 202, and a groove can be provided on the side wall of the negative pressure port 230. The bump of the cleaning portion 202 is engaged with the groove on the side wall of the negative pressure port 230 to realize the clamping of the cleaning portion 202 and the negative pressure port 230. Understandably, other clamping methods can also be adopted, which will not be listed one by one here. As another embodiment, the cleaning portion 202 can also be screwed to the side wall of the negative pressure port 230. For example, bolt holes are respectively opened on the cleaning portion 202 and the side wall of the negative pressure port 230, and the cleaning portion 202 is fixed on the side wall of the negative pressure port 230 through bolts.

In the embodiments provided by the present application, the positioning portion 201 includes a fixing member. The cleaning portion 202 includes a mounting end and a cleaning end. The fixing member is accommodated in the negative pressure port 230. The mounting end is detachably connected to the fixing member. The cleaning end is configured to clean the object to be cleaned. The positioning portion 201 may be fixedly connected to the housing 10 or integrally formed with the housing 10. The specific structural form of the positioning portion 201 is not limited in the embodiments of the present application. The positioning portion 201 may be a positioning side plate, a positioning clamp plate, a positioning groove, a positioning bump, a positioning hole, or other structures, and any structure that meets the usage requirements of the present application is within the protection scope of the present application. In the specific embodiments provided by the present application, the positioning side plate, the positioning clamp plate, the positioning groove, the positioning bump, the positioning hole, or the like is accommodated in the negative pressure port 230, and the mounting end of the cleaning portion 202 is fixedly connected to the positioning portion 201, so that at least part of the cleaning assembly 20 is accommodated in the negative pressure port 230. The cleaning assembly 20 disclosed in the embodiments of the present application may include one or more than two. When there are more than two cleaning assemblies 20, the two cleaning assemblies 20 may be arranged side by side or at a preset angle. The cleaning portion 202 disclosed in the embodiments of the present application may include one or more than two. When there are more than two cleaning portions 202, the two cleaning portions 202 may be arranged side by side or at a preset angle.

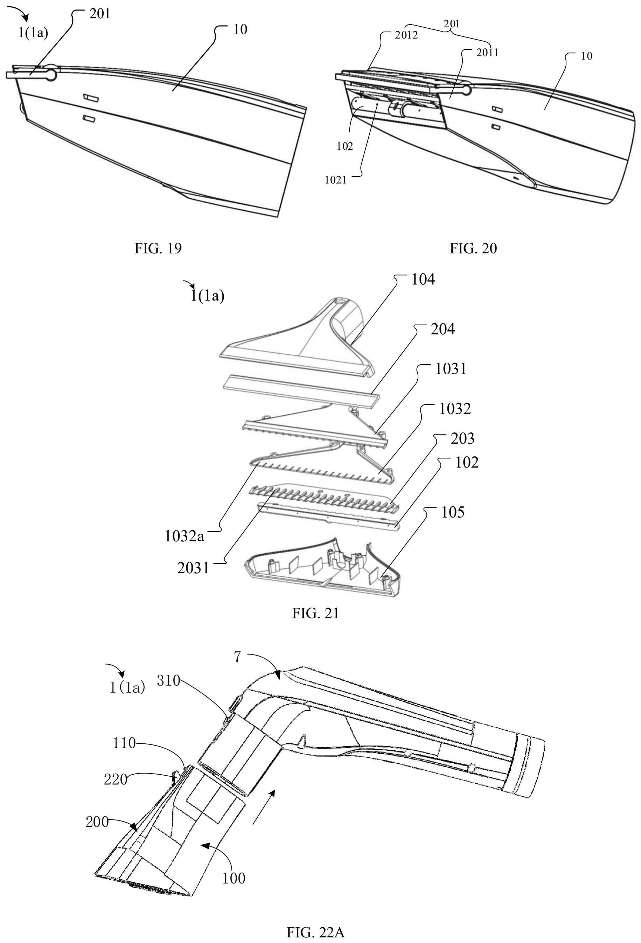

As a specific embodiment of the present application, in conjunction with FIG. 21, the cleaning assembly 20 disclosed in the present application includes a first cleaning portion 203 and a second cleaning portion 204. Part of the first cleaning portion 203 is covered by the cleaning fluid sprayed from the spray port. The first cleaning portion 203 and the second cleaning portion 204 are respectively provided on opposite sides of the negative pressure port 230. It should be noted that in the embodiments of the present application, the housing 10 includes an upper housing 104 and a lower housing 105. The upper housing 104 and the lower housing 105 are connected by snapping to form the housing 10. The negative pressure port 230 is formed by the cooperation of an upper shell 1031 of the negative pressure port and a lower shell 1032 of the negative pressure port.

The specific structures of the first cleaning portion 203 and the second cleaning portion 204 are not limited in the embodiments of the present application. The first cleaning portion 203 and the second cleaning portion 204 may be configured with the same structure or different structures. For example, both the first cleaning portion 203 and the second cleaning portion 204 may be a scraping blade or a roller brush. Alternatively, the first cleaning portion 203 may be configured as a bristle brush, and the second cleaning portion 204 may be configured as a scraper or a scraping blade. In addition, the first cleaning portion 203 may be configured as a flexible scraper, and the second cleaning portion 204 may be configured as a hard scraper, which will not be listed one by one here. When the cleaning portion includes the first cleaning portion 203 and the second cleaning portion 204, the first cleaning portion 203 and the second cleaning portion 204 are respectively provided on opposite sides of the negative pressure port 230, which specifically includes that the first cleaning portion 203 and the second cleaning portion 204 are respectively provided on two opposite outer side surfaces of the negative pressure port 230, the first cleaning portion 203 and the second cleaning portion 204 are respectively provided on two opposite inner side surfaces of the negative pressure port 230, the first cleaning portion 203 is provided on an inner side surface of the negative pressure port 230 and the second cleaning portion 204 is provided on an outer side surface of the negative pressure port 230, or the first cleaning portion 203 is provided on an outer side surface of the negative pressure port 230 and the second cleaning portion 204 is provided on an inner side surface of the negative pressure port 230.

As a further embodiment of the present application, the positioning portion 201 of the cleaning assembly 20 disclosed in the embodiments of the present application is provided with a fixing groove 1032a and/or a fixing rib. The mounting end of the cleaning portion of the cleaning assembly is provided with a mounting rib 2031 and/or a mounting groove. The fixing groove 1032a is clamped with the mounting rib 2031, and the fixing rib is clamped with the mounting groove.

As a specific embodiment of the present application, the positioning portion 201 may be a side plate of the negative pressure port 230, and the side plate is provided with a plurality of fixing grooves 1032a as fixing members. The side plate of the negative pressure port 230 is preferably integrally formed with the housing 10. The first cleaning portion 203 may be a flexible scraping blade provided on the outer side surface of the side plate. One end of the flexible scraping blade is provided with a mounting rib 2031 as a mounting end, and the mounting rib 2031 is clamped with the above fixing groove through interference fit to realize the fixed connection between the flexible scraping blade and the housing. The other end of the flexible scraping blade is configured to clean the surface of the object to be cleaned, serving as the cleaning end. The second cleaning portion 204 may be a hard scraping blade. The positioning portion 201 further includes a positioning groove formed on the housing 10, and the hard scraping blade is fixedly clamped in the positioning groove. It should be noted that the flexible scraping blade and the hard scraping blade may be arranged side by side or at a preset angle, which can be specifically set by those skilled in the art according to the specific conditions of the overall arrangement, space, structure, and the like.

As another specific embodiment of the present application, the positioning portion 201 may be a side plate of the negative pressure port 230, and the side plate is provided with a plurality of fixing ribs as fixing members. The side plate of the negative pressure port 230 is preferably integrally formed with the housing 10. The first cleaning portion 203 may be a flexible scraping blade provided on the inner side surface of the side plate. One end of the flexible scraping blade is provided with a mounting groove as a mounting end, and the fixing rib is clamped with the above mounting groove through interference fit to realize the fixed connection between the flexible scraper and the housing. The other end of the flexible scraping blade is configured to clean the surface of the object to be cleaned, serving as the cleaning end. The second cleaning portion 204 may be a hard scraping blade. The positioning portion 201 further includes a positioning groove formed on the housing 10, and the hard scraping blade is fixedly clamped in the positioning groove. It should be noted that the flexible scraping blade and the hard scraping blade may be arranged side by side or at a preset angle, which can be specifically set by those skilled in the art according to the specific conditions of the overall arrangement, space, structure, and the like.

As a further embodiment, in the cleaning head disclosed in the embodiments of the present application, the rib height of the mounting rib 2031 may be set to be greater than the groove edge height of the fixing groove 1032a. In this way, the first cleaning portion 203 and the second cleaning portion 204 can maintain a certain gap due to the support of the upper surface of the rib under negative pressure, thereby ensuring the air circulation of the negative pressure port 230. Understandably, in the cleaning head disclosed in the embodiments of the present application, the rib height of the fixing rib may also be set to be greater than the groove edge height of the mounting groove. At this time, the first cleaning portion is clamped in the negative pressure port. In this way, the first cleaning portion 203 and the second cleaning portion 204 can also maintain a certain gap under negative pressure, thereby ensuring the air circulation of the negative pressure port 230.

As a further embodiment, the mounting rib 2031 disclosed in the embodiments of the present application is provided with a T-shaped flange. The flanges on both sides of the T-shaped flange are clamped on the upper surface of the groove edge of the fixing groove 1032a, as shown in FIG. 21. The upper surface of the T-shaped flange abuts against the inner surface of the second cleaning portion 204 under high negative pressure, so that a certain gap is maintained between the inner surface of the first cleaning portion 203 and the inner surface of the second cleaning portion 204 to ensure the air circulation of the negative pressure port 230.

Similarly, the fixing rib disclosed in the embodiments of the present application is provided with a T-shaped flange. The flanges on both sides of the T-shaped flange are clamped on the upper surface of the groove edge of the mounting groove. The upper surface of the T-shaped flange abuts against the inner surface of the second cleaning portion under high negative pressure, so that a certain gap is maintained between the inner surface of the first cleaning portion 203 and the inner surface of the second cleaning portion 204 to ensure the air circulation of the negative pressure port 230. In addition, according to actual needs, as a specific embodiment of the present application, the inner surface of the first cleaning portion 203 and/or the inner surface of the second cleaning portion 204 may also be provided with supporting ribs, supporting points, supporting bumps, or the like, so that the first cleaning portion 203 and the second cleaning portion 204 maintain a certain gap under negative pressure, ensuring the air circulation of the negative pressure port 230. That is to say, supporting ribs, supporting points, supporting bumps, or the like may be provided only on the inner surface of the first cleaning portion 203, or only on the inner surface of the second cleaning portion 204, or on both the inner surface of the first cleaning portion 203 and the inner surface of the second cleaning portion 204. It should be explained that the above inner surfaces refer to the two surfaces of the first cleaning portion 203 and the second cleaning portion 204 that are close to each other under negative pressure.

As a specific embodiment of the present application, the first cleaning portion 203 is provided on the inner side surface or the outer side surface of the side plate of the negative pressure port 230 through the mounting rib 2031 or the mounting groove. The second cleaning portion 204 may be provided on the inner side surface or the outer side surface of the side plate of the negative pressure port 230 through the mounting rib or the mounting groove. The above fixing methods can refer to the above interference fit clamping, which will not be described in detail here. The fixing methods between the positioning side plate, the positioning clamp plate, the positioning groove, the positioning bump, or the positioning hole, and the mounting end of the cleaning portion also refer to the above clamping methods, which will not be described in detail here.

As a further embodiment of the present application, the cleaning end of the cleaning assembly 20 disclosed in the present application protrudes beyond the negative pressure port by at least 0.5mm-20mm. With such an arrangement, the cleaning end of the cleaning portion 202 can maintain a certain distance from the negative pressure port 230, thereby balancing the spray force of the spray port 11 and the suction force of the negative pressure port 230, and ensuring that the spray force of the spray port 11 is not affected by the negative pressure port 230. It should be explained that "protrudes beyond" means that the cleaning end of the cleaning assembly 20 extends toward the surface of the object to be cleaned and protrudes out of the cross-section of the negative pressure port 230. In the embodiments provided by the present application, the cleaning portion 202 includes at least one of a scraper, a scraping blade, a roller brush, a bristle brush, a scouring pad, or a cleaning ball.

As a first specific embodiment of the present application, the positioning portion 201 includes a first positioning side plate 2011 and a second positioning side plate 2012 forming the negative pressure port 230. The first positioning side plate 2011 and the second positioning side plate 2012 are oppositely provided. The cleaning portion 202 is a scraper. The mounting end of the scraper is clamped and fixed in the negative pressure port 230 through the above first positioning side plate 2011 and second positioning side plate 2012. The cleaning end of the scraper protrudes out of the negative pressure port 230 to clean the object to be cleaned.

As a further embodiment, the width of the scraper in the horizontal direction is preferably smaller than the width of the negative pressure port 230, so that the scraper is accommodated in the negative pressure port. With such an arrangement, air circulation is more convenient. As a second specific embodiment of the present application, the positioning portion 201 is a positioning buckle fixed on the housing 10. The cleaning portion 202 is a scraping blade. The scraping blade includes a mounting end and a cleaning end. In an embodiment, the mounting end is mounting plates provided on opposite sides of the cleaning end. The mounting plates are provided with positioning holes for engaging with the positioning buckles. The positioning buckles are engaged with the positioning holes to realize the installation of the cleaning portion 202. The cleaning end of the scraping blade is provided between the two positioning plates, and the cleaning end is arranged at the negative pressure port 230 to clean the object to be cleaned. As a further embodiment, the width of the scraping blade is preferably smaller than the width of the negative pressure port 230. With such an arrangement, air circulation is more convenient.

As a third specific embodiment of the present application, the positioning portion 201 is a first positioning side plate 2011 and a second positioning side plate 2012 oppositely provided to form the negative pressure port 230. The cleaning portion 202 includes a mounting end and a cleaning end. The mounting end is a mounting plate. The cleaning end includes a cleaning plate and a scouring pad provided on the cleaning plate. The mounting plate of the cleaning portion 202 is clamped and fixed in the negative pressure port 230 through the first positioning side plate 2011 and the second positioning side plate 2012. The cleaning plate and the scouring pad provided on the cleaning plate protrude out of the negative pressure port 230 to clean the object to be cleaned. As a further embodiment, the width of the cleaning plate is preferably smaller than the width of the negative pressure port 230. With such an arrangement, air circulation is more convenient.

As a fourth specific embodiment of the present application, the positioning portion 201 includes two positioning holes fixed on the housing 10. The cleaning portion 202 is a roller brush. The roller brush includes a mounting end and a cleaning end. The mounting end is a roller shaft passing through the cleaning end. The two ends of the roller shaft are connected to the two positioning holes in a one-to-one matching manner. The cleaning end protrudes out of the negative pressure port 230 to clean the object to be cleaned.

As a fifth specific embodiment of the present application, the positioning portion 201 includes a first positioning side plate 2011 and a second positioning side plate 2012 oppositely provided to form the negative pressure port 230. The cleaning portion 202 is a bristle brush. The bristle brush includes a mounting end and a cleaning end. The cleaning end is bonded to the mounting end. The mounting end is clamped and fixed in the negative pressure port 230 through the above first positioning side plate 2011 and second positioning side plate 2012. The cleaning end protrudes out of the negative pressure port 230 to clean the object to be cleaned.

As a sixth specific embodiment of the present application, the positioning portion 201 includes a first positioning side plate 2011 and a second positioning side plate 2012 oppositely provided to form the negative pressure port 230. The cleaning portion 202 includes a clamping plate and a cleaning ball. The clamping plate is clamped in the negative pressure port 230. A part of the cleaning ball is clamped by the clamping plate, and a part of the cleaning ball is used as a cleaning end to clean the object to be cleaned. When the cleaning portion 202 is a scraper or a scraping blade, it can be used to clean glass and the like. When the cleaning portion 202 is a roller brush or a bristle brush, it can be used to clean fabrics and the like. When the cleaning portion 202 is a scouring pad or a cleaning ball, it can be used to clean surfaces to be cleaned such as pots, bowls, and stoves. The specific number of the cleaning assemblies 20 is not limited in the embodiments of the present application. The cleaning assemblies 20 may be one, two, three, or more, and any structure that meets the usage requirements of the present application is within the protection scope of the present application. In the embodiments provided by the present application, the cleaning assemblies 20 are preferably more than two, and each cleaning assembly 20 is arranged in parallel. It is worth noting that the cleaning end of the cleaning assembly 20 may be a bristle brush, a bump, or the like, as long as it is parallel to the length direction of the negative pressure port 230.

In the embodiments provided by the present application, the spray port 11 is adjacently arranged to the negative pressure port 230. At least one cleaning fluid spray hole 1021 is provided in the spray port 11. The spray direction of the cleaning fluid spray hole 1021 is inclined toward the cleaning assembly 20. With such an arrangement, the cleaning fluid spray hole 1021 can directly spray at least part of the cleaning fluid to the cleaning assembly 20 to achieve the purpose of self-cleaning.

As a further embodiment, the spray port 11 disclosed in the embodiments of the present application includes at least one cleaning fluid spray tube 102. The cleaning fluid spray tube 102 is provided with a plurality of cleaning fluid spray holes 1021. The cleaning fluid spray tube 102 is provided along the length direction of the spray port 11. The cleaning fluid spray holes 1021 are preferably uniformly distributed on the cleaning fluid spray tube 102 along the length direction of the cleaning fluid spray tube 102. In this embodiment, the cleaning fluid is preferably high-pressure steam. At least one of the plurality of cleaning fluid spray holes 1021 sprays steam obliquely toward the cleaning end to make the steam spray to the cleaning end. The steam sprayed from the plurality of spray holes may be sprayed parallel to the cleaning end, or form a certain spray angle, with part sprayed toward the cleaning end and part sprayed toward the surface to be cleaned. The specific type of the cleaning fluid is not limited in the embodiments of the present application. The cleaning fluid includes at least one of water vapor, water, or a solution containing a cleaning agent, which can be selected by those skilled in the art according to actual needs.

It is worth noting that when water vapor is used as the cleaning fluid, while the water vapor is directly sprayed, the high temperature can also accelerate the dissolution of stains, which can further improve the cleaning effect. When water or a solution containing a cleaning agent is used as the cleaning fluid, the spray pressure can be increased to improve the spray force, which has a better effect on cleaning large-volume dirt.

In an embodiment, the cleaning head is detachably connected to the main unit, or at least part of the cleaning assembly 20 is detachably connected to the main unit.

In an embodiment, a liquid sensor for detecting liquid is provided on the pipeline connecting the liquid storage tank and the second water pump. A liquid level sensor for detecting the liquid level in the sewage tank is provided in the sewage tank. The liquid sensor and the liquid level sensor are respectively electrically connected to the controller. The controller can control the operation of the spray unit or the suction unit according to the liquid detected by the liquid level sensor or the liquid level detected by the liquid level sensor. Further, a steam generator is provided between the second water pump and the spray port. The steam generator converts the clean water pumped by the second water pump into high-temperature and high-pressure water vapor as the cleaning fluid, and sprays it to the surface of the object to be cleaned and the surface of the cleaning end of the cleaning assembly through the cleaning fluid spray holes, thereby realizing the self-cleaning of the cleaning assembly.

Cleaning devices are usually equipped with a handheld cleaning head, which can be configured to remove dust and clean the surface to be cleaned. The handheld cleaning head generally includes a spray head body and a dust cover detachably connected to the spray head body. A dust collection channel is formed between the spray head body and the dust cover. To ensure the smoothness of the dust collection channel, it is necessary to regularly remove the dust cover from the spray head body for cleaning. In related technologies, when the dust cover is removed, the spray head body is also separated from the handle. Therefore, when the dust cover is reinstalled later, it is necessary to reconnect the spray head body and the handle, which increases the complexity of subsequent operations and affects the assembly and disassembly efficiency. In view of this, the cleaning device provided by an embodiment of the present application can solve the above technical problems. The cleaning unit in the cleaning device includes a cleaning head, which will be described in detail below.

In conjunction with FIGS. 22A to 24 and 27 to 31, the cleaning unit 1 provided by an embodiment of the present application includes a cleaning head 1a. The cleaning head 1a includes a spray head body 100, a dust cover 200, and a handle 7. The spray head body 100 is provided with a first matching portion 120 and a first toggle portion 110. The dust cover 200 is provided with a second matching portion 210. The handle 7 is provided with a first clamping portion 310. When the first toggle portion 110 is in a locked position, the first toggle portion 110 is connected to the second matching portion 210, and the first clamping portion 310 can be sequentially connected to the first matching portion 120 and the second matching portion 210 to connect the spray head body 100 and the dust cover 200 to the handle 7. The first toggle portion 110 is configured to be operably toggled to move from the locked position to a first unlocked position. The first toggle portion 110 in the first unlocked position can press the first clamping portion 310 to disconnect the first clamping portion 310 from the second matching portion 210, while the first clamping portion 310 remains connected to the first matching portion 120.

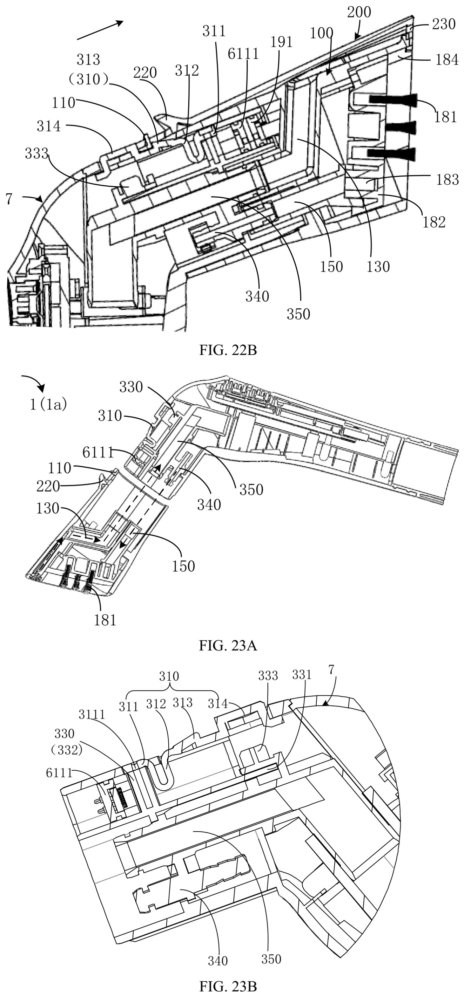

By providing the first toggle portion 110 on the spray head body 100, when the dust cover 200 needs to be removed, the first toggle portion 110 is toggled along the direction of the arrow shown in FIG. 22B, so that the first toggle portion 110 presses the first clamping portion 310. At this time, the dust cover 200 can be pushed along the direction of the arrow shown in FIG. 22B, and the dust cover 200 will act on the first toggle portion 110, thereby driving the first toggle portion 110 and the first clamping portion 310 to move downward along the direction perpendicular to the arrow, so that the first clamping portion 310 is disconnected from the second matching portion 210 on the dust cover 200, but remains connected to the first matching portion 120. That is, the handle 7 and the spray head body 100 are still in a connected state. In this way, there is no need to reconnect the handle 7 and the spray head body 100 after removing the dust cover 200, and the dust cover 200 can be directly assembled after cleaning, avoiding reconnecting the handle 7and the spray head body 100 after removing the dust cover 200, simplifying the operation process, reducing the complexity of subsequent operations, and improving the assembly and disassembly efficiency. At the same time, since there is no need to frequently connect the handle 7 and the spray head body 100 after removing the dust cover 200, the wear risk between the handle 7 and the spray head body 100 is significantly reduced, which helps to extend the service life of the handle 7 and the spray head body 100, thereby ensuring the use stability and reliability of the cleaning head. In other embodiments, the first toggle portion 110 may also be toggled along the direction of the arrow shown in FIG. 22B, so that the first toggle portion 110 rotates clockwise in the view shown in FIG. 22B, thereby pressing the first clamping portion 310 and driving the first clamping portion 310 to move downward, so that the first clamping portion 310 is separated from the second matching portion 210.

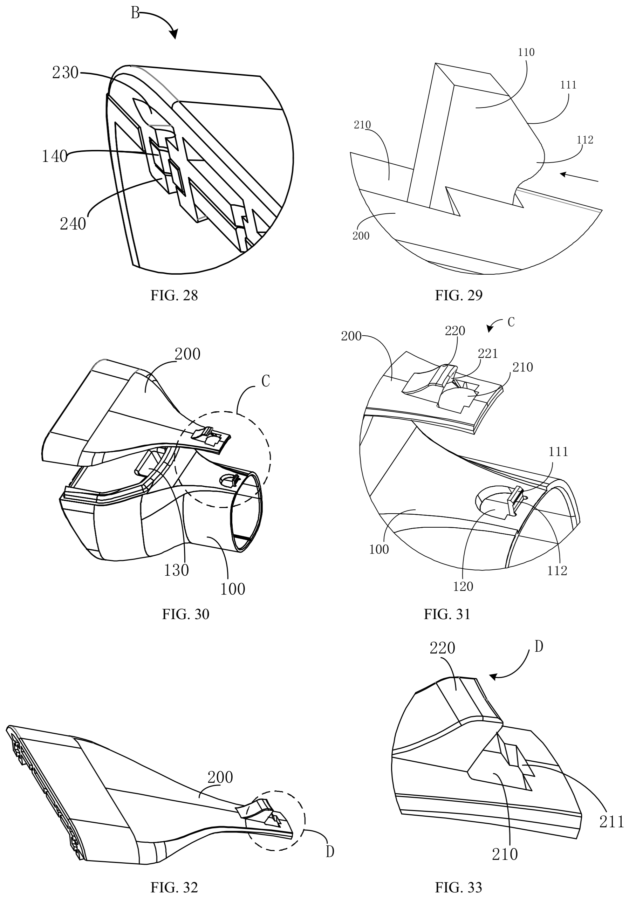

As shown in FIGS. 22B and 31, it can be understood that when the first toggle portion 110 is in the locked position, the first toggle portion 110 protrudes out of the outer surfaces of the dust cover 200 and the handle 7, which is convenient for the user to toggle the first toggle portion 110. In some embodiments, the first clamping portion 310 is provided with a protruding clamping block, and the first matching portion 120 and the second matching portion 210 may be clamping grooves for clamping with the clamping block. In some embodiments, the first clamping portion 310 may also be provided with an accommodating groove. When the spray head body 100 is connected to the handle 7, part of the first toggle portion 110 is located in the accommodating groove.

As shown in FIGS. 22B and 29 to 33, in an embodiment, the side wall of the second matching portion 210 is configured with a guiding inclined surface 211, and the first toggle portion 110 is configured with a matching inclined surface 111 for a sliding fit with the guiding inclined surface 211. In this way, when the dust cover 200 is pushed along the direction of the arrow shown in FIG. 22B, through the sliding fit between the guiding inclined surface 211 on the dust cover 200 and the matching inclined surface 111 of the first toggle portion 110, the movement of the dust cover 200 along the direction of the arrow can be converted into the downward movement of the first toggle portion 110 along the direction perpendicular to the arrow, so that the first toggle portion 110 drives the first clamping portion 310 to move downward, and the first clamping portion 310 disengages from the first matching portion 120. At the same time, when installing the dust cover 200, the installation direction of the dust cover 200 is opposite to the direction of the arrow shown in FIG. 22B. The movement of the dust cover 200 can be guided through the sliding fit between the guiding inclined surface 211 and the matching inclined surface 111, so that the first toggle portion 110 is inserted into the second matching portion 210, and the first clamping portion 310 is inserted into the second matching portion 210, thereby realizing the connection of the dust cover 200, the spray head body 100, and the handle 7.

As shown in FIG. 29, in some embodiments, the first toggle portion 110 is provided with a first limiting protrusion 112. When the first toggle portion 110 is in the locked position, the first limiting protrusion 112 prevents the first toggle portion 110 from detaching from the second matching portion 210. In this way, before removing the dust cover 200, the first toggle portion 110 needs to be toggled along the direction of the arrow shown in FIG. 29 to ensure the first toggle portion 110 in the unlocked position, that is, the first limiting protrusion 112 is no longer directly above the surface of the dust cover 200, and the first limiting protrusion 112 will not interfere with the movement of the dust cover 200, thereby facilitating the removal of the dust cover 200. That is to say, by providing the first limiting protrusion 112, the connection reliability between the first toggle portion 110 and the second matching portion 210, that is, the connection reliability between the spray head body 100 and the dust cover 200, can be improved, and the possibility of the dust cover 200 disassembling due to misoperation can be reduced.

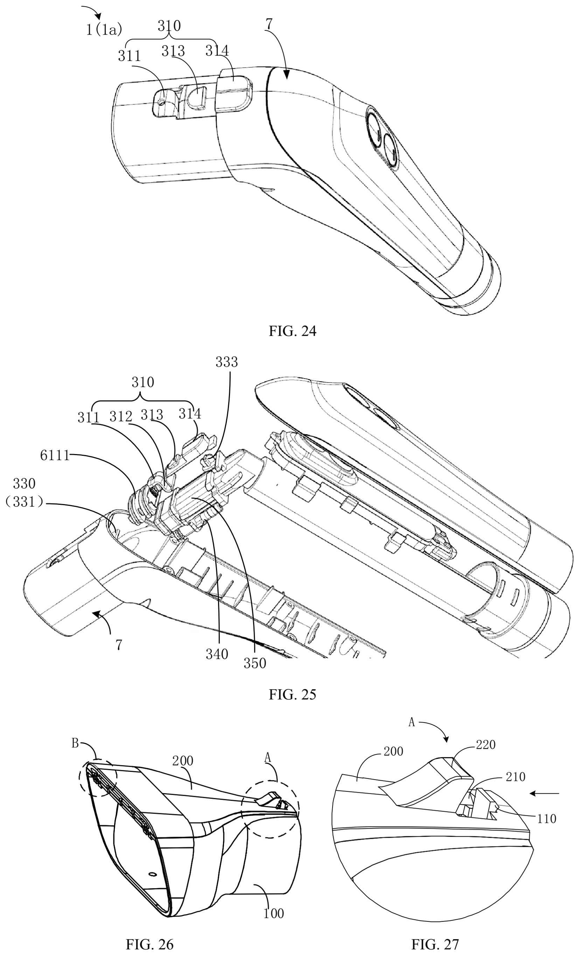

As shown in FIG. 27, in an embodiment, the outer surface of the dust cover 200 is configured with a protruding removal portion 220. When the first toggle portion 110 is in the first unlocked position, the removal portion 220 is configured to be operably pushed to disconnect the dust cover 200 from the spray head body 100. As shown in FIG. 27, the pushing direction of the removal portion 220 is indicated by an arrow. By providing the protruding removal portion 220 on the dust cover 200, a force application position is provided for the user, which is convenient for the user's fingers to act on the removal portion 220 to push the dust cover 200 to move, so that the first clamping portion 310 is separated from the second matching portion 210. That is, the disassembly operation of the dust cover 200 is convenient, and hand fatigue is reduced.

As shown in FIG. 27, in an embodiment, the removal portion 220 protrudes beyond the first toggle portion 110. With such a design, the removal portion 220 can play a certain shielding effect on the first toggle portion 110, preventing the risk of accidental detachment of the dust cover 200 caused by the user's misoperation of the first toggle portion 110. At the same time, it can facilitate the user to quickly and accurately distinguish the removal portion 220 and the first toggle portion 110, improving the disassembly efficiency.

As shown in FIG. 31, in some embodiments, the pushing surface 221 of the removal portion 220 is inclined relative to the outer surface of the dust cover 200. That is, the pushing surface 221 is an inclined surface. Through the inclined surface design, the user can be intuitively guided to apply force in the correct direction, reducing the possibility of misoperation, and the inclined surface design allows the user's fingers to be naturally placed on the removal portion 220, providing a more ergonomic operation angle. At the same time, the inclined surface provides a larger contact area, which can evenly disperse the pressure at the force application point, making the disassembly process more labor-saving.

As shown in FIG. 28, in an embodiment, one of the dust cover 200 and the spray head body 100 is configured with a positioning member 140, and the other is configured with a positioning hole 240 for clamping with the positioning member 140. For example, in the embodiment shown in the figure, the end of the spray head body 100 away from the handle 7 is provided with the positioning member 140, and the end of the dust cover 200 away from the handle 7 is provided with the positioning hole 240. Through the clamping fit between the positioning member 140 and the positioning hole 240, the connection effect between the dust cover 200 and the spray head body 100 is further enhanced, the stable connection between the two is ensured, and the use reliability of the cleaning device is improved. In other embodiments, the positions of the positioning member 140 and the positioning hole 240 can be swapped. It can be understood that the extending direction of the positioning member 140 and the positioning hole 240 is parallel to the disassembly direction of the dust cover 200.

In an embodiment, an elastic member (not shown in the figure) is connected between the handle 7 and the first clamping portion 310. It can be understood that when the first toggle portion 110 is in the locked position, that is, the first clamping portion 310 is not subjected to an external force, the elastic member is in a natural state. When the user acts on the first toggle portion 110 to disconnect the first clamping portion 310 from the second matching portion 210, the elastic member is in a deformed state. By arranging the elastic member, a reset clamping force is provided for the first clamping portion 310, so that the first clamping portion 310 can automatically reset after the external force is removed to connect to at least one of the first matching portion 120 or the second matching portion 210, ensuring the connection reliability of the handle 7, the spray head body 100, and the dust cover 200. In some embodiments, the elastic member may be a spring.

As shown in FIGS. 22B and 23B, in an embodiment, the first clamping portion 310 includes a fixing section 311, a clamping section 313, and an unlocking section 314. The fixing section 311 is connected to the handle 7, and the clamping section 313 is configured to connect to the first matching portion 120 and the second matching portion 210. One of the clamping section 313 and the unlocking section 314 is connected to the elastic member. In response to an unlocking operation of the unlocking section 314, the clamping section 313 can move to a second unlocked position to disconnect from the first matching portion 120. In the embodiment shown in the figures, the elastic member is connected to the unlocking section 314, that is, the elastic member is provided below the unlocking section 314. In other embodiments, the elastic member may also be connected to the clamping section 313, that is, the elastic member is provided below the clamping section 313. It can be understood that the position of the fixing section 311 relative to the handle 7 remains unchanged. By arranging the unlocking section 314, a force application position is provided for the user, which is convenient for the user to act on the unlocking section 314, so that the clamping section 313 can move downward to disengage from the first matching portion 120 to disconnect the spray head body 100 and the handle 7.

In some embodiments, when the user acts on the unlocking section 314 to move the clamping section 313 to the second unlocked position to disconnect from the first matching portion 120, the first toggle portion 110 may still be clamped in the second matching portion 210 of the dust cover 200, that is, the dust cover 200 and the spray head body 100 still have a certain connection effect. In this way, when disconnecting the spray head body 100 and the handle 7, the dust cover 200 and the spray head body 100 will not be separated and scattered, reducing the risk of damage caused by accidental falling of the dust cover 200 or the spray head body 100.

As shown in FIGS. 22B and 23B, in an embodiment, the clamping section 313 is located between the fixing section 311 and the unlocking section 314, and in response to a pressing operation of the unlocking section 314, the clamping section 313 can be disconnected from the first matching portion 120. That is to say, the clamping section 313 and the unlocking section 314 are located on the same side of the fixing section 311. In this way, when the user presses the unlocking section 314 downward, the clamping section 313 will be driven to move downward and separate from the first matching portion 120. If the first clamping portion 310 is regarded as a lever structure, the fixing section 311 corresponds to the fulcrum end of the lever structure, and the unlocking section 314 and the clamping section 313 correspond to the effort end and the load end, respectively. Since the clamping section 313 is located between the fixing section 311 and the unlocking section 314, that is, the load arm is shorter than the effort arm, the user only needs to apply a small acting force to the unlocking section 314 to generate a large output force on the clamping section 313, making the disassembly between the handle 7 and the spray head body 100 easier and reducing user fatigue. In other embodiments, the clamping section and the unlocking section may also be located on both sides of the fixing section. In this way, by lifting the unlocking section upward, the clamping section can be driven to move downward to disconnect from the first matching portion.

As shown in FIGS. 22B and 23B, in an embodiment, at least one of the handle 7 or the unlocking section 314 is provided with a first fixing portion 333, and the first fixing portion 333 is configured to fix the elastic member. In the embodiment shown in the drawings, both the handle 7 and the unlocking section 314 are provided with the first fixing portion 333. The first fixing portion 333 may be a protruding limiting column or a recessed limiting groove. For example, in the embodiment shown in the figures, the unlocking section 314 is provided with a limiting groove, and the handle 7 is provided with a limiting column. One end of the elastic member is accommodated in the limiting groove, and the other end is sleeved on the limiting column. By arranging the first fixing portion 333 to limit the elastic member, the deformation direction of the elastic member is effectively constrained, and the reliability of the direction of the reset force applied by the elastic member is further ensured. In other embodiments, the first fixing portion 333 may be provided only on one of the handle 7 and the unlocking section 314 to limit one end of the elastic member, and the other end of the elastic member may be welded to the other of the handle 7 and the unlocking section 314, which can be specifically set according to actual needs.

As shown in FIGS. 22B and 23B, in some embodiments, the clamping section 313 is located between the fixing section 311 and the unlocking section 314, and the first clamping portion 310 further includes a bending section 312 located between the fixing section 311 and the clamping section 313. The bending section 312 extends from the fixing section 311 in a direction close to the elastic member. The bending section 312 can provide a certain elastic deformation capacity, so that the clamping section 313 can perform fine-tuning of the position as needed during the insertion and extraction process to ensure a tight fit with the first matching portion 120 and the second matching portion 210. At the same time, the bending section 312 can also disperse the force applied to the clamping section 313 to avoid stress concentration. Further, since the bending section 312 provides better elasticity and recovery capacity, the clamping section 313 is not prone to permanent deformation or fracture during repeated use and has high fatigue resistance. For example, in the embodiment shown in the figures, the bending section 312 is U-shaped. The unlocking section 314 and the clamping section 313 are designed as protruding clamping blocks. The shape and size of the clamping blocks can be set according to actual needs. For example, the protruding height of the unlocking section 314 is greater than that of the clamping section 313, and an accommodating groove for accommodating the first toggle portion 110 is formed between the unlocking section 314 and the clamping section 313.

As shown in FIG. 23B, in some embodiments, the handle 7 is provided with a supporting structure 330 for supporting the first clamping portion 310. By providing additional supporting points for the first clamping portion 310 through the supporting structure 330, the risk of loosening caused by vibration or external force is reduced, ensuring that the connection between the first clamping portion 310 and the spray head body 100 and the dust cover 200 is tight. At the same time, the force received by the first clamping portion 310 can be more evenly distributed on the entire supporting structure 330, reducing local stress concentration, thereby reducing the risk of wear and fatigue damage.

As shown in FIG. 23B, in an embodiment, the supporting structure 330 includes a supporting plate 331 and a supporting column 332 protruding relative to the supporting plate 331. The above-described first fixing portion 333 provided on the handle 7 may be located on the supporting plate 331, and the above-described fixing section 311 may be connected to the supporting column 332. In some embodiments, at least one of the supporting column 332 or the fixing section 311 is configured with a connecting hole 3111, and the other is connected with a connecting member for plugging and matching with the connecting hole 3111. For example, in the embodiment shown in the figures, both the supporting column 332 and the fixing section 311 are configured with the connecting hole 3111, and the connecting member is inserted into the connecting holes 3111 of the two to realize the fixation of the supporting column 332 and the first clamping portion 310. For example, the connecting hole 3111 is a pin hole, and the connecting member is a pin. Alternatively, the connecting hole 3111 is a threaded hole, and the connecting member is a screw. In other embodiments, one of the supporting column 332 and the fixing section 311 may be configured with the connecting hole 3111, and the other may be configured with a connecting member to be plugged into the connecting hole 3111.

As shown in FIGS. 22B-25, in an embodiment, the spray head body 100 is provided with a second marking portion 191, and the handle 7 is provided with a first collection portion 6111 for identifying the second marking portion 191. As shown in FIGS. 22B and 23B, in an embodiment, one of the second marking portion 191 and the first collection portion 6111 is configured as a mating male connector, and the other is configured as a mating female connector for connecting with the mating male connector. For example, the second marking portion 191 is a mating male connector, and the first collection portion 6111 is a mating female connector. Understandably, the second marking portion 191 may be a mating female connector, and the first collection portion 6111 may be a mating male connector. In some embodiments, the mating male connector may include a pin, and the mating female connector may include a pin connection hole 3111. When the spray head body 100 is connected to the handle 7, the pin of the spray head body 100 is connected to the pin connection hole 3111 on the handle 7, and the information on the second marking portion 191 is read through the physical contact between the two to realize signal transmission.

In other embodiments, the second marking portion 191 may be a short-range communication module such as a two-dimensional code, NFC, RFID, or Bluetooth, and the first collection portion 6111 may be a reader or a receiver. For example, when the second marking portion 191 is a two-dimensional code, the first collection portion 6111 may use a camera or a scanner as a reader to read information and transmit signals. When the second marking portion 191 is NFC, the first collection portion 6111 may use a card reader as a reader. When the second marking portion 191 is RFID, the first collection portion 6111 may use an RFID reader as a reader. When the second marking portion 191 is Bluetooth, the first collection portion 6111 may use a Bluetooth receiver to read information and transmit signals.

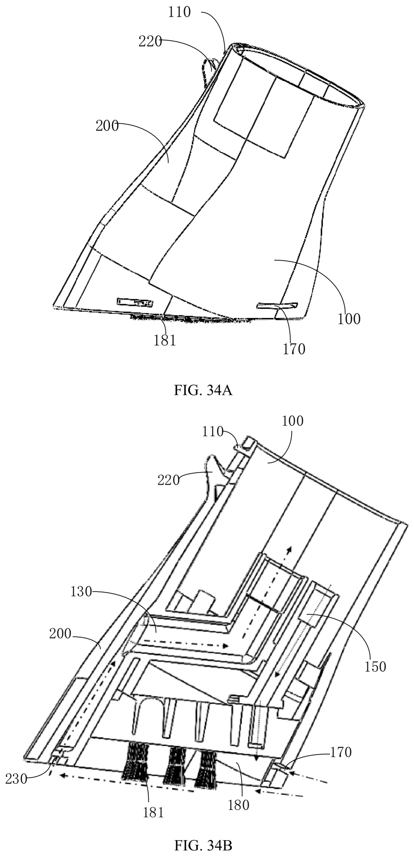

As shown in FIG. 22B or FIG. 34B, in an embodiment, the spray head body 100 is configured with a first dirt suction channel 130, and part of the first dirt suction channel 130 is inclined relative to the outer surface of the spray head body 100. By arranging part of the first dirt suction channel 130 to be inclined, the sharp turn of air in the channel can be reduced, avoiding unnecessary vibration and noise, and helping to reduce friction and turbulence during air flow. At the same time, it can use gravity to help some heavy particles slide down along the channel, making the inhaled air and particles pass more smoothly, reducing the possibility of particles accumulating in the channel. Further, it can also reduce the risk of particles that have been inhaled flowing back to the surface to be cleaned due to changes in air flow, preventing pollution of the surface to be cleaned and ensuring a more thorough cleaning effect. For example, in the embodiment shown in the drawings, the first dirt suction channel 130 is in an inclined L-shape.

As shown in FIG. 22B or FIG. 34B, in an embodiment, the dust cover 200 is configured with a negative pressure port 230 (also referred to as the suction port in the foregoing embodiment). After the spray head body 100 and the dust cover 200 are butted, a part of the first dirt suction channel 130 communicating with the negative pressure port 230 is formed between the two. The flow area of the negative pressure port 230 is smaller than that of the first dirt suction channel 130. When the gas flow rate is constant, the flow area is inversely proportional to the fluid velocity. By setting the flow area of the negative pressure port 230 to be smaller than that of the first dirt suction channel 130, the flow velocity at the negative pressure port 230 can be increased, that is, a stronger negative pressure zone can be formed at the negative pressure port 230, which helps to quickly suck in surrounding dust and particles and improve cleaning efficiency. At the same time, it can also reduce the sewage flowing back from the negative pressure port 230 to the surface to be cleaned, preventing pollution of the surface to be cleaned. In some embodiments, the flow area of the negative pressure port 230 is less than twenty percent of the flow area of the first dirt suction channel 130.

As shown in FIGS. 34A to 25, in an embodiment, the spray head body 100 has an opening 180, and an edge of the outer peripheral surface of the spray head body 100 close to the opening 180 is configured with an air inlet 170. In this way, air can enter the system from multiple directions, increasing the inlet area of the air flow, and facilitating the collection of surrounding dust and debris to the negative pressure port 230, expanding the cleaning range and preventing secondary pollution. It can also disperse the air flow pressure, reduce local resistance, and thereby improve the overall suction efficiency.

As shown in FIGS. 34B-36, in some embodiments, the spray head body 100 has an opening 180, and a brush holder 182 is provided in the opening 180. A plurality of clusters of brush bristles 181 are installed on the brush holder 182. The brush bristles 181 pass through the opening 180 in a direction away from the handle 7, and a protruding length of the brush bristles 181 is 1mm-3mm. In some embodiments, a plurality of brush mounting holes 185 are provided on the brush holder 182, and brush bristles 181 are installed on each brush mounting hole 185. The protruding brush bristles 181 can better contact and penetrate into the texture or gaps of the surface to be cleaned, such as carpet fibers and floor joints, and remove stubborn stains and dust through physical friction to improve the cleaning effect. Moreover, the brush bristles 181 can help disperse the air flow, making it more evenly cover the entire cleaning area and improving cleaning efficiency. Further, the protruding brush bristles 181 allow for a certain gap between the negative pressure port 230 and the surface to be cleaned, that is, a certain air intake volume exists. Therefore, an additional air inlet 170 can be opened or no additional air inlet 170 can be provided, according to actual needs.

In some embodiments, the length of the brush bristles 181 protruding relative to the spray head body 100 may be 1mm. In some embodiments, the length of the brush bristles 181 protruding relative to the spray head body 100 may be 2.5mm. In some embodiments, the length of the brush bristles 181 protruding relative to the spray head body 100 may be 3mm. In other embodiments, the length of the brush bristles 181 protruding relative to the spray head body 100 may also be other values, which will not be listed here. Brush bristles 181 of different lengths can adapt to surfaces to be cleaned of different shapes and materials, ensuring effective cleaning on various surfaces to be cleaned without damaging their appearance.

As shown in FIGS. 22B and 34B-36, in some embodiments, the spray head body 100 has an opening 180, and a brush holder 182 is provided in the opening 180. The brush holder 182 is provided with brush bristles 181, steam spray holes 183 (i.e., cleaning fluid spray holes), and a dirt suction port 184 (also referred to as the suction port in the foregoing embodiment, and the suction port may include a negative pressure port and a dirt suction port). The steam spray holes 183 are directly provided on the brush holder 182, that is, on the spray head body 100. Therefore, after the spray head body 100 is connected to the handle 7, only the sealing effect between a first steam channel 150 and a second steam channel 340 needs to be considered, which can reduce the number of sealing positions and sealing costs. High-temperature steam is released through the steam spray holes 183 to soften stains, and the brush bristles 181 located behind it further decompose and remove stubborn stains through physical friction. After that, the dirt suction port 184 can quickly suck loose dirt into the cleaning device, forming an effective cleaning cycle. By arranging a special dirt suction port 184 on the spray head body 100, combined with the negative pressure port 230 on the dust cover 200, suction can be generated at different positions, so that the cleaning device can simultaneously suck dirt from multiple directions, ensuring more comprehensive cleaning coverage. It can also make the air flow more evenly distributed in the cleaning area, avoiding over-cleaning or surface damage in certain areas due to excessive concentration of air flow.

As shown in FIGS. 22B and 34B-36, it can be understood that the steam spray holes 183 are in communication with the first steam channel 150 of the spray head body 100, and the dirt suction port 184 is in communication with the first dirt suction channel 130 of the spray head body 100. When the spray head body 100 is in a connected state with the handle 7, the first steam channel 150 is in communication with the second steam channel 340 of the handle 7 (also referred to as the first cleaning channel in the foregoing embodiment). The first dirt suction channel 130 is in communication with the second dirt suction channel 350 of the handle 7 (also referred to as the first dirt channel in the foregoing embodiment). In this way, the cleaning fluid provided by the liquid spraying unit in the cleaning device can sequentially pass through the second steam channel 340 and the first steam channel 150, and then be sprayed to the surface to be cleaned through the steam spray holes 183. The dirt after cleaning enters the first dirt suction channel 130 through the negative pressure port 230 and the dirt suction port 184 under the negative pressure suction force, and then enters the sewage collection unit of the cleaning device through the second dirt suction channel 350. The flow area of the dirt suction port 184 is smaller than the fluid area of the first dirt suction channel 130. The small flow area of the dirt suction port 184 can reduce the risk of sewage flowing back to the surface to be cleaned, preventing pollution of fabric surfaces. At the same time, for particularly dirty or difficult-to-clean areas, the dirt suction port 184 with a small flow area can provide stronger local suction to help more effectively remove stubborn stains or large pieces of garbage.

As shown in FIGS. 22B and 34B-36, in some embodiments, the brush bristles 181 are located between the steam spray holes 183 and the dirt suction port 184. By arranging the brush bristles 181 between the steam spray holes 183 and the dirt suction port 184, the brush bristles 181 can help guide the steam sprayed from the steam spray holes 183 to a specific area, ensuring that the cleaning agent can directly act on the area to be cleaned. At the same time, after the cleaning fluid is sprayed to the surface to be cleaned, it flows through the brush bristles 181 and then enters the dirt suction port 184, thereby being able to take away the stains on the brush bristles 181, so as to realize the self-cleaning of the brush bristles 181, reduce the possibility that the stains on the brush bristles 181 affect the subsequent cleaning effect. Also, the brush bristles 181 can help accelerate water evaporation after steam cleaning and speed up the drying speed.

Conventional cleaning devices that can realize various cleaning functions have many assembly parts and cleaning components, which not only occupy space, but also require the user to preset the cleaning scenario on the main unit, select a suitable cleaning head for installation, and then select the working mode before starting cleaning, resulting in a cumbersome use process. Moreover, since the cleaning scenario and the cleaning head are both selected and set manually, when the installed cleaning head does not match the set cleaning scenario, the device will work with inappropriate cleaning parameters, which not only affects the cleaning effect, but also affects the performance and service life of the cleaning device.

In view of this, the present application provides a cleaning control method applied to a control unit of a cleaning device. The cleaning device may be the cleaning device described in any of the foregoing embodiments, and the control unit may be detachably connected to any cleaning head through a handle. The method includes that the control unit, in response to a connection with any cleaning head, acquires type information of the connected cleaning head; in response to a cleaning mode selection instruction, determines a target mode; and determines cleaning parameters according to the type information of the cleaning head and the target mode, and performs a cleaning operation. The cleaning mode refers to the target flow rate and target power corresponding to different cleaning heads in the cleaning mode. In the present application, only the corresponding cleaning head needs to be replaced in different cleaning scenarios to automatically identify the type of the cleaning head, and required cleaning parameters are automatically matched based on the type of the cleaning head and the working mode selected by the user to perform cleaning in different scenarios. Therefore, there is no need for the user to additionally set the cleaning scenario, which reduces the steps of the user manually selecting the cleaning mode, not only simplifies the use process, but also avoids the problems of affecting the cleaning effect and the performance and service life of the cleaning device due to the mismatch between the cleaning head installed by the user and the set cleaning scenario, thereby ensuring the cleaning effect and improving the performance and service life of the cleaning device.

In an embodiment, the method may include the following steps. In a step 102, in response to a connection with any cleaning head, type information of the connected cleaning head is acquired. The cleaning head is a specific cleaning component for cleaning the object to be cleaned. In this embodiment, different types of cleaning heads can be configured to clean objects in different scenarios, so that the cleaning device can realize multiple cleaning functions. The types of cleaning heads may include, but are not limited to, a steam fabric cleaning head, a steam window cleaning head, a tableware cleaning head, a kitchen stove cleaning head, a kitchen appliance (such as oven, microwave oven, refrigerator, etc.) cleaning head, a shoe cleaning head, a clothing cleaning head, a floor cleaning head, a bathroom cleaning head, a car cleaning head, etc. To facilitate the replacement of different types of cleaning heads to clean objects in different scenarios, the control unit of the cleaning device in this embodiment can be detachably connected to any cleaning head. In this embodiment, when any cleaning head is detachably connected to the control unit, the control unit can respond to the connection with any cleaning head and acquire the type information of the connected cleaning head based on the connection to perform cleaning control through subsequent steps.

In a step 104, in response to a cleaning mode selection instruction, a target mode is determined. The cleaning mode of the cleaning device may include multiple types, such as a steam cleaning mode and a vacuum drying mode. In the steam cleaning mode, the cleaning fluid generating device and the vacuum recovery device work simultaneously. In the vacuum drying mode, the cleaning fluid generating device does not work, and the vacuum recovery device works. In this embodiment, the user can select different modes according to actual needs, so that switching between the cleaning mode and the vacuum drying mode can be realized to perform cleaning operation in different modes. Based on this, the control unit can also respond to the user's cleaning mode selection instruction and determine the target mode. The target mode refers to the specific mode selected by the user for final cleaning, such as the steam cleaning mode or the vacuum drying mode.

In a step 106, cleaning parameters are determined according to the type information of the cleaning head and the target mode, and a cleaning operation is performed. he cleaning parameters may be specific parameter configurations of the cleaning device during the cleaning operation. The cleaning parameters include, but are not limited to, a cleaning temperature, a throughput, a power, etc. It can be understood that for the same type of cleaning head, the cleaning parameters in different cleaning modes may be different, or, for different types of cleaning heads, the cleaning parameters in the same cleaning mode may also be different. Therefore, in this embodiment, the control unit can determine the matched cleaning parameters according to the type information of the cleaning head and the determined target mode acquired in the above steps, and then perform the cleaning operation.

In the above cleaning control method, the control unit acquires the type information of the connected cleaning head in response to the connection with any cleaning head, determines the target mode in response to the cleaning mode selection instruction, and thus determines the cleaning parameters according to the type information of the cleaning head and the target mode, and performs the cleaning operation. By only replacing the corresponding cleaning head in different cleaning scenarios, the type of the cleaning head can be automatically identified, and the required cleaning parameters can be automatically matched based on the type of the cleaning head and the cleaning mode selected by the user to perform cleaning in different scenarios. Therefore, there is no need for the user to additionally set the cleaning scenario, which reduces the steps of the user manually selecting the cleaning mode, not only simplifies the use process, but also avoids the problems of affecting the cleaning effect and the performance and service life of the cleaning device due to the mismatch between the cleaning head installed by the user and the set cleaning scenario, thereby ensuring the cleaning effect and improving the performance and service life of the cleaning device.

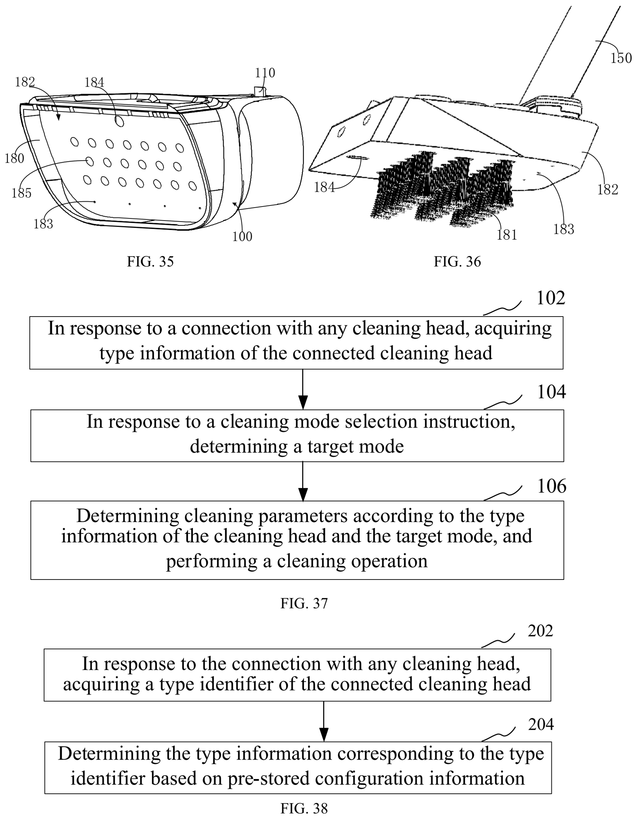

In an embodiment, each cleaning head may have a corresponding type identifier. Then, as shown in FIG. 38, in the step 102, in response to the connection with any cleaning head, acquiring the type information of the connected cleaning head may specifically include:

In a step 202, in response to the connection with any cleaning head, a type identifier of the connected cleaning head is acquired. The type identifier may be a unique mark or symbol used to characterize the type of the cleaning head. Since each cleaning head may have a corresponding type identifier, when the control unit is connected to any cleaning head, the type identifier of the connected cleaning head can be acquired. The control unit can respond to the physical connection with any cleaning head and establish a communicative connection with the corresponding cleaning head, thereby acquiring the type identifier of the connected cleaning head based on the communicative connection. The communicative connection method may include at least one of a radio frequency communication, an optical identification communication, or a serial communication.

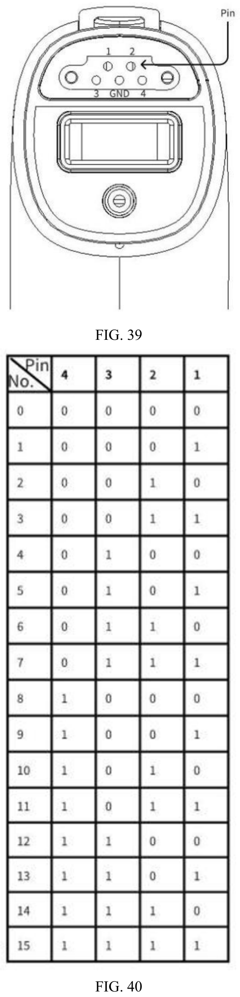

In one scenario, taking pin-based serial communication as the communicative connection method as an example, the control unit may have male pins, and the cleaning head may have female pins. The arrangement of the female pins of different types of cleaning heads are different, that is, different arrangements of the female pins are used to characterize different type identifiers. As shown in FIG. 39, taking the male pins and the female pins each including 5 as an example, one male pin and one female pin are used for grounding, and different arrangements and combinations of the other four female pins of the cleaning head can characterize different type identifiers. As shown in FIG. 40, for example, for the arrangement "0001" of the female pins on a certain cleaning head (where "0" indicates that the corresponding pin is at a low level, and "1" indicates that the corresponding pin is at a high level), it characterizes the specific type identifier of the corresponding cleaning head, such as "Type 1", which is used to uniquely determine the type of the cleaning head, such as a fabric cleaning head or a tableware cleaning head.

Then, when any cleaning head is physically connected to the control unit (for example, the female pin of a certain cleaning head is mated with the male pin of the control unit), the control unit can respond to the physical connection and establish a serial communicative connection with the corresponding cleaning head based on the connected pins. Moreover, since the pins of the cleaning head have different arrangement modes, and different arrangement modes characterize different type identifiers, the control unit can also determine the type identifier of the connected cleaning head based on the different arrangement modes of the pins of the connected cleaning head and the corresponding serial communication.

In another scenario, taking NFC (Near Field Communication)-based radio frequency communication as the communicative connection method as an example, the control unit can generate a radio frequency field for NFC communication, and the cleaning head may have an NFC tag for recording the corresponding type identifier. The type identifiers recorded by the NFC tags on different types of cleaning heads are different. Therefore, when any cleaning head is physically connected to the control unit (for example, a certain cleaning head is connected to the control unit based on a snap-fit manner), the control unit can respond to the physical connection and establish NFC communication with the corresponding connected cleaning head, such as generating a radio frequency field for NFC communication. Then, the connected cleaning head can transmit the type identifier recorded by the NFC tag to the control unit based on the radio frequency field, so that the control unit can acquire the type identifier of the connected cleaning head.

In a step 204, the type information corresponding to the type identifier is determined based on pre-stored configuration information. The configuration information may include a mapping relationship between the type identifier and the type information of the cleaning head, for example, the mapping relationship between the type identifier "Type 1" and the type information "Fabric cleaning head", the mapping relationship between the type identifier "Type 2" and the type information "Tableware cleaning head", etc. Therefore, the control unit can determine, based on the type identifier of the cleaning head determined above, the type information corresponding to the type identifier in the pre-stored configuration information, thereby obtaining the type information of the cleaning head.

In this embodiment, by automatically identifying the type identifier of the connected cleaning head and determining the type information corresponding to the type identifier based on the pre-stored configuration information, the automatic identification of the type of the cleaning head is realized, which not only simplifies the user's operation process and improves the convenience of use, but also avoids the situation that the cleaning effect is affected due to the mismatch between the cleaning head installed by the user and the set cleaning scenario, thus ensuring the cleaning effect.

In an embodiment, the configuration information may further include cleaning parameters corresponding to different modes under the type information. Then, in the step 106, determining the cleaning parameters according to the type information of the cleaning head and the target mode may specifically include searching for the cleaning parameters matching the type information of the cleaning head and the target mode in the configuration information. Since the configuration information stores the mapping relationship between the type identifier and the type information of the cleaning head, as well as the cleaning parameters corresponding to different modes under the type information, after the control unit acquires the type information of the connected cleaning head and the target mode selected by the user, it can search for the cleaning parameters matching the type information of the cleaning head and the target mode in the configuration information, and then perform the cleaning operation based on the found cleaning parameters. This embodiment can automatically match appropriate cleaning parameters according to the identified type information of the connected cleaning head and the cleaning mode selected by the user, thereby avoiding the risk caused by the mismatch between the cleaning parameters and the type of the cleaning head due to manual selection of the target mode, and further ensuring the cleaning effect.

In an embodiment, the above method may further include receiving an update instruction for the configuration information, and updating the configuration information according to the update instruction. The update instruction may be an instruction or command for modifying or updating the configuration information. For example, during the upgrade and iteration of the product, if certain types of cleaning heads are no longer applicable and need to be eliminated, an update instruction for deleting the corresponding cleaning head type identifier can be sent to the control unit, thereby deleting the mapping relationship related to the type identifier of the corresponding cleaning head in the configuration information. If during the upgrade and iteration of the product, certain types of cleaning heads are added, or the cleaning parameters are adjusted, etc., in order to enable the cleaning device to adapt to the newly added cleaning heads or new cleaning parameters, an update instruction for adding or modifying the type identifier of the corresponding cleaning head and its related configuration (such as adding the mapping relationship between the type identifier and the type information of the new cleaning head, and the cleaning parameters corresponding to different modes under the type information, etc.) can be sent to the control unit, thereby adding or modifying the corresponding configuration in the configuration information. To improve the expandability of the cleaning device and the cleaning coverage of the cleaning device.

In an embodiment, after acquiring the type information of the connected cleaning head, the above method may further include prompting the user with the type information of the cleaning head. Specifically, the control unit may display the type information of the cleaning head based on a corresponding display interface, or broadcast the type information of the cleaning head through a voice broadcast to prompt the user with the type information of the cleaning head. This embodiment prompts the user with the type information of the cleaning head, so that the user can understand the type of the cleaning head currently used in real time and avoid the situation of incorrect use.

In an embodiment, after determining the target mode, the above method may further include prompting the user with the target mode. Specifically, the control unit may display the target mode based on the corresponding display interface, or broadcast the target mode through a voice broadcast to prompt the user with the currently used target mode. This embodiment prompts the user with the target mode, so that the user can understand the currently used target mode in real time and avoid the situation of incorrect mode use.

In an embodiment, the above method may further include issuing an abnormal prompt when an abnormality of the cleaning device is detected. The abnormality includes, but is not limited to, a lack of water in the clean water tank, a full sewage tank, device tilting, components not in place, and other situations that affect the normal operation of the cleaning device. Specifically, during the operation of the cleaning device, the control unit can monitor the state of the cleaning device in real time and issue an abnormal prompt when an abnormal state is detected. In this embodiment, the abnormal prompt may display abnormal prompt information based on a corresponding display interface, prompt the abnormality through a status indicator light (for example, the indicator light is off or green when the device is working normally, and the indicator light is on or red when an abnormality is detected), or broadcast the abnormal prompt through a voice broadcast to prompt the user with the abnormal situation of the device. This embodiment prompts the user with the abnormal situation of the device, so that the user can understand the use state of the device in real time and promptly perform troubleshooting, thereby avoiding the impact of device abnormality on the cleaning effect.

In an embodiment, each cleaning head may have a corresponding type identifier, and the type identifier may be further provided with type information and cleaning parameters corresponding to different modes. Then, the above method may further include: in response to the connection with any cleaning head, establishing a communicative connection with any cleaning head, and acquiring the type information in the type identifier of the connected cleaning head and the cleaning parameters corresponding to different modes; and in response to a cleaning mode selection instruction, determining a target mode and the corresponding cleaning parameters, and performing a cleaning operation. In this embodiment, in order to improve the efficiency of the control unit in searching for matching cleaning parameters in a large amount of configuration information and reduce the cost of the control unit in storing a large amount of configuration information, the configuration information may not be stored in the control unit, but the configuration information such as the type information of the cleaning head and the cleaning parameters corresponding to different modes may be carried in the type identifier corresponding to the cleaning head. Further, when the control unit is physically connected to any cleaning head, it can establish a communicative connection with the cleaning head and acquire the type information in the type identifier of the connected cleaning head and the cleaning parameters corresponding to different modes. After acquiring the target mode selected by the user, the control unit can quickly determine the cleaning parameters corresponding to the target mode based on the data acquired from the connected cleaning head and perform the cleaning operation. It not only reduces the cost of the control unit in storing a large amount of configuration information, but also improves the efficiency of the control unit in searching for matching cleaning parameters in a large amount of configuration information.

It should be understood that although the various steps in the flowcharts involved in the above embodiments are sequentially displayed according to the arrows, these steps are not necessarily executed sequentially in the order indicated by the arrows. Unless explicitly stated in this document, the execution of these steps is not strictly limited in order, and these steps can be executed in other orders. Moreover, at least part of the steps in the flowcharts involved in the above embodiments may include multiple steps or stages, which are not necessarily executed at the same time, but can be executed at different times. The execution order of these steps or stages is not necessarily sequential, but can be rotated or alternately executed with at least part of the steps or stages in other steps or other stages.

Based on the same inventive concept, the embodiment of the present application further provides a cleaning control handle for implementing the above-described cleaning control method. The solution for solving the problem provided by the cleaning control handle is similar to the solution described in the above method. Therefore, the specific limitations in one or more embodiments of the cleaning control handle provided below can refer to the limitations on the cleaning control method above, and will not be repeated here.

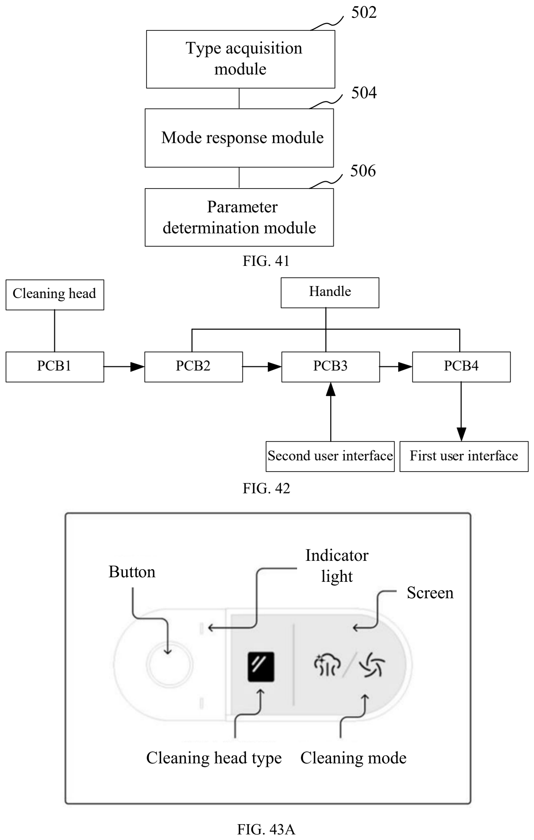

In an embodiment, as shown in FIG. 41, a cleaning control handle is provided, including a type acquisition module 502, a mode response module 504, and a parameter determination module 506. The type acquisition module 502 is configured to acquire type information of a connected cleaning head when connected to the cleaning head. The mode response module 504 is configured to respond to a cleaning mode selection instruction and determine a target mode. The parameter determination module 506 is configured to determine cleaning parameters according to the type information of the cleaning head and the target mode and perform a cleaning operation. In one scenario, the parameter determination module 506 may also be integrated with the mode response module 504 to simplify the hardware structure of the cleaning control handle.

In an embodiment, the cleaning head has a corresponding type identifier. The type acquisition module includes an acquisition unit configured to acquire the type identifier of the connected cleaning head in response to the connection with any cleaning head, and a determination unit configured to determine the type information corresponding to the type identifier based on pre-stored configuration information, where the configuration information includes a mapping relationship between the type identifier and the type information of the cleaning head.

In an embodiment, the acquisition unit is further configured to, in response to the connection with any cleaning head, establish a communicative connection with the cleaning head, and acquire the type identifier of the connected cleaning head. The communicative connection method includes at least one of a radio frequency communication, an optical identification communication, or a serial communication. In an embodiment, the configuration information further includes cleaning parameters corresponding to different modes under the type information. The determination unit is further configured to search for the cleaning parameters matching the type information of the cleaning head and the target mode in the configuration information.

In an embodiment, each cleaning head has a corresponding type identifier, and the type identifier is provided with type information and cleaning parameters corresponding to different modes. The parameter determination module is further configured to: in response to the connection with any cleaning head, establish a communicative connection with the cleaning head, and acquire the type information in the type identifier of the connected cleaning head and the cleaning parameters corresponding to different modes; and in response to a cleaning mode selection instruction, determine the target mode and the corresponding cleaning parameters, and perform a cleaning operation. In an embodiment, the cleaning control handle further includes a configuration update module configured to receive an update instruction for the configuration information and update the configuration information according to the update instruction. In an embodiment, the cleaning control handle further includes a prompt module configured to prompt the user with the type information and/or target mode of the cleaning head, or issue an abnormal prompt when an abnormality is detected.

Each module in the cleaning control handle can be integrated on a control board or distributed on different control boards, and each module can be fully or partially implemented through software, hardware, and combinations thereof. Each of the above modules can be embedded in or independent of the processor in a computer device in the form of hardware, or stored in a memory in the computer device in the form of software, so that the processor can call and execute the operations corresponding to each of the above modules.

Based on the same inventive concept, embodiments of the present application further provide a cleaning head. The solution for solving the problem provided by the cleaning head is similar to the solution described in the above method, and will not be repeated here. In an embodiment, a cleaning head is provided. The cleaning head is configured with a type identifier, which is used to establish a communicative connection with the cleaning device and to feed back the type information of the cleaning head. In an embodiment, the type identifier may also be provided with type information and cleaning parameters corresponding to different modes to feed back the type information of the cleaning head and the cleaning parameters corresponding to different modes to the cleaning device.

Based on the same inventive concept, the embodiment of the present application further provides a cleaning device. The solution for solving the problem provided by the cleaning device is similar to the solution described in the above method. Therefore, the specific limitations in one or more embodiments of the cleaning device provided below can refer to the limitations on the cleaning control method above, and will not be repeated here.

In an embodiment, a cleaning device is provided. The cleaning device includes the cleaning control handle as shown in FIG. 41 and multiple cleaning heads as described above, and the cleaning control handle is detachably connected to any cleaning head.

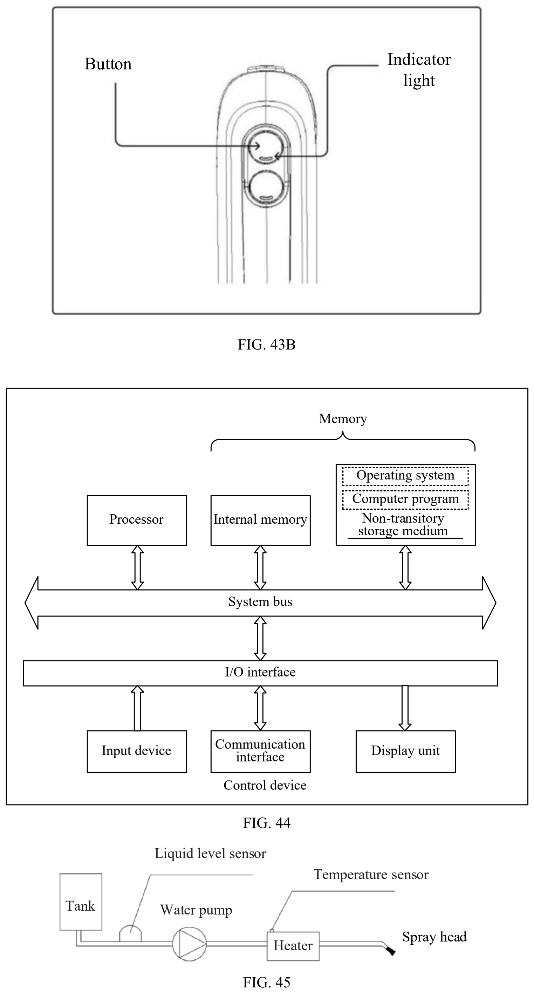

Specifically, as shown in FIG. 42, the cleaning device of the present application is further described below. The cleaning device includes a cleaning head for moving on the surface of the object to be cleaned to clean the object to be cleaned. The cleaning head is configured with a type identifier, for example, a passive cleaning head identification PCB board 1 carrying pins. The cleaning control handle is connected to the cleaning head through a detachable interface, and may include a type acquisition module (such as an active cleaning head identification PCB board 2 carrying pins), a mode response module (such as a handle control PCB 3), and a parameter determination module (such as a main control PCB 4 storing configuration information). The PCB board 1, 2 with mating pins has at least two pins, one of which is grounded, and the other forms a signal path to transmit the type information of the cleaning head. A cleaning system is included, including a cleaning fluid generating device and a vacuum recovery device. User interfaces are provided, which may include a first user interface and a second user interface. The first user interface is shown in FIG. 43A for mode prompting, such as displaying the type of the cleaning head and the cleaning mode of the cleaning device. The second user interface is located on the handle, as shown in FIG. 43B, and may include a cleaning mode input button and a status indicator light. After the cleaning head is connected to the handle, the first user interface will automatically display the type information corresponding to the cleaning head. Specifically, the PCB board 1 and the PCB board 2 are mated through male and female pins, the active cleaning head identification PCB board 2 is connected to the handle control PCB 3 through wires, and the handle control PCB 3 can acquire the type information of the cleaning head through the mated PCB boards 1, 2, and then transmit the identified signal to the main control PCB 4. The main control PCB 4 will display the type information of the cleaning head on the first user interface. The first user interface may also be optionally equipped with an indicator light for displaying abnormal states of the device, such as prompts for a lack of water in the clean water tank, a full sewage tank, device tilting, a handle not in place, and other abnormalities.

After the user selects a cleaning mode (such as selecting the steam cleaning mode or the vacuum drying mode) through the second user interface, the corresponding indicator light in the second user interface is always on to prompt the selected target mode, and the handle control PCB 3 transmits the target mode signal to the main control PCB 4. The main control PCB 4 then displays the target mode on the first user interface. Moreover, the main control PCB 4 will automatically match the cleaning parameters according to the type information of the cleaning head and the target mode, and perform the cleaning operation, such as spraying, suctioning, scraping, etc. For example, for a fabric cleaning head, if the target mode is the steam cleaning mode, the main control PCB 4 can search for cleaning parameters such as cleaning temperature, throughput, and power that match the fabric cleaning head and the steam cleaning mode. The main control PCB 4 may also be provided with an IOT (Internet of Things) module to update the configuration information of the cleaning head through communication modes such as WIFI/Bluetooth. It can be understood that the functions of the PCB board 2, PCB board 3, and PCB board 4 can also be integrated on a single PCB to simplify the design and maintenance of the device.

Based on the same inventive concept, embodiments of the present application further provide a cleaning system. The solution for solving the problem provided by the cleaning system is similar to the solution described in the above method. Therefore, the specific limitations in one or more embodiments of the cleaning system provided below can refer to the limitations on the cleaning control method above, and will not be repeated here.

In an embodiment, the cleaning system may include the cleaning device as shown in FIG. 42 and at least one terminal device. The terminal device is connected to the cleaning device through wired or wireless communication. Specifically, the cleaning device and/or the terminal device are configured to display a human-machine interaction interface, acquire an interaction instruction for the cleaning device through the human-machine interaction interface, and control the working mode of the cleaning device based on the interaction instruction. The human-machine interaction interface is further configured to display the type information of the cleaning head of the cleaning device, or display the target mode of the cleaning device, or issue an abnormality prompt for the cleaning device. In an embodiment, the terminal device may be a mobile terminal, or a device terminal for comprehensively controlling the cleaning head and the handle (such as a device loaded with the corresponding functions of the PCB board 4), which is not limited in this embodiment.

In an embodiment, a control device is provided, and its internal structure diagram may be as shown in FIG. 44. The control device includes a processor, a memory, an input/output interface, a communication interface, a display unit, and an input device. The processor, the memory, and the input/output interface are connected through a system bus, and the communication interface, the display unit, and the input device are connected to the system bus through the input/output interface. The processor of the control device is configured to provide computing and control capabilities. The memory of the control device includes a non-transitory storage medium and an internal memory. The non-transitory storage medium stores an operating system and a computer program. The internal memory provides an environment for the operation of the operating system and the computer program in the non-transitory storage medium. The input/output interface of the control device is configured to exchange information between the processor and external devices. The communication interface of the control device is configured to communicate with external components in a wired or wireless manner. The wireless manner can be realized through WIFI, mobile cellular network, Near Field Communication (NFC), or other technologies. The computer program is executed by the processor to implement a cleaning control method. The display unit of the control device is configured to form a visually visible image, which can be a display screen, a projection device, or a virtual reality imaging device. The display screen can be a liquid crystal display screen or an electronic ink display screen. The input device of the control device can be a touch layer covered on the display screen, or buttons, a trackball, or a touchpad set on the shell of the control device, or an external keyboard, touchpad, or mouse.

Those skilled in the art can understand that the structure shown in FIG. 44 is only a block diagram of a part of the structure related to the solution of the present application, and does not constitute a limitation on the control device to which the solution of the present application is applied. In an embodiment, the control device may include more or fewer components than those shown in the figure, or combine certain components, or have different component arrangements.

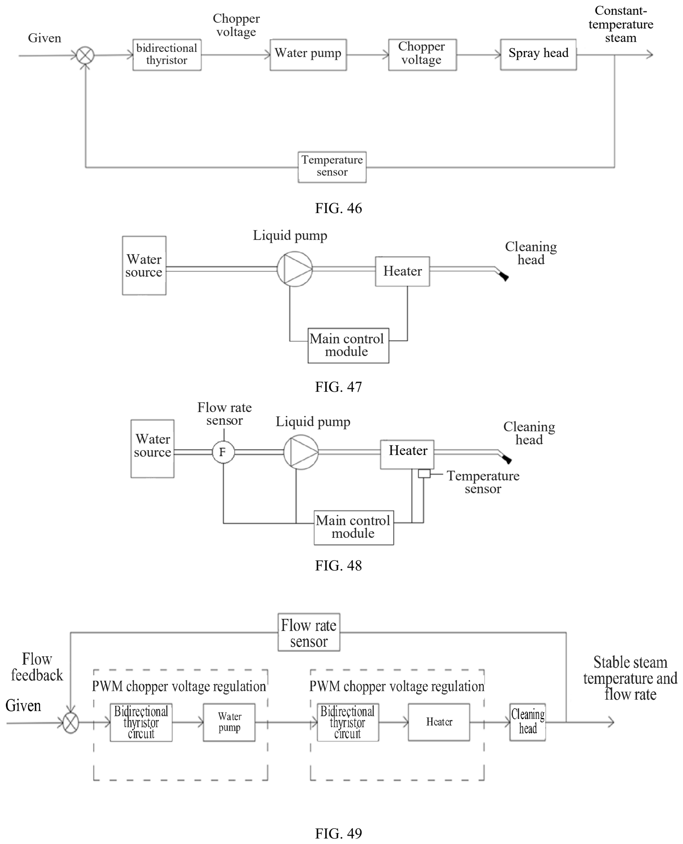

A steam cleaner is a device that uses high-temperature and high-pressure steam to clean the surface of the object to be cleaned. The structure and cleaning control process of a conventional steam cleaner are shown in FIGS. 45 and 46. The conventional steam control method has the problem of unstable steam flow rate or temperature, which limits the applications of the steam cleaner. Moreover, since the heater operates at full power throughout the process, the power consumption is high, resulting in serious waste of resources.

In view of this, the present application provides a control method applied to the above cleaning device. As shown in FIG. 47, the cleaning device may include a steam cleaner. The cleaning device includes a liquid pump (also referred to as the second water pump in the foregoing embodiment), a heater, a cleaning head, and a control unit. The liquid pump, the heater, and the cleaning head are sequentially connected through pipelines, and the control unit is communicatively connected to the liquid pump and the heater. Based on different cleaning scenarios, different water flow rate values and heating power of the heater are set, the flow rate and pressure of the steam pipeline are kept stable by setting the water flow rate value, and the heater is operated at a fixed power value by setting the heating power. Under the fixed water flow rate and heating power, the steam flow rate and temperature can quickly reach dynamic balance and remain stable for a long time, thereby achieving the best cleaning effect. The liquid pump is configured to inject the cleaning fluid from the water source, such as water, into the heater through a pipeline. The water source may be a liquid storage tank provided in the cleaning device (such as a steam cleaner), or other water storage devices provided outside the cleaning device and connected to the water inlet of the liquid pump through a pipeline. The heater may specifically be a steam generator, which is configured to heat the injected water to generate steam and output the steam through the connected cleaning head. The cleaning head is a specific cleaning component for cleaning the object to be cleaned, and the steam is output through the cleaning head to clean the object to be cleaned.

The control unit is configured to respond to the identified cleaning scenario, acquire a target flow rate and a target power corresponding to the cleaning scenario, control the liquid pump to inject the cleaning fluid, such as water, into the heater according to the target flow rate, and control the heater to heat the injected water with the target power to output the cleaning steam for the target cleaning scenario. The cleaning scenario may be a specific scenario where the cleaning device is currently applied. For example, it may be the category of the object to be cleaned currently needing to be cleaned, such as clothes, curtains, tableware, kitchen utensils, floors, small household appliances, etc. The cleaning scenario may also be the category of the cleaning head currently installed on the cleaning device, such as a fabric cleaning head, a window cleaning head, a tableware cleaning head, a kitchen stove cleaning head, a kitchen appliance (such as oven, microwave oven, refrigerator, etc.) cleaning head, a shoe cleaning head, a clothing cleaning head, a floor cleaning head, a bathroom cleaning head, a car cleaning head, etc.

The target flow rate refers to a specific flow rate value for controlling the liquid pump to inject water into the heater in a certain cleaning scenario. The target power refers to a specific power value for controlling the heater to operate in a certain cleaning scenario. Since the required steam flow rate and temperature may be different for different cleaning scenarios, the control unit can acquire the target flow rate and target power corresponding to the cleaning scenario by responding to the identified cleaning scenario, control the liquid pump to inject the water from the water source into the heater according to the target flow rate, and control the heater to heat the injected water with the target power. As such, the cleaning device works under the fixed target flow rate and target power, so that the steam flow rate and temperature can quickly reach dynamic balance and remain stable for a long time, so as to achieve the best cleaning effect.

In an embodiment, in the process where the control unit controls the liquid pump to inject the water from the water source into the heater according to the target flow rate, open-loop power modulation can be performed the liquid pump according to the target flow rate, so that the liquid pump injects water into the heater at the target flow rate based on the power modulation. The power modulation essentially adjusts the input power of the liquid pump, thereby changing its rotational speed or working cycle, and finally controlling the water flow rate. Specifically, the power modulation may include at least one of Pulse Width Modulation (PWM for short) or Pulse Frequency Modulation (PFM for short). PWM is a method of controlling output voltage or power by adjusting the pulse width of the signal. Its basic principle is to use binary signals (high level or low level) to control switching elements (such as transistors or MOSFETs), which are switched between on and off at a high rate. When the switch is in the on state, the load receives power. When the switch is in the off state, the load is disconnected from the power supply. By adjusting the ratio of the switch on-time to the total cycle time (i.e., duty cycle), the average voltage or power loaded on the load can be effectively controlled. The larger the duty cycle, the higher the average voltage, the faster the liquid pump speed, and the larger the water flow rate. In an ideal linear case, the water flow rate is positively correlated with the duty cycle. Therefore, the corresponding relationship between the target flow rate and the duty cycle in different cleaning scenarios can be preset, so that the duty cycle of the liquid pump can be adjusted based on the corresponding relationship, and the liquid pump can quickly reach the target flow rate based on the modulated duty cycle. PFM changes the frequency of the pulse signal (the number of pulses per unit time) and keeps the width of a single pulse fixed to adjust the total energy transmitted per unit time. Generally, the higher the frequency, the greater the energy input, leading to an increase in the liquid pump's rotational speed or duty cycle, and thus a larger water flow rate. Generally, under a fixed pulse width, the water flow rate is positively correlated with the pulse frequency. Therefore, the corresponding relationship between the target flow rate and the pulse frequency in different cleaning scenarios can be preset, so that the pulse frequency of the liquid pump can be adjusted based on the corresponding relationship, and the liquid pump can quickly reach the target flow rate based on the modulated pulse frequency, thereby achieving rapid response. Since the above control method is not affected by the lag of the temperature measurement of a temperature sensor and whether the sensor is accurately installed at a fixed position of the heater, nor by the individual differences of heaters, the stability of the output steam flow can be ensured simply by adjusting the frequency of the liquid pump based on the target flow rate. Therefore, compared with the conventional control method through the temperature sensor, it can improve the stability of the output steam flow rate.

In one scenario, as shown in FIG. 48, the above cleaning device may further include a flow sensor, which may be provided at the water inlet of the liquid pump and connected to the control unit. Specifically, a flow sensor is a device configured to measure the flow rate or volume of a fluid (liquid or gas) in a pipeline. For example, the flow sensor may include, but is not limited to, a differential pressure flow sensor, a turbine flow sensor, an electromagnetic flow sensor, an ultrasonic flow sensor, etc. Then, in the process where the control unit controls the liquid pump to inject the cleaning fluid (such as water) from the water source into the heater according to the target flow rate, the real-time flow rate at the water inlet of the liquid pump can also be acquired through the flow sensor, the difference between the real-time flow rate and the target flow rate is calculated, and then the liquid pump is subjected to closed-loop power modulation based on the calculated difference, so that the liquid pump injects the cleaning fluid into the heater at the target flow rate based on the power modulation. The power modulation may adopt at least one of the above PWM and PFM, which will not be repeated in this embodiment. The difference is that this embodiment can perform closed-loop modulation control on the liquid pump based on the difference between the real-time flow rate collected by the flow sensor and the target flow rate, so that the actual flow rate gradually approaches the target flow rate, and the accuracy of flow rate control is improved.

In an embodiment, in the process where the control unit controls the heater to heat the injected cleaning fluid with the target power to output the cleaning steam for the target cleaning scenario, the heater can also be subjected to power modulation based on the target power, so that the heater operates at the target power and outputs the cleaning steam for the target cleaning scenario. The power modulation of the heater may also adopt at least one of the above PWM and PFM, which may be modulated in an open-loop manner or a closed-loop manner, which is not limited in this embodiment. The modulation process in an embodiment is similar to the above modulation process of the liquid pump, which will not be repeated in this embodiment. The above control method adjusts the heater to a fixed power by identifying the target power of the cleaning scenario, thereby ensuring the stability of the output steam temperature and enabling rapid response. Compared with the full-load operation in the conventional technology, it can also save electric energy and reduce power consumption. Then, after the control unit acquires the target flow rate and target power corresponding to the cleaning scenario, it can also respond to a cleaning instruction for the object to be cleaned, control the heater to operate to preheat the heater, and acquire the preheating temperature of the heater through the temperature sensor provided on the heater. When the preheating temperature reaches a set temperature threshold, the control unit controls the liquid pump to inject the cleaning fluid from the water source into the heater according to the target flow rate. The cleaning instruction may be an instruction or command for controlling the cleaning device to start working. It may specifically be a voice command or an instruction sent through a switch button provided on the cleaning device. The temperature threshold may be a preset target value of the preheating temperature. In this embodiment, by providing a temperature sensor on the heater, the preheating temperature of the heater is detected in real time during the preheating of the heater, and when the preheating temperature reaches the set temperature threshold, the liquid pump is controlled to inject the cleaning fluid from the water source into the heater according to the target flow rate. This embodiment enables the heater, internal pipelines and other components to quickly raise the temperature through a preheating mechanism, thereby ensuring efficient and stable operation of the device, and also helping to protect the device and reduce use costs.

In an embodiment, the process of the cleaning device identifying the cleaning scenario may include: responding to an identification instruction for the object to be cleaned, the identification instruction carrying a category of the object to be cleaned; and determining a corresponding cleaning scenario according to the category of the object to be cleaned. The identification instruction may be an instruction or command for instructing the cleaning device to identify the cleaning scenario before the cleaning device performs the cleaning task. It may specifically be a voice command, or a related instruction sent through a switch button provided on the cleaning device. In this embodiment, the instruction may carry the category of the object to be cleaned. For example, taking the identification instruction as a voice command, the category of the object to be cleaned, such as clothes, curtains, tableware, kitchen utensils, floors, small household appliances, etc., can be carried in the voice command, so that the corresponding cleaning scenario can be quickly determined based on the identification instruction. For example, taking the identification instruction as a related instruction sent through a switch button provided on the cleaning device, different switch buttons can be set for different categories of the object to be cleaned, or different operation modes of the same switch button can correspond to different categories of the object to be cleaned. Thus, the corresponding cleaning scenario can be identified based on different switch buttons or different operation modes of the same switch button, so as to realize identification of different cleaning scenarios flexibly.

In an implementation, the category identification component may be an image acquisition component. Driven by the identification instruction, the image acquisition component can collect the image of the object to be cleaned based on image identification technology, and the control unit performs image identification on the image of the object to be cleaned to identify the category of the object to be cleaned, thereby determining the corresponding cleaning scenario to realize automatic identification of different cleaning scenarios. In another implementation, the category identification component may be an infrared detection component. Driven by the identification instruction, the infrared detection component can detect the heat distribution of the object to be cleaned based on infrared identification technology, and the control unit analyzes the heat distribution of the object to be cleaned to identify the category of the object to be cleaned, thereby determining the corresponding cleaning scenario to realize automatic identification of different cleaning scenarios.

The cleaning scenario identifier may be a unique mark or symbol used to characterize the cleaning scenario applied by the cleaning head, such as a fabric cleaning head or a tableware cleaning head. Therefore, each cleaning head can be used in a cleaning scenario in an embodiment and has a corresponding cleaning scenario identifier. Then, in this embodiment, the cleaning head can be movably connected to the steam outlet of the heater, so as to facilitate the replacement of the cleaning head to adapt to different cleaning scenarios. Specifically, when the steam outlet of the heater is connected to any cleaning head, the control unit can respond to the connection to acquire the cleaning scenario identifier of the connected cleaning head, so that the corresponding cleaning scenario can be determined according to the cleaning scenario identifier of the connected cleaning head to realize automatic identification of different cleaning scenarios. Understandably, each cleaning head may also have a corresponding type identifier, which may be a unique mark or symbol used to characterize the type of the cleaning head. Since each cleaning head may have a corresponding type identifier, when the control unit is connected to any cleaning head through the handle, the type identifier of the connected cleaning head can be acquired. Specifically, the control unit can realize a physical connection with any cleaning head through the handle and establish a communicative connection with the corresponding cleaning head, thereby acquiring the type identifier of the connected cleaning head based on the communicative connection.

In an embodiment, the above cleaning scenario identifier or type identifier may also be set with a corresponding flow rate and power. Then, the control unit acquiring the target flow rate and target power corresponding to the cleaning scenario may specifically include: acquiring the flow rate and power in the cleaning scenario identifier or type identifier of the connected cleaning head, and using them as the target flow rate and target power corresponding to the cleaning scenario. That is, the flow rate in the cleaning scenario identifier or type identifier of the currently connected cleaning head is acquired as the target flow rate of the current cleaning scenario, and the power in the cleaning scenario identifier or type identifier of the currently connected cleaning head is acquired as the target power of the current cleaning scenario. Thus, the rapid acquisition of the target flow rate and target power corresponding to the cleaning scenario is realized. Alternatively, the target flow rate and target power corresponding to the cleaning scenario are determined based on pre-stored configuration information.

The configuration information includes a mapping relationship between at least one cleaning scenario and the flow rate and power. For example, as shown in Table 1 below, the mapping relationship between the cleaning scenario "Tableware" and the flow rate "A1" (unit: ml/min, i.e., A1 milliliters per minute), power "B1" (unit: W, i.e., Watt), the mapping relationship between the cleaning scenario "Fabric" and the flow rate "A3" (unit: ml/min, i.e., A3 milliliters per minute), power "B3" (unit: W, i.e., Watt), etc. Therefore, the control unit can determine the target flow rate and target power corresponding to the cleaning scenario in the pre-stored configuration information based on the identified cleaning scenario, inject the cleaning fluid, such as water, into the heater according to the target flow rate, control the heater to heat the injected cleaning fluid with the target power, thereby outputting the cleaning steam for the target cleaning scenario to ensure the cleaning effect in different scenarios.

**Table 1:**

| Cleaning Scene | Flow Rate (ml/min) | Power (W) |
|---|---|---|
| Tableware | A1 | B1 |
| Glass 1 | A2 | B2 |
| Fabric | A3 | B3 |
| Garment Steaming | A4 | B4 |
| Glass 2 | A5 | B5 |

In an embodiment, as shown in FIGS. 48 and 49, the control logic of the above cleaning device is further described below. In this embodiment, the conventional liquid level sensor is replaced by a flow sensor in the water path. The flow rate and steam pressure of the steam pipeline are kept stable by setting the target flow rate value of the water path in different cleaning scenarios. The liquid pump operates under voltage regulation according to the set target flow rate through an alternating current chopper circuit control method, thereby ensuring the stability of the steam flow rate output. The temperature sensor in the heater does not participate in the temperature control of the steam, and only monitors the preheating temperature when the device is just started for preheating. After the preheating is completed, the function of the temperature sensor ends. When the steam cleaning is in operation, according to different cleaning scenarios (such as different categories of the object to be cleaned or different categories of the installed cleaning head), by means of an alternating current chopper circuit such as PWM control, the control unit adjusts the duty cycle of the PWM signal to regulate a bidirectional thyristor circuit for voltage regulation. After the voltage regulation, the heater operates at a fixed power value (i.e., the target power corresponding to the cleaning scenario). At this time, after the fixed water flow rate and the fixed operating power of the heater reach a dynamic, rapid balance during operation, the steam flow rate and temperature with a certain pressure will remain stable all the time and can achieve the best cleaning effect. Thus, the stability of the steam flow rate and temperature in various application scenarios is realized, and the application of the cleaning device can be expanded.

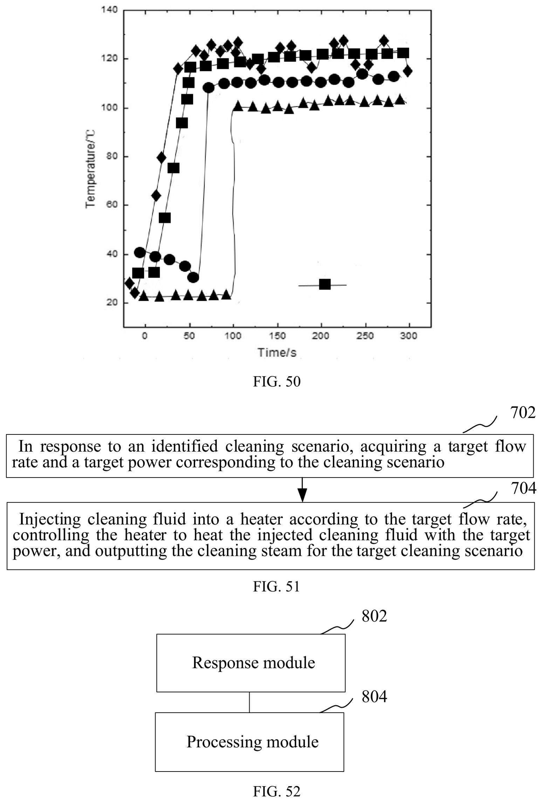

Moreover, since the control method of this embodiment is not affected by the lag of the temperature measurement of a temperature sensor and whether the temperature senor is accurately installed at a fixed position of the heater, nor by the individual differences of the heater, the stability of the steam flow rate and temperature can be ensured by simply setting the water flow rate value and adjusting the duty cycle of the output voltage. Compared with the conventional control method, the control method of this embodiment has a faster time response and a more stable steam flow rate and temperature control. As shown in FIG. 50, the curve with rectangular collection points is the temperature operation curve under the control method of this embodiment, and other curves represent control methods of adjusting the liquid pump flow rate through temperature feedback. The horizontal axis is time (unit: S, i.e., second), and the vertical axis is temperature (unit: °C, i.e., Celsius degree). Moreover, since the heater in this embodiment operates at a fixed power corresponding to the cleaning scenario according to different cleaning scenarios, compared with the full-load operation in the conventional technology, the power consumption is significantly reduced, so it can also effectively save energy.

Based on the same inventive concept, embodiments of the present application further provide a control method applied to the above-described cleaning device such as a steam cleaner. The solution for solving the problem provided by the method is similar to the solution described in the above device. Therefore, the specific limitations in one or more embodiments of the control method provided below can refer to the limitations on the cleaning device above, and will not be repeated here.

In an embodiment, as shown in FIG. 51, a control method of a cleaning device is provided, including:
in a step 702, in response to an identified cleaning scenario, acquiring a target flow rate and a target power corresponding to the cleaning scenario; and
in a step 704, injecting cleaning fluid (such as water) into a heater according to the target flow rate, controlling the heater to heat the injected cleaning fluid with the target power, and outputting the cleaning steam for the target cleaning scenario.

In an embodiment, the method further includes responding to an identification instruction for the object to be cleaned, identifying a category of the object to be cleaned, and determining a corresponding cleaning scenario according to the category of the object to be cleaned.

In an embodiment, the method further includes responding to an identification instruction for the object to be cleaned, where the identification instruction carries a category of the object to be cleaned, and determining a corresponding cleaning scenario according to the category of the object to be cleaned.

In an embodiment, the cleaning unit includes at least one cleaning head, and each cleaning head has a corresponding cleaning scenario identifier or type identifier. The method further includes: responding to a connection with any cleaning head, acquiring the cleaning scenario identifier or type identifier of the connected cleaning head, and determining a corresponding cleaning scenario according to the cleaning scenario identifier or type identifier of the connected cleaning head.

In an embodiment, the cleaning scenario identifier or type identifier is set with a corresponding flow rate and power. Acquiring the target flow rate and target power corresponding to the cleaning scenario includes acquiring the flow rate and power in the cleaning scenario identifier or type identifier of the connected cleaning head as the target flow rate and target power corresponding to the cleaning scenario.

In an embodiment, acquiring the target flow rate and target power corresponding to the cleaning scenario includes determining the target flow rate and target power corresponding to the cleaning scenario based on pre-stored configuration information, where the configuration information includes a mapping relationship between at least one cleaning scenario and the flow rate and power.

It should be understood that although the various steps in the flowcharts involved in the above embodiments are sequentially displayed according to the arrows, these steps are not necessarily executed sequentially in the order indicated by the arrows. Unless explicitly stated in this document, the execution of these steps is not strictly limited in order, and these steps can be executed in other orders. Moreover, at least part of the steps in the flowcharts involved in the above embodiments may include multiple steps or stages, which are not necessarily executed at the same time, but can be executed at different times. The execution order of these steps or stages is not necessarily sequential, but can be rotated or alternately executed with at least part of the steps or stages in other steps or other stages.

Based on the same inventive concept, the embodiments of the present application further provide a steam control device for performing the above-described control method. The solution for solving the problem provided by the device is similar to the solution described in the above method. Therefore, the specific limitations in one or more embodiments of the steam control device provided below can refer to the limitations on the steam control method above, and will not be repeated here.

In an embodiment, as shown in FIG. 52, a steam control device is provided, including a response module 802 and a processing module 804. The response module is configured to respond to an identified cleaning scenario and acquire a target flow rate and target power corresponding to the cleaning scenario. The processing module is configured to inject cleaning fluid such as water into the heater according to the target flow rate, control the heater to heat the injected cleaning fluid with the target power, and output the cleaning steam for the target cleaning scenario.

In an embodiment, the device further includes a preheating module configured to, in response to a cleaning instruction for the object to be cleaned, control the heater to operate to preheat the heater, obtain a preheating temperature of the heater, and when the preheating temperature reaches a set temperature threshold, inject cleaning fluid into the heater according to the target flow rate. In an embodiment, the processing module is further configured to perform power modulation on the liquid pump according to the target flow rate, so that the liquid pump injects cleaning fluid into the heater at the target flow rate based on the power modulation. In an embodiment, the processing module is further configured to perform power modulation on the heater based on the target power, so that the heater operates at the target power and outputs cleaning steam for the target cleaning scenario. In an embodiment, the power modulation includes at least one of pulse width modulation and pulse frequency modulation. In an embodiment, the device further includes a scenario identification module configured to, in response to an identification instruction for the object to be cleaned, identify the category of the object to be cleaned, and determine a corresponding cleaning scenario according to the category of the object to be cleaned. In an embodiment, the scenario identification module is further configured to respond to an identification instruction for the object to be cleaned, where the identification instruction carries a category of the object to be cleaned, and determine a corresponding cleaning scenario according to the category of the object to be cleaned.

In an embodiment, the cleaning device includes at least one cleaning head, and each cleaning head has a corresponding cleaning scenario identifier. The scenario identification module is further configured to, in response to a connection with any of the cleaning heads, obtain the cleaning scenario identifier of the connected cleaning head, and determine a corresponding cleaning scenario according to the cleaning scenario identifier of the connected cleaning head. In an embodiment, the cleaning scenario identifier is set with a corresponding flow rate and a power. The response module is further configured to obtain the flow rate and power in the cleaning scenario identifier of the connected cleaning head as the target flow rate and target power corresponding to the cleaning scenario. In an embodiment, the response module is further configured to determine the target flow rate and target power corresponding to the cleaning scenario based on pre-stored configuration information, where the configuration information includes a mapping relationship between at least one cleaning scenario and the flow rate and power. Each module in the above-described steam control device can be fully or partially implemented by software, hardware, or a combination thereof. The above-described modules can be embedded in the form of hardware or independent of the processor in a computer device, or can be stored in the memory of the computer device in the form of software, so that the processor can call and execute the operations corresponding to the above-described modules.

Finally, it should be noted that the above embodiments are only used to illustrate the technical solutions of the present application, not to limit them. Although the present application has been described in detail with reference to the foregoing embodiments, those of ordinary skill in the art should understand that they can still modify the technical solutions described in the foregoing embodiments, or equivalently replace some or all of the technical features. These modifications or replacements do not make the essence of the corresponding technical solutions deviate from the scope of the technical solutions of the embodiments of the present application.

## Claims

1. A cleaning device, wherein the cleaning device comprises:
a cleaning unit having a spray port and a suction port;
a liquid spraying unit connected to the spray port and configured to spray cleaning fluid to a surface to be cleaned;
a sewage collection unit connected to the suction port and configured to suction dirt or sewage generated during cleaning; and
a control unit, wherein both the liquid spraying unit and the sewage collection unit are connected to the control unit, and the control unit is configured to control start and stop of the liquid spraying unit and the sewage collection unit.

2. The cleaning device according to claim 1, wherein the cleaning device is a steam cleaner, and the cleaning unit includes a cleaning head provided with the spray port and the suction port; and
the steam cleaner includes a steam generation unit connected to the control unit, the steam generation unit comprises an electric heater and the liquid spraying unit connected to each other, the electric heater is configured to heat the cleaning fluid to provide steam for the liquid spraying unit, and the control unit is configured to control start and stop of the steam generation unit.

3. The cleaning device according to claim 1, wherein the cleaning device further comprises an auxiliary heating unit connected to the control unit, and the control unit controls start and stop of the auxiliary heating unit.

4. The cleaning device according to claim 3, wherein the auxiliary heating unit is configured to provide steam, hot water, or hot air for at least one of the liquid spraying unit and the spray port, or the auxiliary heating unit is configured to heat the cleaning fluid.

5. The cleaning device according to claim 3, wherein the auxiliary heating unit comprises an auxiliary heater, and the auxiliary heater is connected in parallel or in series with the electric heater; or
the auxiliary heating unit comprises a heat exchanger, and a water storage tank, a first water pump, and an auxiliary heater connected in sequence, a liquid outlet of the auxiliary heater is connected to a heat medium inlet of the heat exchanger, a heat medium outlet of the heat exchanger is connected to a liquid inlet of the water storage tank, and the heat exchanger is connected in parallel or in series with the electric heater.

6. The cleaning device according to any one of claims 1-4, wherein the cleaning device further comprises a self-cleaning unit, and the cleaning unit comprises a cleaning head; and
the self-cleaning unit is connected to the control unit, the self-cleaning unit is configured to clean the cleaning head, and the control unit is configured to control start and stop of the self-cleaning unit.

7. The cleaning device according to claim 6, wherein the self-cleaning unit comprises a self-cleaning box and a sensing switch; and
the sensing switch is provided on the self-cleaning box, the sensing switch is connected to the control unit, the cleaning head is capable of being inserted into the self-cleaning box to trigger the sensing switch, and the control unit is configured to control start and stop of the liquid spraying unit according to a state of the sensing switch.

8. The cleaning device according to any one of claims 1-4, wherein the control unit comprises a controller and a control component connected to each other; and
the control component is configured to adjust a working mode of the cleaning device, the working mode of the cleaning device comprises a cleaning mode and a drying mode, the liquid spraying unit and the sewage collection unit work in the cleaning mode, and the liquid spraying unit does not work in the drying mode.

9. The cleaning device according to claim 8, wherein the control component comprises a first control member and a second control member, the first control member is configured to control the cleaning device to enter or exit the cleaning mode, and the second control member is configured to control the cleaning device to enter or exit the drying mode.

10. The cleaning device according to claim 1, wherein the cleaning device comprises a main unit, the liquid spraying unit and the sewage collection unit are provided in the main unit, and the main unit is provided with a self-cleaning unit;
the cleaning unit is provided therein with a first cleaning channel and a first dirt channel spaced apart, the first cleaning channel is connected to the liquid spraying unit to spray the cleaning fluid through a spray port of the first cleaning channel, the first dirt channel is connected to the sewage collection unit to suck dirt or sewage through a suction port of the first dirt channel; and
in a first state, the cleaning unit is detachably connected to the self-cleaning unit, and both the spray port of the first cleaning channel and the suction port of the first dirt channel are located in the self-cleaning unit, so that the cleaning device can enter a self-cleaning mode.

11. The cleaning device according to claim 1 or 10, wherein the cleaning device further comprises a storage tube configured to accommodate at least one of the first cleaning channel, the first dirt channel, and a control wiring harness of the cleaning device.

12. The cleaning device according to claim 1 or 10, wherein the cleaning unit comprises a handle and at least one cleaning head detachably connected to the handle, and the cleaning head is provided with the spray port and the suction port spaced apart.

13. The cleaning device according to claim 12, wherein one of the handle and the self-cleaning unit is provided with a first collection portion, the other is provided with a first marking portion, and in response to a connection between the handle and the self-cleaning unit, the first collection portion identifies the first marking portion, and the cleaning device enters a self-cleaning mode or a standby self-cleaning mode.

14. The cleaning device according to claim 12 or 13, wherein the handle is provided with a first collection portion, the cleaning head is provided with a second marking portion, and in response to a connection between the handle and the cleaning head, the first collection portion identifies the second marking portion, and the cleaning device enters a cleaning mode matching the cleaning head.

15. The cleaning device according to claim 12, wherein the cleaning head is provided with a plurality of the suction ports, and the plurality of suction ports are circumferentially arranged around an outer side of the spray port; or
the cleaning head is provided with a plurality of spray ports, and the plurality of the spray ports are circumferentially arranged around an outer side of the suction port.

16. The cleaning device according to claim 1, wherein the cleaning unit comprises a cleaning head, the cleaning head comprises a housing and a cleaning assembly, and the cleaning assembly is configured to clean an object to be cleaned; and
the housing is provided therein with the spray port and the suction port, and at least part of the cleaning assembly is accommodated in the suction port.

17. The cleaning device according to claim 1, wherein the cleaning unit comprises a cleaning head, the cleaning head comprises a housing and a cleaning assembly, the housing is provided with the spray port and the suction port, and at least part of the cleaning assembly is covered by the cleaning fluid sprayed from the spray port.

18. The cleaning device according to claim 16 or 17, wherein the cleaning assembly comprises a positioning portion and a cleaning portion; and
at least part of the positioning portion and the cleaning portion is accommodated in the suction port; or, at least part of the positioning portion forms the suction port, and at least part of the cleaning portion is accommodated in the suction port.

19. The cleaning device according to claim 18, wherein one of the positioning portion and the cleaning portion is provided with a fixing groove and the other is provided with a mounting rib, and the fixing groove is clamped with the mounting rib.

20. The cleaning device according to claim 1, wherein the cleaning unit comprises a cleaning head, and the cleaning head comprises:
a spray head body, provided with a first matching portion and a first toggle portion;
a dust cover, provided with a second matching portion; and
a handle, provided with a first clamping portion,
wherein when the first toggle portion is in a locked position, the first toggle portion is connected to the second matching portion, and the first clamping portion is capable of being sequentially connected to the first matching portion and the second matching portion to connect the spray head body and the dust cover to the handle; and
the first toggle portion is configured to be operably toggled to move from the locked position to a first unlocked position, and the first toggle portion in the first unlocked position is capable of pressing the first clamping portion to disconnect the first clamping portion from the second matching portion, while the first clamping portion remains connected to the first matching portion.

21. The cleaning device according to claim 20, wherein the spray head body has an opening, and an edge of an outer peripheral surface of the spray head body close to the opening is configured with an air inlet.

22. The cleaning device according to claim 20, wherein the spray head body has an opening, and brush bristles provided at the opening pass through the opening in a direction away from the handle, and a protruding length of the brush bristles is 1mm-3mm.

23. A cleaning control method for the cleaning device according to any one of claims 1-22, wherein the cleaning unit comprises a handle and one or more cleaning heads, the control unit is detachably connected to any of the cleaning heads through the handle, and the method comprises:
in response to a connection with any of the cleaning heads, acquiring type information of the connected cleaning head;
in response to a cleaning mode selection instruction, determining a target mode; and
determining cleaning parameters according to the type information of the cleaning head and the target mode, and performing a cleaning operation.

24. The method according to claim 23, wherein each of the cleaning heads has a corresponding type identifier; and
in response to the connection with any of the cleaning heads, acquiring the type information of the connected cleaning head comprises:
in response to the connection with any of the cleaning heads, acquiring the type identifier of the connected cleaning head; and
determining type information corresponding to the type identifier based on pre-stored configuration information, wherein the configuration information comprises a mapping relationship between the type identifier and the type information of the cleaning head.

25. The method according to claim 23, wherein each of the cleaning heads has a corresponding type identifier, and the type identifier is set with type information and cleaning parameters corresponding to different modes; and
the method further comprises:
in response to the connection with any of the cleaning heads, establishing a communicative connection with the cleaning head, and acquiring the type information in the type identifier of the connected cleaning head and the cleaning parameters corresponding to different modes;
in response to a cleaning mode selection instruction, determining a target mode and the corresponding cleaning parameters, and performing a cleaning operation;
wherein the communicative connection comprises at least one of a radio frequency communication, an optical identification communication, or a serial communication.

26. The control method for the cleaning device according to any one of claims 1-25, wherein the cleaning device comprises a steam generation unit connected to the control unit, the steam generation unit comprises a liquid spraying unit and a heater, and the method comprises:
in response to an identified cleaning scenario, acquiring a target flow rate and a target power corresponding to the cleaning scenario; and
injecting cleaning fluid into the heater of the steam generation unit according to the target flow rate, controlling the heater to heat the injected cleaning fluid with the target power, and outputting cleaning steam for the target cleaning scenario through the liquid spraying unit of the steam generation unit.

27. The method according to claim 26, wherein the method further comprises:
in response to an identification instruction for an object to be cleaned, identifying a category of the object to be cleaned, and determining a corresponding cleaning scenario according to the category of the object to be cleaned; or
in response to an identification instruction for an object to be cleaned that carries a category of the object to be cleaned, determining a corresponding cleaning scenario according to the category of the object to be cleaned.

28. The method according to claim 26, wherein the cleaning unit comprises at least one cleaning head each having a corresponding cleaning scenario identifier or a type identifier, and the method further comprises:
in response to a connection with any of the cleaning heads, acquiring the cleaning scenario identifier or type identifier of the connected cleaning head; and
determining a corresponding cleaning scenario according to the cleaning scenario identifier or type identifier of the connected cleaning head.

29. The method according to claim 28, wherein the cleaning scenario identifier or the type identifier is set with a corresponding flow rate and a power, and acquiring the target flow rate and the target power corresponding to the cleaning scenario comprises:
acquiring a flow rate and a power in the cleaning scenario identifier or type identifier of the connected cleaning head as the target flow rate and the target power corresponding to the cleaning scenario.

30. The method according to any one of claims 26-29, wherein acquiring the target flow rate and the target power corresponding to the cleaning scenario comprises:
determining the target flow rate and the target power corresponding to the cleaning scenario based on pre-stored configuration information, wherein the configuration information comprises a mapping relationship between at least one cleaning scenario and the flow rate and power.
